# EUROPEAN PATENT APPLICATION

(11) **EP 4 387 314 A1**
(43) Date of publication of application: **19.06.2024**
(21) Application number: 22863478.8
(22) Date of filing: 30.08.2022
(51) Int. Cl.: H04W 24/02

(54) **METHOD, APPARATUS AND SYSTEM FOR PROVIDING CALL ADDITIONAL SERVICE**

(30) Priority: 04.09.2021 CN 202111034920; 29.12.2021 CN 202111632624
(71) Applicant: Huawei Technologies Co., Ltd., Shenzhen, Guangdong 518129 (CN)
(72) Inventor: LIN, Lin, Shenzhen, Guangdong 518129 (CN); WU, Liang, Shenzhen, Guangdong 518129 (CN); ZHANG, Guanhua, Shenzhen, Guangdong 518129 (CN)
(74) Representative: Gill Jennings & Every LLP
(86) International application number: PCT/CN2022/115986
(87) International publication number: WO 2023/030343

(57) **Abstract**

Embodiments of this application provide a method, an apparatus, and a system for providing a call additional service, so as to provide an additional service including a digital human service for a user in a real-time interactive call scenario. A terminal device obtains call additional service requirement information, where the call additional service requirement information indicates that a user corresponding to the terminal device requires to present a digital human image of the user in a call application interface of at least one peer terminal device; and enables, based on the call additional service requirement information, a communication server to send digital human content of the user to the at least one peer terminal device, so that the at least one peer terminal device presents the digital human image of the user in the call application interface based on the digital human content of the user; or enables, based on the call additional service requirement information, the at least one peer terminal device to generate digital human content of the user, so that the at least one peer terminal device presents the digital human image of the user in the call application interface based on the digital human content of the user.

## Description

This claims priorities to Chinese Patent Application No. 202111034920.1, filed with the China National Intellectual Property Administration on September 4, 2021 and entitled "CALL METHOD AND APPARATUS"; and to Chinese Patent Application No. 202111632624.1, filed with the China National Intellectual Property Administration on December 29, 2021 and entitled "METHOD, APPARATUS, AND SYSTEM FOR PROVIDING CALL ADDITIONAL SERVICE", which are incorporated by reference in their entireties.

### TECHNICAL FIELD

This application relates to the field of communication technologies, and in particular, to a method, an apparatus, and a system for providing a call additional service.

### BACKGROUND

With the popularization of calls, a growing quantity of users choose to use calls to interact with others in real time. In recent years, people have raised a new additional service requirement for calls, such as a digital human service. The digital human service is a software service that maps character features such as a shape, actions, and a voice of a real person to a digital human, and reproduces dynamic character features (including the shape, the actions, the voice, and the like) of the real person in an electronic device via an image of the digital human. The digital human service is provided for a user in a call scenario, so that a digital human image of the user can be presented in a call application interface of a terminal device of another person who is on a call with the user.

However, conventional digital human services are usually processed offline, that is, an image, behavior, an activity scene, and the like of a digital human are pre-arranged. For example, when a digital human is used as a virtual actor in a film/television, video content with a digital human image is produced in a film/television production phase, and the produced video content is subsequently played in a television station or a cinema. The digital human service in the conventional technology cannot perform real-time mapping between a digital human and a real person. Consequently, the digital human service cannot be promoted in a real-time interactive call scenario.

How to provide an additional service including the digital human service for a user in the real-time interactive call scenario is a technical problem to be resolved in this application.

### SUMMARY

Embodiments of this application provide a method, an apparatus, and a system for providing a call additional service, so as to provide an additional service including a digital human service for a user in a real-time interactive call scenario.

According to a first aspect, a method for providing a call additional service is provided. The method may be applied to a terminal device or a chip in the terminal device. For example, the method is applied to the terminal device. The terminal device makes a call with at least one peer terminal device using a service provided by a communication server. The method includes: The terminal device obtains call additional service requirement information, where the call additional service requirement information indicates that a user corresponding to the terminal device requires to present a digital human image of the user in a call application interface of the at least one peer terminal device. The terminal device enables, based on the call additional service requirement information, the communication server to send digital human content of the user to the at least one peer terminal device, so that the at least one peer terminal device presents the digital human image of the user in the call application interface based on the digital human content of the user. Alternatively, the terminal device enables, based on the call additional service requirement information, the at least one peer terminal device to generate digital human content of the user, so that the at least one peer terminal device presents the digital human image of the user in the call application interface based on the digital human content of the user.

In the foregoing solution, in a real-time interactive call scenario, a digital human service may be provided for the user based on a requirement of the user. For example, when the user corresponding to the terminal device requires to present the digital human image of the user in the call application interface of the at least one peer terminal device, the at least one peer terminal device presents the digital human image of the user in the call application interface based on digital human content of the user. This can improve user experience.

In a possible implementation, that the terminal device enables, based on the call additional service requirement information, the communication server to send digital human content of the user to the at least one peer terminal device includes: The terminal device generates the digital human content of the user based on the call additional service requirement information; and the terminal device sends the digital human content of the user to the communication server, so that the communication server sends the digital human content of the user to the at least one peer terminal device. Alternatively, the terminal device sends the call additional service requirement information to the communication server, so that the communication server generates the digital human content of the user and sends the digital human content of the user to the at least one peer terminal device.

In this way, the digital human content of the user can be generated by the terminal device or the communication server.

In a possible implementation, that the terminal device enables, based on the call additional service requirement information, the at least one peer terminal device to generate digital human content of the user includes: The terminal device sends the call additional service requirement information to the at least one peer terminal device, so that the at least one peer terminal device generates the digital human content of the user.

In this way, the digital human content of the user can be generated by the peer terminal device.

In a possible implementation, the call additional service requirement information further indicates that the user corresponding to the terminal device requires to present a virtual scene picture of the user in the call application interface of the at least one peer terminal device. The method further includes: The terminal device enables, based on the call additional service requirement information, the communication server to send virtual scene content of the user to the at least one peer terminal device, so that the at least one peer terminal device presents the virtual scene picture of the user in the call application interface based on the virtual scene content of the user. Alternatively, the terminal device enables, based on the call additional service requirement information, the at least one peer terminal device to generate the virtual scene content of the user, so that the at least one peer terminal device presents the virtual scene picture of the user in the call application interface based on the virtual scene content of the user.

In this way, when the virtual scene picture of the user is presented in the call application interface of the at least one peer terminal device based on a requirement of the user, user experience can be further improved.

In a possible implementation, that the terminal device enables, based on the call additional service requirement information, the communication server to send virtual scene content of the user to the at least one peer terminal device includes: The terminal device generates the virtual scene content of the user based on the call additional service requirement information; and the terminal device sends the virtual scene content of the user to the communication server, so that the communication server sends the virtual scene content of the user to the at least one peer terminal device. Alternatively, the terminal device sends the call additional service requirement information to the communication server, so that the communication server generates the virtual scene content of the user and sends the virtual scene content of the user to the at least one peer terminal device.

In this way, the virtual scene content of the user can be generated by the terminal device or the communication server.

In a possible implementation, that the terminal device enables, based on the call additional service requirement information, the at least one peer terminal device to generate virtual scene content of the user includes: The terminal device sends the call additional service requirement information to the at least one peer terminal device.

In this way, the virtual scene content of the user can be generated by the peer terminal device.

According to a second aspect, a method for providing a call additional service is provided. The method may be applied to a communication server or a chip in the communication server. For example, the method is applied to the communication server. The communication server is configured to provide a service for a call between a terminal device and at least one peer terminal device. The method includes: The communication server receives call additional service requirement information from the terminal device, where the call additional service requirement information indicates that a user corresponding to the terminal device requires to present a digital human image of the user in a call application interface of the at least one peer terminal device; and the communication server sends, based on the call additional service requirement information, digital human content of the user generated by the communication server to the at least one peer terminal device, so that the at least one peer terminal device presents the digital human image of the user in the call application interface based on the digital human content of the user. Alternatively, the communication server sends the call additional service requirement information to the at least one peer terminal device, so that the at least one peer terminal device generates digital human content of the user and presents the digital human image of the user in the call application interface based on the digital human content of the user.

In a possible implementation, the call additional service requirement information further indicates that the user corresponding to the terminal device requires to present a virtual scene picture of the user in the call application interface of the at least one peer terminal device. The method further includes: The communication server sends, based on the call additional service requirement information, virtual scene content of the user generated by the communication server to the at least one peer terminal device, so that the at least one peer terminal device presents the virtual scene picture of the user in the call application interface based on the virtual scene content of the user. Alternatively, the communication server sends the call additional service requirement information to the at least one peer terminal device, so that the at least one peer terminal device generates virtual scene content of the user and presents the virtual scene picture of the user in the call application interface based on the virtual scene content of the user.

According to a third aspect, a method for providing a call additional service is provided. The method may be applied to a terminal device or a chip in the terminal device. For example, the method is applied to the terminal device. When the method is applied to the terminal device, the terminal device makes a call with at least one peer terminal device using a service provided by a communication server. The method includes: The terminal device sends first call additional service capability information to the communication server, where the first call additional service capability information indicates a digital human service capability possessed by the terminal device; the terminal device receives indication information sent by the communication server, where the indication information indicates a digital human processing operation to be performed by the terminal device, and/or the indication information includes second call additional service capability information and third call additional service capability information, the second call additional service capability information indicates a digital human service capability possessed by the communication server, and the third call additional service capability information indicates a digital human service capability possessed by the at least one peer terminal device; and the terminal device performs at least one digital human processing operation or does not perform the digital human processing operation based on the indication information.

According to this solution, an operation that needs to be performed by a terminal device corresponding to a user can be specified when a digital human service is provided for the user in a real-time interaction scenario, to further provide the digital human service for the user in a real-time interactive call scenario.

In a possible implementation, the digital human processing operation includes one or more of the following operations: a capture operation, a rebuilding operation, and a rendering operation; the capture operation includes: obtaining a drive parameter of the user corresponding to the terminal device, where the drive parameter includes at least one of the following information of the user corresponding to the terminal device: lip shape, expression, action, and depth; the rebuilding operation includes: generating a digital human image sequence based on the drive parameter of the user corresponding to the terminal device and a digital human model of the user corresponding to the terminal device, where the digital human image sequence includes a plurality of frames of images obtained by driving the digital human model; and the rendering operation includes: generating, based on the digital human image sequence and a scene image sequence, call picture content of the user corresponding to the terminal device.

In this way, technical stacks (the capture operation, the rebuilding operation, and the rendering operation) involved in providing a digital human service for the user in a real-time interaction scenario can be clarified, and a correspondence between a processing capability of the terminal device and a digital human processing operation that can be provided can be specified.

In a possible implementation, the indication information indicates the second call additional service capability information and/or the third call additional service capability information. That the terminal device performs at least one digital human processing operation based on the indication information includes: The terminal device determines at least one of the capture operation, the rebuilding operation, and the rendering operation based on at least one of the first call additional service capability information, the second call additional service capability information, and the third call additional service capability information; and the terminal device performs the at least one operation.

In this way, the terminal device can determine the at least one digital human processing operation to be performed by the terminal device.

In a possible implementation, the first call additional service capability information includes one or more of the following:
information indicating whether the terminal device stores the digital human model of the user corresponding to the terminal device;
information indicating whether the terminal device stores a virtual scene of the user corresponding to the terminal device;
information indicating whether the terminal device can perform the rebuilding operation;
information indicating a drive parameter that can be provided by the terminal device;
information indicating whether the terminal device can perform the rendering operation;
information indicating whether the terminal device needs the communication server to backhaul the call picture content of the user; and
information indicating whether the terminal device provides viewpoint information.

It may be understood that the foregoing is merely an example rather than a specific limitation.

In a possible implementation, the second call additional service capability information includes one or more of the following:
information indicating whether the communication server stores the digital human model of the user corresponding to the terminal device;
information indicating whether the communication server stores a virtual scene of the user corresponding to the terminal device;
information indicating whether the communication server can perform the rebuilding operation;
information indicating a drive parameter that can be received by the communication server;
information indicating a drive parameter that can be extracted by the communication server;
information indicating whether the communication server can perform the rendering operation; and
information indicating whether the communication server can backhaul the call picture content of the user to the terminal device.

It may be understood that the foregoing is merely an example rather than a specific limitation.

In a possible implementation, the third call additional service capability information includes one or more of the following:
information indicating whether the at least one peer terminal device can perform the rendering operation; and
information indicating whether the at least one peer terminal device provides viewpoint information.

It may be understood that the foregoing is merely an example rather than a specific limitation.

In this embodiment of this application, different data transmission channels are established between the terminal device and the communication server based on division of work between the terminal device and the communication server.

In a possible implementation, the terminal device performs the rebuilding operation. The method further includes: The terminal device establishes a first channel with the communication server, where the first channel is used to transmit the digital human model of the user corresponding to the terminal device.

In a possible implementation, the terminal device performs the rebuilding operation and the communication server performs the rendering operation. The method further includes: The terminal device establishes a second channel with the communication server, where the second channel is used to transmit the digital human image sequence of the user corresponding to the terminal device.

In a possible implementation, the terminal device performs the capture operation and the communication server performs the rebuilding operation. The method further includes: The terminal device establishes a third channel with the communication server, where the third channel is used to transmit the drive parameter of the user corresponding to the terminal device.

In a possible implementation, the communication server performs the rendering operation. The first call additional service capability information includes the information indicating that the terminal device stores a virtual scene of the user corresponding to the terminal device, and the call picture content of the user corresponding to the terminal device includes virtual scene picture content of the user. The method further includes: The terminal device establishes a fourth channel with the communication server, where the fourth channel is used to transmit the virtual scene of the user corresponding to the terminal device.

In a possible implementation, the first call additional service capability information includes the information indicating that the terminal device needs the communication server to backhaul the call picture content of the user. The method further includes: The terminal device establishes a fifth channel with the communication server, where the fifth channel is used to transmit the call picture content of the user corresponding to the terminal device.

In a possible implementation, the method further includes: The terminal device establishes a sixth channel with the communication server, where the sixth channel is used to transmit viewpoint information of the user corresponding to the terminal device, and the first call additional service capability information includes the information indicating whether the terminal device provides viewpoint information; and/or the terminal device establishes a seventh channel or an eighth channel with the communication server, where the seventh channel is used to transmit audio of the user corresponding to the terminal device, and the eighth channel is used to transmit a video of the user corresponding to the terminal device.

Based on the foregoing several implementations, a data transmission channel can be flexibly established based on division of work between the terminal device and the communication server, to meet different transmission requirements of different data in a digital human communication process.

In a possible implementation, the terminal device performs the capture operation. The obtaining a drive parameter of a user corresponding to the terminal device includes: The terminal device collects the drive parameter of the user corresponding to the terminal device by using a sensor; and/or the terminal device determines the drive parameter of the user corresponding to the terminal device based on the video and/or audio of the user corresponding to the terminal device.

It may be understood that the foregoing two manners of obtaining the drive parameter are merely examples, and actually, there may be another implementation.

According to a fourth aspect, a method for providing a call additional service is provided. The method may be applied to a communication server or a chip in the communication server. For example, the method is applied to the communication server. The communication server is configured to provide a service for a call between a terminal device and at least one peer terminal device. The method includes: The communication server receives first call additional service capability information from the terminal device, where the first call additional service capability information indicates a digital human service capability possessed by the terminal device; and the communication server sends indication information to the terminal device, where the indication information indicates a digital human processing operation to be performed by the terminal device, and/or the indication information includes second call additional service capability information and third call additional service capability information, the second call additional service capability information indicates a digital human service capability possessed by the communication server, and the third call additional service capability information indicates a digital human service capability possessed by the at least one peer terminal device.

In a possible implementation, the digital human processing operation includes one or more of the following operations: a capture operation, a rebuilding operation, and a rendering operation; the capture operation includes: obtaining a drive parameter of the user corresponding to the terminal device, where the drive parameter includes at least one of the following information of the user corresponding to the terminal device: lip shape, expression, action, and depth; the rebuilding operation includes: generating a digital human image sequence based on the drive parameter of the user corresponding to the terminal device and a digital human model of the user corresponding to the terminal device, where the digital human image sequence includes a plurality of frames of images obtained by driving the digital human model; and the rendering operation includes: generating, based on the digital human image sequence and a scene image sequence, call picture content of the user corresponding to the terminal device.

In a possible implementation, the method further includes: The communication server performs at least one of the capture operation, the rebuilding operation, and the rendering operation based on at least one of the first call additional service capability information, the second call additional service capability information, and the third call additional service capability information.

In this way, an operation that needs to be performed by the communication server when a digital human service is provided for the user in a real-time interaction scenario can be specified, to further provide the digital human service for the user in a real-time interactive call scenario. In addition, the communication server performs the digital human processing operation, so that a requirement of digital human communication on the terminal device can be reduced, thereby facilitating promotion of the digital human communication in the real-time interactive call scenario.

In a possible implementation, the method further includes: The communication server receives the third call additional service capability information from the at least one peer terminal device.

In this way, the communication server can obtain the third call additional service capability information, and then determine division of work among the communication server, the terminal device, and the peer terminal device with reference to the digital human service capability of the peer terminal device.

In a possible implementation, the first call additional service capability information includes one or more of the following:
information indicating whether the terminal device stores the digital human model of the user corresponding to the terminal device;
information indicating whether the terminal device stores a virtual scene of the user corresponding to the terminal device;
information indicating whether the terminal device can perform the rebuilding operation;
information indicating a drive parameter that can be provided by the terminal device;
information indicating whether the terminal device can perform the rendering operation;
information indicating whether the terminal device needs the communication server to backhaul the call picture content of the user; and
information indicating whether the terminal device provides viewpoint information.

In a possible implementation, the second call additional service capability information includes one or more of the following:
information indicating whether the communication server stores the digital human model of the user corresponding to the terminal device;
information indicating whether the communication server stores a virtual scene of the user corresponding to the terminal device;
information indicating whether the communication server can perform the rebuilding operation;
information indicating a drive parameter that can be received by the communication server;
information indicating a drive parameter that can be extracted by the communication server;
information indicating whether the communication server can perform the rendering operation; and
information indicating whether the communication server can backhaul the call picture content of the user to the terminal device.

In a possible implementation, the third call additional service capability information includes one or more of the following:
information indicating whether the at least one peer terminal device can perform the rendering operation; and
information indicating whether the at least one peer terminal device provides viewpoint information.

In a possible implementation, the terminal device performs the rebuilding operation. The method further includes: The communication server establishes a first channel with the terminal device, where the first channel is used to transmit the digital human model of the user corresponding to the terminal device.

In a possible implementation, the terminal device performs the rebuilding operation and the communication server performs the rendering operation. The method further includes: The communication server establishes a second channel with the terminal device, where the second channel is used to transmit the digital human image sequence of the user corresponding to the terminal device.

In a possible implementation, the terminal device performs the capture operation and the communication server performs the rebuilding operation. The method further includes: The communication server establishes a third channel with the terminal device, where the third channel is used to transmit the drive parameter of the user corresponding to the terminal device.

In a possible implementation, the communication server performs the rendering operation. The first call additional service capability information includes the information indicating that the terminal device stores a virtual scene of the user corresponding to the terminal device, and the call picture content of the user corresponding to the terminal device includes virtual scene picture content of the user. The method further includes: The terminal device establishes a fourth channel with the communication server, where the fourth channel is used to transmit the virtual scene of the user corresponding to the terminal device.

In a possible implementation, the first call additional service capability information includes the information indicating that the terminal device needs the communication server to backhaul the call picture content of the user. The method further includes: The communication server establishes a fifth channel with the terminal device, where the fifth channel is used to transmit the call picture content of the user corresponding to the terminal device.

In a possible implementation, the method further includes: The communication server establishes a sixth channel with the terminal device, where the sixth channel is used to transmit viewpoint information of the user corresponding to the terminal device, and the first call additional service capability information includes the information indicating whether the terminal device provides viewpoint information; and/or the communication server establishes a seventh channel or an eighth channel with the terminal device, where the seventh channel is used to transmit audio of the user corresponding to the terminal device, and the eighth channel is used to transmit a video of the user corresponding to the terminal device.

In a possible implementation, the communication server performs the capture operation. The obtaining a drive parameter of a user corresponding to the terminal device includes: The communication server receives the drive parameter of the user corresponding to the terminal device from the terminal device; and/or the communication server receives the video and/or audio of the user corresponding to the terminal device from the terminal device, and determines the drive parameter of the user corresponding to the terminal device based on the video and/or audio.

According to a fifth aspect, a method for providing a call additional service is provided. The method may be applied to a communication server or a chip in the communication server. For example, the method is applied to the communication server. The communication server is configured to provide a service for a call between a terminal device and at least one peer terminal device. The method includes: The communication server receives a first request from the terminal device, where the first request is used to request a digital human model.

The communication server determines whether a user corresponding to the terminal device is a legal user of the digital human model, where the user corresponding to the terminal device is a user that operates the terminal device.

The communication server sends, after determining that the user corresponding to the terminal device is the legal user of the digital human model, the digital human model to the terminal device in response to the first request, where the digital human model is used by the user corresponding to the terminal device to make a call in a digital human image.

In the foregoing solution, the communication server sends the digital human model to the terminal device only after determining that the user corresponding to the terminal device is the legal user of the digital human model, so that a problem of illegal use of the digital human model can be avoided, thereby improving security of providing a digital human service for the user in a real-time interactive call scenario.

In a possible implementation, that the communication server determines whether a user corresponding to the terminal device is a legal user of the digital human model includes:

The communication server obtains a feature of the user corresponding to the terminal device and a check feature associated with the digital human model, where the check feature is a feature of the legal user of the digital human model; and the communication server determines, based on the feature of the user corresponding to the terminal device and the check feature, whether the user corresponding to the terminal device is the legal user of the digital human model. Alternatively, the communication server receives a verification result that carries a first digital signature from the terminal device; and the communication server verifies the first digital signature, and determines, based on the verification result after the first digital signature is successfully verified, whether the user corresponding to the terminal device is the legal user of the digital human model.

In this manner, legality verification of an identity of the user can be performed by the terminal device, or can be performed by the network device, thereby improving flexibility of the solution.

In a possible implementation, the feature of the user corresponding to the terminal device includes one or more of the following: a face, a fingerprint, a voiceprint, or an iris of the user corresponding to the terminal device, and the check feature associated with the digital human model includes one or more of the following: a face, a fingerprint, a voiceprint, or an iris of the legal user of the digital human model.

It may be understood that the foregoing several types are merely examples but not limitations.

In a possible implementation, the method further includes: The communication server obtains a feature of a character image in digital human content, where the digital human content includes a plurality of frames of images of the digital human model; and the communication server determines, based on the feature of the character image in the digital human content and a check feature associated with the digital human model, whether the character image in the digital human content matches the digital human model; and the communication server sends the digital human content to the at least one peer terminal device after determining that the character image in the digital human content matches the digital human model.

In this manner, whether the digital human model before rebuilding matches a rebuilt digital human (that is, the character image in the digital human content) can be verified, thereby further improving security of the digital human service.

In a possible implementation, the feature of the character image in the digital human content includes a face and/or a voiceprint of the character image; and the check feature associated with the digital human model includes a face and/or a voiceprint of the legal user of the digital human model.

It may be understood that the foregoing several types are merely examples but not limitations.

In a possible implementation, the method further includes: The communication server receives the digital human model that carries a second digital signature, the check feature, and identity information of the legal user of the digital human model, where the second digital signature is a digital signature of a digital human audit device; the communication server verifies the second digital signature by using a public key of the digital human audit device; and the communication server binds the digital human model and the check feature to registration information of the legal user on the communication server based on the identity information of the legal user after verifying the second digital signature.

In this implementation, the communication server can bind the digital human model to the registration information of the legal user of the digital human model, to subsequently verify the identity of the user. In addition, only the digital human model that is successfully verified by the digital human audit device can be applied in a real-time interactive call scenario, thereby further improving security of the digital human service.

In a possible implementation, the digital human model further carries a third digital signature, and the third digital signature is a digital signature of a digital human model production device. The method further includes: The communication server verifies the third digital signature by using a public key of the digital human model production device before storing the digital human model and the check feature; and the communication server binds the digital human model and the check feature to the registration information of the legal user on the communication server based on the identity information of the legal user after verifying the second digital signature and the third digital signature.

In this manner, it can be verified that the digital human model is not tampered with, thereby further improving security of the digital human service.

According to a sixth aspect, a method for providing a call additional service is provided. The method may be applied to a digital human model production device or a chip in the digital human model production device. For example, the method is applied to the digital human model production device. The method includes: The digital human model production device encrypts, by using a first public key of a digital human audit device, a digital human model, a check feature, and identity information of a user corresponding to a terminal device, and sends the encrypted digital human model, check feature, and identity information of the user corresponding to the terminal device to the digital human audit device. The digital human model production device receives a second digital signature, the digital human model, the check feature, and the identity information from the digital human audit device. The digital human model production device sends the second digital signature, the digital human model, the check feature, and the identity information to a communication server, where the digital human model is used by the user corresponding to the terminal device to make a call in a digital human image.

In a possible implementation, the method further includes: The digital human model production device adds a third digital signature in the digital human model, the check feature, and the identity information by using a private key of the digital human model production device; and the digital human model production device sends the second digital signature, the third digital signature, the digital human model, the check feature, and the identity information to the communication server.

According to a seventh aspect, a method for providing a call additional service is provided. The method may be applied to a digital human audit device or a chip in the digital human audit device. For example, the method is applied to the digital human audit device. The method includes: The digital human audit device receives an encrypted digital human model, check feature, and identity information of a user corresponding to a terminal device from a digital human model production device. The digital human audit device decrypts, by using a first private key of the digital human audit device, the encrypted digital human model, check feature, and identity information of the user corresponding to the terminal device; audits legality of the digital human model of the user corresponding to the terminal device; and adds a second digital signature in the digital human model, the check feature, and the identity information by using a second private key of the digital human audit device after the audit succeeds. The digital human audit device sends the second digital signature, the digital human model, the check feature, and the identity information to the digital human model production device, where the digital human model is used by the user corresponding to the terminal device to make a call in a digital human image.

According to an eighth aspect, a communication apparatus is provided, including a module configured to implement the method according to any one of the first aspect or the possible implementations of the first aspect or any one of the second aspect or the possible implementations of the second aspect or any one of the third aspect or the possible implementations of the third aspect or any one of the fourth aspect or the possible implementations of the fourth aspect or any one of the fifth aspect or the possible implementations of the fifth aspect or any one of the sixth aspect or the possible implementations of the sixth aspect or any one of the seventh aspect or the possible implementations of the seventh aspect.

According to a ninth aspect, a communication apparatus is provided, including a processor and a memory, where the processor is coupled to the memory. The memory is configured to store program instructions. The processor is configured to read the program instructions stored in the memory, to implement the method according to any one of the first aspect or the possible implementations of the first aspect or any one of the second aspect or the possible implementations of the second aspect or any one of the third aspect or the possible implementations of the third aspect or any one of the fourth aspect or the possible implementations of the fourth aspect or any one of the fifth aspect or the possible implementations of the fifth aspect or any one of the sixth aspect or the possible implementations of the sixth aspect or any one of the seventh aspect or the possible implementations of the seventh aspect.

According to a tenth aspect, a computer-readable storage medium is provided, where the storage medium stores a computer program or instructions. When the computer program or the instructions is or are executed by a communication apparatus, the method according to any one of the first aspect or the possible implementations of the first aspect or any one of the second aspect or the possible implementations of the second aspect or any one of the third aspect or the possible implementations of the third aspect or any one of the fourth aspect or the possible implementations of the fourth aspect or any one of the fifth aspect or the possible implementations of the fifth aspect or any one of the sixth aspect or the possible implementations of the sixth aspect or any one of the seventh aspect or the possible implementations of the seventh aspect is implemented.

According to an eleventh aspect, a computer program product is provided, including instructions. When the instructions run on a computer, the method according to any one of the first aspect or the possible implementations of the first aspect or any one of the second aspect or the possible implementations of the second aspect or any one of the third aspect or the possible implementations of the third aspect or any one of the fourth aspect or the possible implementations of the fourth aspect or any one of the fifth aspect or the possible implementations of the fifth aspect or any one of the sixth aspect or the possible implementations of the sixth aspect or any one of the seventh aspect or the possible implementations of the seventh aspect is enabled to be performed.

According to a twelfth aspect, a call system is provided, including a first terminal device, a second terminal device, and a communication server that provides a service for a call between the first terminal device and the second terminal device.

The first terminal device is configured to perform the method according to any one of the first aspect or the possible implementations of the first aspect.

The communication server is configured to perform the method according to any one of the second aspect or the possible implementations of the second aspect.

The second terminal device is configured to present, in a call application interface based on digital human content of a user corresponding to the first terminal device, a digital human image of the user corresponding to the first terminal device.

According to a thirteenth aspect, a call system is provided, including a first terminal device, a second terminal device, and a communication server that provides a service for a call between the first terminal device and the second terminal device.

The first terminal device is configured to perform the method according to any one of the third aspect or the possible implementations of the third aspect.

The communication server is configured to perform the method according to any one of the fourth aspect or the possible implementations of the fourth aspect.

The second terminal device is configured to present, in a call application interface based on digital human content of a user corresponding to the first terminal device, a digital human image of the user corresponding to the first terminal device.

According to a fourteenth aspect, a call system is provided, including a communication server, a digital human model production device, and a digital human model production device.

The communication server is configured to perform the method according to any one of the fifth aspect or the possible implementations of the fifth aspect.

The digital human model production device is configured to perform the method according to any one of the sixth aspect or the possible implementations of the sixth aspect.

The digital human model production device is configured to perform the method according to any one of the seventh aspect or the possible implementations of the seventh aspect.

### BRIEF DESCRIPTION OF DRAWINGS

FIG. 1A to FIG. 1G are each a schematic diagram of a call scenario according to an embodiment of this application;
FIG. 2 is a flowchart of a method for providing a call additional service according to an embodiment of this application;
FIG. 3A is a schematic diagram of a digital human technology stack according to an embodiment of this application;
FIG. 3B is a flowchart of another method for providing a call additional service according to an embodiment of this application;
FIG. 3C is a flowchart of another method for providing a call additional service according to an embodiment of this application;
FIG. 4 is a flowchart of another method for providing a call additional service according to an embodiment of this application;
FIG. 5 is a flowchart of another method for providing a call additional service according to an embodiment of this application;
FIG. 6 is a schematic diagram of several types of data transmission channels according to an embodiment of this application;
FIG. 7 is a schematic diagram of several possible keys according to an embodiment of this application;
FIG. 8A is a flowchart of an authentication method according to an embodiment of this application;
FIG. 8B is a flowchart of an authentication method according to an embodiment of this application;
FIG. 8C is a flowchart of an authentication method according to an embodiment of this application;
FIG. 8D is a flowchart of a digital asset purchasing method according to an embodiment of this application;
FIG. 9A to FIG. 9C are a schematic diagram of a specific embodiment according to an embodiment of this application;
FIG. 10A to FIG. 10C are a schematic diagram of a specific embodiment according to an embodiment of this application;
FIG. 11A to FIG. 11C are a schematic diagram of another specific embodiment according to an embodiment of this application;
FIG. 12A to FIG. 12C are a schematic diagram of another specific embodiment according to an embodiment of this application;
FIG. 13A to FIG. 13D are a schematic diagram of another specific embodiment according to an embodiment of this application;
FIG. 14A to FIG. 14C are a schematic diagram of another specific embodiment according to an embodiment of this application;
FIG. 15A to FIG. 15C are a schematic diagram of another specific embodiment according to an embodiment of this application;
FIG. 16A to FIG. 16C are a schematic diagram of another specific embodiment according to an embodiment of this application;
FIG. 17A and FIG. 17B are a schematic diagram of another specific embodiment according to an embodiment of this application;
FIG. 18A and FIG. 18B are a schematic diagram of another specific embodiment according to an embodiment of this application;
FIG. 19 is a flowchart of a specific method for providing a call additional service according to an embodiment of this application;
FIG. 20 is a schematic diagram of a structure of a communication apparatus according to an embodiment of this application; and
FIG. 21 is a schematic diagram of a structure of another communication apparatus according to an embodiment of this application.

### DESCRIPTION OF EMBODIMENTS

To make the objectives, technical solutions, and advantages of embodiments of this application clearer, the following clearly and completely describes the technical solutions in embodiments of this application with reference to accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

The following describes technical concepts in this application.
(1) The "digital human" involved in this specification refers to a virtual character presented by an electronic device (for example, a mobile phone, a computer, or virtual reality (Virtual Reality, VR)/augmented reality (Augmented Reality, briefly referred to as AR) glasses) by using character feature data generated by a computer device; because the character feature data of the digital human may be generated based on character feature data of a real person, the digital human may have a character feature, such as a face or a gender, that is the same as or similar to that of a real person. In some cases, "digital human" is also referred to as "virtual human".
(2) The "digital human service" involved in this specification, also referred to as a "digital human value-added service", is a software service that maps a character feature such as a shape, an action, or a sound of a real person to a digital human, that is, a dynamic character feature (including the shape, the action, the sound, and the like) of the real person is reproduced in real time in an electronic device by using a digital human image, for example, in a two-dimensional or three-dimensional video manner. In this way, the service enables the digital man to have an expression, a mode of behavior, and a language expression that are similar to those of the real person.

It may be understood that a real-person image in embodiments of this application may include an appearance, an expression, an action, a sound, and the like of the real person.

A video call performed between two terminal devices (including a terminal device A and a terminal device B) is used as an example. In a process of performing the video call between the terminal device A and the terminal device B, if the terminal device A does not use a digital human service, a call subject seen by a user b (where the user b is a user who uses the terminal device B to perform the video call herein) is a real-person image of a user a (where the user a is a user who uses the terminal device A to perform the video call herein) in a call application interface of the terminal device B; if the terminal device A uses a digital human service, a call subject seen by a user b in a call application interface of the terminal device B is a digital human image of a user a. Similarly, if the terminal device B does not use the digital human service, a call subject seen by the user a in a call application interface of the terminal device A may be a real-person image of the user b; if the terminal device B uses the digital human service, a call subject seen by the user a in a call application interface of the terminal device A is a digital human image of the user b. The call application interface includes but is not limited to an interface in a phone application (Application, APP) built in a system of the terminal device, an interface in instant messaging software, an interface in a game application, and the like.

Further, in the process of performing the video call between the terminal device A and the terminal device B, if the terminal device A uses the digital human service, behavior of a digital human of the user a may change with behavior of the user a. For example, if the user a lifts the left hand, the digital human of the user a also lifts the left hand; if the user a blinks, the digital human of the user a also blinks, and so on. Similarly, in the process of performing the video call between the terminal device A and the terminal device B, if the terminal device B uses the digital human service, behavior of a digital human of the user b may change with behavior of the user b. For example, if the user b lifts the left hand, the digital human of the user b also lifts the left hand; if the user b blinks, the digital human of the user b also blinks, and so on.

It may be understood that, in embodiments of this application, the digital human service includes but is not limited to presenting a digital human image of a user in a call application interface of at least one peer terminal device, and may further include: presenting a virtual scene picture of the user in the call application interface of the at least one peer terminal device, presenting a prop used to decorate a digital human of the user in the call application interface of the at least one peer terminal device, playing a virtual sound of the user on the at least one peer terminal device, and the like.

(3) The "digital human model" involved in this specification refers to static data of a digital human, mainly including surface information of the digital human, and may be collected by using technical means such as photographing and structured light scanning. In a digital human service, digital human dynamic data may be generated based on a drive parameter (such as an expression and an action) and a digital human model of a real person (where this process is referred to as "rebuilding"; for details, refer to the following descriptions). After being rendered, the digital human dynamic data may be displayed by using a display device, that is, the display device can display the digital human.

(4) The "digital human dynamic data" involved in this specification refers to dynamic data used to display a virtual character, and the data may be stored in device storage space in a manner of a file. The file describes one or more frames of two-dimensional or three-dimensional images of the virtual character. Therefore, the "digital human dynamic data" may also be referred to as a "digital human image sequence". When the file is rendered in an electronic device and then input into a display device, the display device may present the one to more frames of two-dimensional or three-dimensional images by using a display screen. The file may be in a binary form or a text form. This is not limited in this application.

(5) The "user" involved in this specification may be understood as a user of a terminal device. The user may operate the terminal device and use various functions, for example, a function of making a call and a function of answering a call, provided by the terminal device.

(6) The "terminal device" involved in this specification may also be referred to as a terminal, user equipment (user equipment, UE), a mobile station, a mobile terminal, or the like. The terminal device may be any device, for example, a mobile phone, a computer, a virtual reality (Virtual Reality, VR) device, an augmented reality (Augmented Reality, briefly referred to as AR) device, a wearable device, a vehicle, an unmanned aerial vehicle, a helicopter, an airplane, a ship, a robot, a robotic arm, or a smart home device, that supports a call function. A specific call network used by the terminal device and a specific device form of the terminal device are not limited in embodiments of this application. The terminal device may implement a call based on a telephone line, or implement a call based on an IP line, or implement a call based on another technology. A specific call technology used by the terminal device is not limited in embodiments of this application.

(7) The user scenario involved in this specification includes a real scene of a user and a virtual scene of the user, where the real scene refers to a real environment in which the user is located, and the virtual scene of the user is not a real environment in which the user is located, and for example, may be a two-dimensional or three-dimensional environment model generated by using modeling software or environment data downloaded from a network.

Embodiments of this application may be applied to various real-time interaction scenarios, for example, a call scenario such as a call, an online game, or a live broadcast. For ease of understanding and description, this specification mainly uses the call scenario as an example.

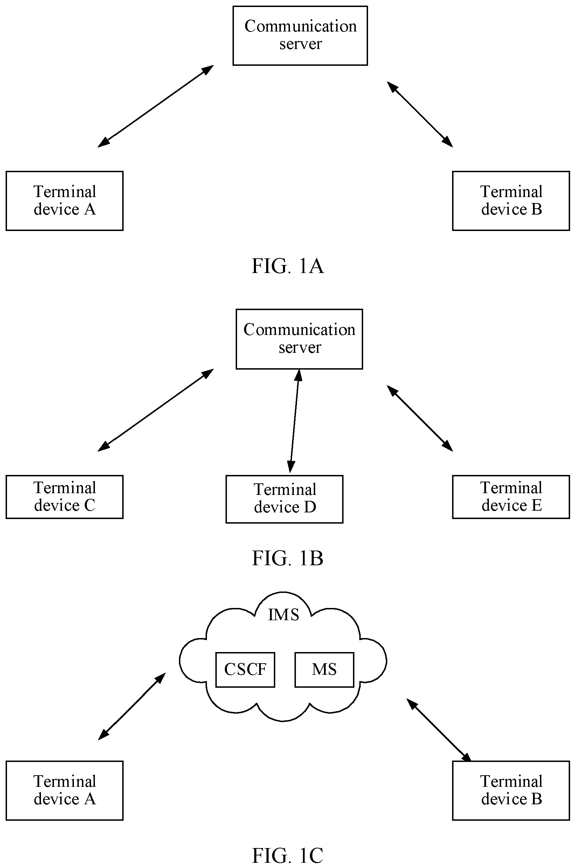

FIG. 1A is a schematic diagram of a call scenario according to an embodiment of this application. A call system shown in FIG. 1A includes a terminal device A and a terminal device B. The terminal device A and the terminal device B may establish a call connection by using a communication server, and perform a call.

It may be understood that a terminal device that actively initiates the call in the terminal device A and the terminal device B may be defined as a caller terminal device (which may be briefly referred to as a "caller terminal" or a "caller"), and a terminal device (that is, a device that receives the call) relative to the caller terminal device may be defined as a callee terminal device (which may be briefly referred to as a "callee terminal" or a "callee"). For example, the terminal device A actively initiates the call. The terminal device A calls a phone number of the terminal device B. In this case, the terminal device A is the caller terminal device, and the terminal device B is the callee terminal device. Certainly, during specific implementation, the terminal device B may also actively initiate the call, that is, the terminal device B is the caller terminal device, and the terminal device A is the callee terminal device.

FIG. 1A uses a scenario in which two terminal devices make a call as an example. Embodiments of this application are not limited to the scenario in which two terminal devices make a call, and may also be applied to a scenario, for example, a video conference scenario, in which more than two terminal devices make a call.

FIG. 1B is a schematic diagram of another call scenario according to an embodiment of this application. A call system shown in FIG. 1B includes a terminal device C, a terminal device D, and a terminal device E. The terminal device C, the terminal device D, and the terminal device E may establish a call connection via a communication server, and perform a call.

Similarly, a terminal device that actively initiates the call in the terminal device C, the terminal device D, and the terminal device E is defined as a caller terminal device (for example, the terminal device C). In contrast to the caller terminal device, another terminal device different from the caller terminal device may be defined as a callee terminal device (for example, the terminal device D or the terminal device E).

It may be understood that, for any terminal device, another terminal device may be considered as a "peer terminal device" of the any terminal device provided that the another terminal device is a terminal device on a call with the any terminal device. For example, in FIG. 1A, the terminal device B is a peer terminal device of the terminal device A, and the terminal device A is a peer terminal device of the terminal device B. In FIG. 1B, both the terminal device B and the terminal device C are peer terminal devices of the terminal device A, both the terminal device A and the terminal device C are peer terminal devices of the terminal device B, and both the terminal device B and the terminal device A are peer terminal devices of the terminal device C.

Certainly, in an actual application, there may be more terminal devices participating in a call, which are not listed one by one herein.

The communication server in embodiments of this application may be one or more devices in a communication network that provides a call service for the terminal device. It may be understood that FIG. 1A and FIG. 1B show only one communication server, and are not limited thereto in practice.

In a possible implementation, the communication server may be a device in an internet protocol (internet protocol, IP) multimedia subsystem (IP multimedia subsystem, IMS) network.

The IMS network is a network system used to provide a multimedia service in an IP network. The IMS network may provide a plurality of multimedia services, such as an audio call and a video call, for the terminal device. The IMS network may include one or more network elements, for example, may include a call control function (serving-call session control function, CSCF) network element.

The CSCF network element is a functional entity inside the IMS network and is a core of the IMS network. The CSCF network element is responsible for signaling control in a multimedia call session process. The CSCF network element may be further classified into a serving-call session control function (serving-call session control function, S-CSCF network element), an interrogating-call session control function (interrogating-call session control function, I-CSCF) network element, a proxy-call session control function (proxy-call session control function, P-CSCF) network element, and the like based on functions. The P-CSCF network element is an edge network node of the IMS network, and a function of the P-CSCF network element in the IMS network is similar to that of performing a proxy service. Information from the terminal device or information sent to the terminal device needs to be forwarded by the P-CSCF network element. The S-CSCF network element is a service processing node of the IMS network, and is responsible for IMS network registration of the terminal device and related caller and callee service processing. The I-CSCF network element may be connected to the S-CSCF network element and the P-CSCF network element, and is configured to provide an entrance to a home network for the terminal device. The terminal device sends a message to the P-CSCF network element when roaming to another network, and the P-CSCF network element may forward the message from the terminal device to the I-CSCF network element, and send the message from the terminal device to the S-CSCF network element through the I-CSCF network element. It is to be noted that, the P-CSCF network element, the S-CSCF network element, and the I-CSCF network element may be independently configured in different entities or may be integrated in a same entity. In the following, for ease of understanding and description, the P-CSCF network element, the S-CSCF network element, and the I-CSCF network element are collectively referred to as the CSCF network element.

Embodiments of this application further provide a media server (Media Server, MS) network element, configured to provide a digital human-related service, for example, a digital human service, for the terminal device. A specific implementation of the MS network element may be a type of an application server (Application Server, AS) network element, or may be a newly defined network element. This is not limited in this application.

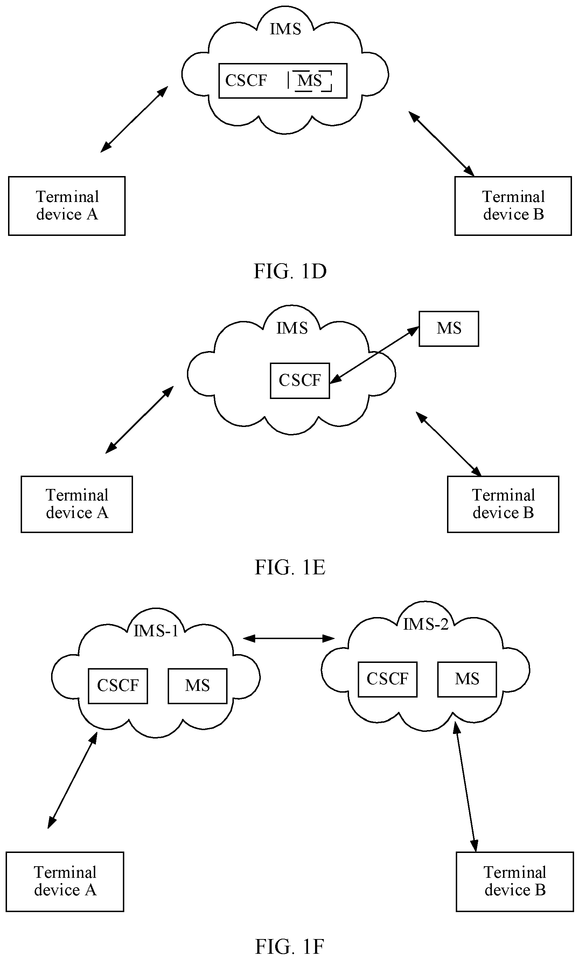

The MS network element may be deployed in the IMS network. As shown in FIG. 1C, the MS network element is an independent network element and is communicatively connected to the CSCF network element. Alternatively, as shown in FIG. 1D, the MS network element may be integrated with the CSCF network element. The MS network element may alternatively be deployed outside the IMS network, as shown in FIG. 1E. When the communication server needs to implement a plurality of functions related to the digital human service, a plurality of MS network elements may be simultaneously deployed to be responsible for different functions. Certainly, one MS network element may alternatively be deployed to be responsible for the plurality of functions. A specific deployment manner of the MS network element is not limited in embodiments of this application.

It may be understood that, FIG. 1C to FIG. 1E use an example in which the terminal device A and the terminal device B belong to the same IMS network. During actual application, the terminal device A and the terminal device B may alternatively belong to different IMS networks. As shown in FIG. 1F, the terminal device A belongs to an IMS-1 network, the terminal device B belongs to an IMS-2 network, a CSCF network element and an MS network element are deployed in both the IMS-1 network and the IMS-2 network, and the IMS-1 network and the IMS-2 network cooperate to provide a call service for the terminal device A and the terminal device B. Optionally, the IMS-1 network and the IMS-2 network are respectively corresponding to different operators (for example, deployed or maintained by the different operators).

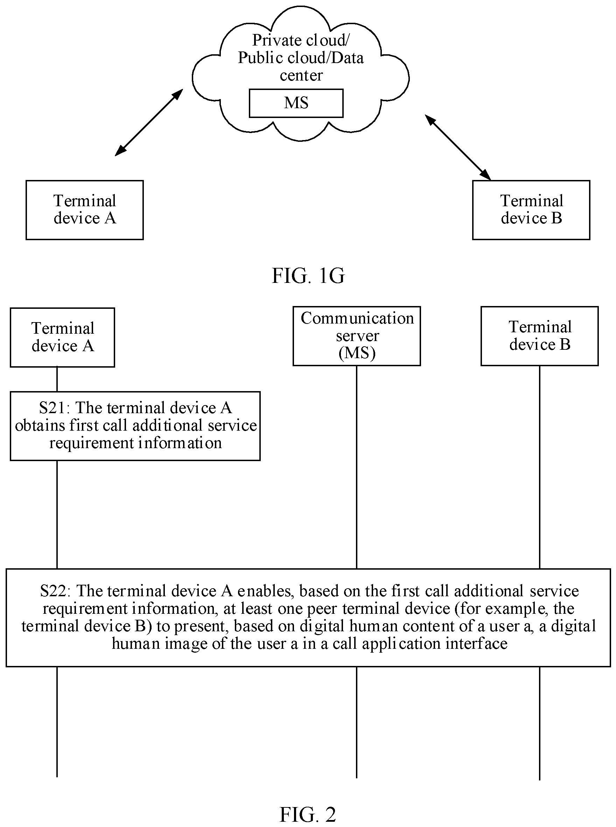

In another possible implementation, the communication server may be a device in a non-IMS network. For example, referring to FIG. 1G, the communication network may be further constructed based on a private cloud, a public cloud, or a data center, the communication server may be an MS network element in the private cloud, the public cloud, or the data center, and a specific implementation of the MS network element is, for example, an instant messaging server. The communication network is not specifically limited in this application.

For ease of understanding and description, an example in which the communication network is the IMS network is mainly used in this specification.

In embodiments of this application, the MS network element may provide a digital human service for the terminal device in cooperation with the CSCF network element.

A user in different scenarios or different users has or have different requirements on the digital human service. For example, a user who makes a call at home has a higher requirement on the digital human service, and a user who makes a call at an office has a lower requirement on the digital human service. For example, a requirement on the digital human service is lower when a user makes a call with an acquaintance, and a requirement on the digital human service is higher when the user makes a call with a stranger.

It may be understood that the "call" in embodiments of this application may be a video call or may be a call in another form, for example, an audio call or an instant messaging. This is not limited in this application. For example, in a video call scenario, both parties of a call may see a video of the other party in a call application. A digital human image of the other party may be seen in the video of the other party if the other party uses the digital human service. For example, in a voice chat call, both parties of the call may hear a voice of the other party in a call application. A digital human image of the other party may be further seen if the other party uses the digital human service. A presentation manner of the digital human image may be a video, a dynamic image, a static image, or the like. This is not limited in this application.

For ease of description, in the following embodiments, a video call performed between two terminal devices is mainly used as an example.

The following describes how to provide digital human content of a local end to a peer end based on a user requirement when the digital human is introduced in a large-scale real-time communication scenario, and how to present, at the local end based on the user requirement, the digital human content provided by the peer end.

FIG. 2 is a flowchart of a method for providing a call additional service according to an embodiment of this application. An example in which the method is applied to the scenario shown in FIG. 1C is used, and the method includes the following steps:
S21: A terminal device A obtains first call additional service requirement information.

The first call additional service requirement information includes digital human service requirement information of the terminal device A. For example, the first call additional service requirement information may indicate that a user a corresponding to the terminal device A requires to present a digital human image of the user a in a call application interface of at least one peer terminal device.

For ease of description, in this embodiment of this application, a peer terminal device "terminal device B" is used as an example. For an implementation method of another peer terminal device, refer to the implementation method of the terminal device B.

In a possible implementation, that the terminal device A obtains the call additional service requirement information includes: receiving an operation entered by the user a, and generating the first call additional service requirement information based on the operation. The operation indicates that the user a requires to present the digital human image of the user a in a call application interface of the terminal device B. It may be understood that the operation entered by the user is not specifically limited in this application. For example, the operation may be tapping a control corresponding to the digital human service on a display interface of the terminal device A, or the operation may be selecting a menu corresponding to the digital human service on the display interface of the terminal device A.

In another possible implementation, that the terminal device A obtains the call additional service requirement information includes: obtaining system setting information, and determining the call additional service requirement information based on the system setting information, where the system setting information indicates that the user a requires to present the digital human image of the user a in a call application interface of at least the terminal device B.

S22: The terminal device A enables, based on the first call additional service requirement information, the at least one peer terminal device (for example, the terminal device B) to present, based on digital human content of the user a, the digital human image of the user a in the call application interface.

The digital human content may be a visual digital human image, or a result obtained by coding the visual digital human image. This is not limited in this application. Based on the digital human content, the terminal device B may present the digital human image of the user in the form of an image on a display screen of the terminal device B.

A communication server is a communication server that provides the digital human service for the terminal device A, for example, may be the MS network element shown in FIG. 1C.

In this embodiment of this application, an operation of generating the digital human content may be performed by the terminal device A, may be performed by the communication server, or may be performed by the terminal device B. This is not limited in this application.

In a possible design, the terminal device enables, based on the first call additional service requirement information, the communication server to send the digital human content of the user to the terminal device B, so that the terminal device B presents the digital human image of the user in the call application interface based on the digital human content of the user.

For example, the terminal device generates the digital human content of the user based on the first call additional service requirement information; the terminal device sends the digital human content of the user to the communication server, so that the communication server sends the digital human content of the user to the terminal device B; and the terminal device B presents, after receiving the digital human content, the digital human image of the user a in the call application interface based on the digital human content.

For example, the terminal device sends the first call additional service requirement information to the communication server, so that the communication server generates the digital human content of the user and sends the digital human content of the user to the terminal device B; and the terminal device B presents, after receiving the digital human content, the digital human image of the user a in the call application interface based on the digital human content.

In another possible design, the terminal device enables, based on the first call additional service requirement information, the terminal device B to generate the digital human content of the user, so that the terminal device B presents the digital human image of the user in the call application interface based on the digital human content of the user.

For example, the terminal device sends the first call additional service requirement information to the terminal device B through the communication server (where the communication server first receives the first call additional service requirement information sent by the terminal device and then sends the additional service requirement information to the terminal device B), and the terminal device B generates the digital human content of the user based on the first call additional service requirement information, to further present the digital human image of the user in the call application interface based on the digital human content of the user.

Based on the foregoing solution, the digital human image of the user can be presented in the call application interface of the peer terminal device based on a requirement of the user, and user experience can be improved.

In an optional implementation, the first call additional service requirement information may be further used to indicate that the user a corresponding to the terminal device A requires to present a virtual scene picture of the user a in the call application interface of the terminal device B.

It may be understood that the virtual scene picture of the user a is relative to a real scene picture of the user a. The real scene picture is an image corresponding to a real environment in which the user a is located. For example, if the user is in an outdoor environment, the real scene picture of the user a is an outdoor image that can be actually captured by the terminal device. Correspondingly, the virtual scene picture of the user a is not an image corresponding to the real environment in which the user a is located, and is, for example, a conference room image downloaded by the user a from a network.

In this embodiment of this application, unless otherwise specified, the "image" and the "picture" may be interchanged.

Correspondingly, the terminal device A may further enable, based on the first call additional service requirement information, the communication server to send virtual scene content of the user to the terminal device B, so that the terminal device B presents the virtual scene picture of the user a in the call application interface based on the virtual scene content of the user a; or the terminal device A may further enable, based on the first call additional service requirement information, the terminal device B to generate the virtual scene content of the user a, so that the terminal device B presents the virtual scene picture of the user a in the call application interface based on the virtual scene content of the user a.

The virtual scene content may be a visual virtual scene image, or a result obtained by coding the visual virtual scene image. This is not limited in this application. Based on the virtual scene content, the terminal device B may present the virtual scene picture of the user a in the form of an image on the display screen of the terminal device B.

For example, the terminal device A generates the virtual scene content of the user a based on the first call additional service requirement information; and the terminal device A sends the virtual scene content of the user a to the communication server, so that the communication server sends the virtual scene content of the user a to the terminal device B.

Alternatively, for example, the terminal device A sends the first call additional service requirement information to the communication server, so that the communication server generates the virtual scene content of the user a and sends the virtual scene content of the user a to the terminal device B.

Alternatively, for example, the terminal device A sends the first call additional service requirement information to the terminal device B through the communication server, so that the terminal device generates the virtual scene content of the user a based on the first call additional service requirement information.

It is to be noted that, during a call, a call picture of the user a displayed by the terminal device B may include both the digital human image and the virtual scene picture of the user a, and the two together constitute the call picture of the user a. Therefore, if the user a requires to present the digital human image and the virtual scene picture of the user a in the call application interface of the terminal device B, the picture presented in the call application interface of the peer terminal device is that a digital human of the user a is active in the virtual scene of the user a. Correspondingly, the digital human content and the virtual scene content of the user a jointly constitute call picture content of the user a.

Based on the foregoing solution, the virtual scene picture of the user can be presented in the call application interface of the peer terminal device based on a requirement of the user, and user experience can be improved.

In an optional implementation, before S22, the communication server needs to establish a call connection relationship between the terminal device A and the terminal device B. For example, a CSCF network element in the communication server triggers an MS network element to establish the call connection relationship between the terminal device A and the terminal device B. That the MS network element establishes the call connection relationship between the terminal device A and the terminal device B includes: The MS network element establishes a data transmission channel between the MS network element and the terminal device A based on address information, port information, and the like of the terminal device A, and establishes a data transmission channel between the MS network element and the terminal device B based on address information, port information, and the like of the terminal device B. For details about the data transmission channel, refer to the following descriptions.

In an optional implementation, the call is bidirectional. Therefore, the terminal device B may also perform the method performed by the terminal device A.

For example, the terminal device B obtains second call additional service requirement information, where the second call additional service requirement information indicates that a user b corresponding to the terminal device B requires to present a digital human image of the user b in a call application interface of the terminal device A. The terminal device B enables, based on the second call additional service requirement information, the communication server to send digital human content of the user b to the terminal device A, so that the terminal device A presents the digital human image of the user b in the call application interface based on the digital human content of the user b; or the terminal device B enables, based on the second call additional service requirement information, the terminal device A to generate digital human content of the user b, so that the terminal device A presents the digital human image of the user b in the call application interface based on the digital human content of the user b. For a specific implementation method, refer to the implementation method of the terminal device A. Details are not described herein again.

Based on the foregoing solution, the digital human service can be provided for both parties of a call based on requirements of both the parties of the call, and user experience can be further improved.

In an optional implementation, the terminal device A may further obtain third call additional service requirement information, where the third call additional service requirement information indicates that the user a requires to present a call subject (which may be a real-person image of the user b or may be the digital human image of the user b) corresponding to the user b in a scene picture corresponding to the user a or the user b.

For example, after receiving the digital human content of the user b from the communication server, the terminal device A synthesizes call picture content of the user b based on the digital human content of the user b and the virtual scene content of the user a, and then displays the call picture content of the user b. The user a may see, in the call application interface of the terminal device A, that the digital human image corresponding to the user b is active in a virtual scene of the user a.

For example, the communication server generates the digital human content of the user b, synthesizes call picture content of the user b based on the digital human content of the user b and real scene content of the user a, and sends the synthesized call picture content of the user b to the terminal device A. The terminal device A displays the synthesized call picture content in the call application interface of the terminal device A after receiving the synthesized call picture content of the user b from the communication server. The user a may see, in the call application interface of the terminal device A, that the digital human image corresponding to the user b is active in a real scene of the user b.

Certainly, the foregoing two manners are merely examples, and actually, there may be another implementation.

Similarly, the call is bidirectional. Therefore, the foregoing method is also applicable to the terminal device B. For example, the terminal device B may further obtain fourth call additional service requirement information, where the fourth call additional service requirement information indicates that the user b requires to present a call subject (which may be a real-person image of the user b or the digital human image of the user b) corresponding to the user a in a scene picture corresponding to the user a or the user b. For a specific method, refer to the implementation method of the terminal device A. Details are not described herein again.

Optionally, when the first call additional service requirement information conflicts with the fourth call additional service requirement information, the call picture content of the user a may be presented in the call application interface of the terminal device B based on the fourth call additional service requirement information. For example, if the user a requires to present the virtual scene picture of the user a in the call application interface of the terminal device B, and the user b requires to present the digital human image corresponding to the user a in the virtual scene picture corresponding to the user b, the terminal device B presents the virtual scene picture corresponding to the user b.

For example, Table 1 shows several examples of a scene provided by the user a or the user b for a peer end and a scene watched by a local end. For example, the user a and the user b each use respective digital humans of the user a and the user b as a call subject to make a call with the peer end. In Table 1, "scene provided by the user a" represents a virtual scene or a real scene, of the user a, that the user a requires to be presented in the call application interface of the terminal device B, indicated by the first call additional service requirement information when the user b expects to watch the scene of the user a, "scene provided by the user b" represents a virtual scene or a real scene, of the user b, that the user b requires to be presented in the call application interface of the terminal device A, indicated by the second call additional service requirement information when the user a expects to watch the scene of the user b, "scene watched by the user a" represents a scene, of the user a or the user b, that the user a requires to be presented in the call application interface of the terminal device A, indicated by the third call additional service requirement information, and "scene watched by the user b" represents a scene, of the user a or the user b, that the user b requires to be presented in the call application interface of the terminal device B, indicated by the fourth call additional service requirement information.

**Table 1**

| Scene provided by user a (virtual/real) | Scene watched by user a (local end/peer end) | Scene provided by user b (virtual/real) | Scene watched by user b (local end/peer end) | Effect |
|---|---|---|---|---|
| Real | Peer end | Real | Peer end | User a sees that a digital human of the user b appears in the real scene of the user b. |
| | | | | User b sees that a digital human of the user a appears in the real scene of the user a. |
| Real | Local end | Real | Peer end | User a sees that a digital human of the user b appears in the real scene of the user a. |
| | | | | User b sees that a digital human of the user a appears in the real scene of the user a. |
| Virtual | Peer end | Real | Peer end | User a sees that a digital human of the user b appears in the real scene of the user b. |
| | | | | User b sees that a digital human of the user a appears in the virtual scene of the user a. |
| Virtual | Local end | Real | Peer end | User a sees that a digital human of the user b appears in the virtual scene of the user a. |
| | | | | User b sees that a digital human of the user a appears in the virtual scene of the user a. |
| Real | Local end | Real | Local end | User a sees that a digitalhuman of the user b appears in the real scene of the user a. |
| | | | | User b sees that a digital human of the user a appears in the real scene of the user b. |
| ... | | | | |
| Ordinary call | Ordinary call | Real | Peer end/Local end | User a sees that a digital human of the user b appears in the real scene of the user b. |
| | | | | User b watches the common video call content of the user a (that is, the user b sees that a real person of the user a appears in the real scene of the user a). |
| Ordinary call | Ordinary call | Virtual | Peer end/Local end | User a sees that a digital human of the user b appears in the virtual scene of the user b. |
| | | | | User b watches the common video call content of the user a (that is, the user b sees that a real person of the user a appears in the real scene of the user a). |
| Real | Peer/Local end | Ordinary call | Ordinary call | User a watches the common video call content of the user b (that is, the user a sees that a real person of the user b appears in the real scene of the user b). |
| | | | | User b sees that a digital human of the user a appears in the real scene of the user a. |
| Virtual | Peer end/Local end | Ordinary call | Ordinary call | User a sees that a digital human of the user b appears in the real scene of the user b. |
| | | | | User b sees that a digital human of the user a appears in the virtual scene of the user a. |

Based on the foregoing solution, the terminal device may present call picture content of the peer terminal device based on a user requirement, so that user experience can be further improved.

In an optional implementation, the first call additional service requirement information, the second call additional service requirement information, the third call additional service requirement information, and the like may be carried in a session description protocol (Session Description Protocol, SDP) message or a session initiation protocol (Session Initiation Protocol, SIP) message. For example, the first call additional service requirement information may be carried in a header field of the SIP message. After receiving the SIP message carrying the first call additional service requirement information, the CSCF network element may directly forward the SIP message to the MS network element (that is, in a transparent transmission manner), or may parse the data content carried in the SIP message, re-encapsulate the data content (for example, add address information and port information of the terminal device A), and then forward the data content to the MS network element. Based on this implementation, resource overheads can be reduced.

The following describes a specific implementation process in which a communication server and terminal devices provide a digital human service for a user in a large-scale real-time communication scenario when the user has a requirement for using the digital human service.

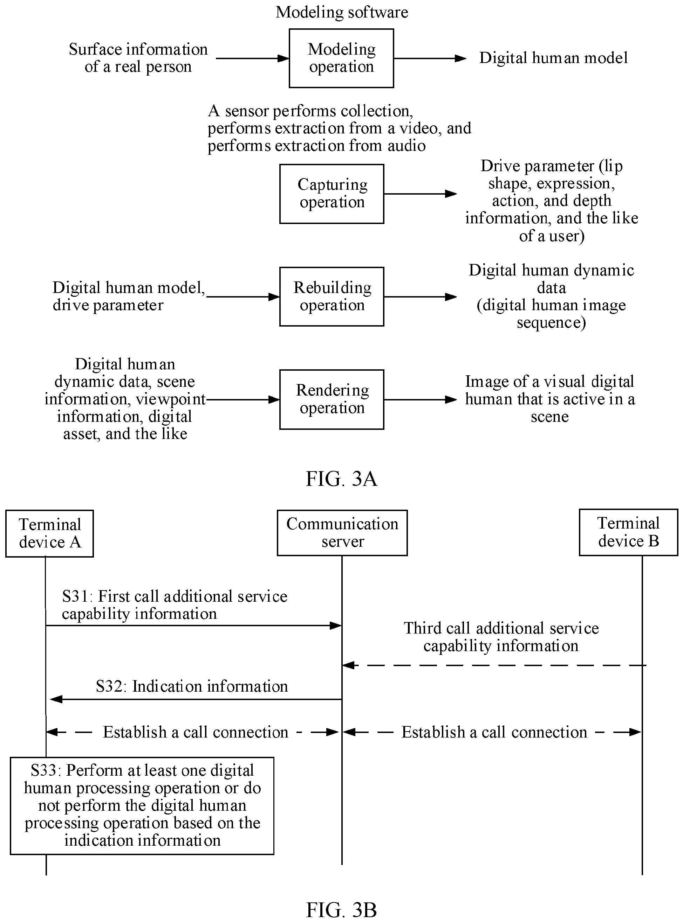

Referring to FIG. 3A, a technical stack of a digital human mainly relates to modeling, capturing, rebuilding, rendering, and the like. Correspondingly, in this embodiment of this application, an operation used to implement the digital human service includes one or more operation of modeling, capturing, rebuilding, rendering, and the like.
(1) Modeling operation: an operation of producing a digital human model, where an image of the digital human model corresponds to an image of a real person, and has an appearance similar to that of the real person. During specific implementation, the digital human model may be a binary file that describes a two-dimensional or three-dimensional image of the real person. Currently, modeling is mainly performed offline, and surface information of a modeling object (that is, the real person) is collected by using technical means such as camera shooting and structured light scanning to form the digital human model.
   In this embodiment of this application, when the digital human is introduced in the large-scale real-time communication scenario, division of work of the following parts is mainly involved:
(2) Capture operation: refers to a technique that records and processes an action of a person or other objects. The capture operation is widely used in many fields such as entertainment, sports, medical applications, computer vision, and robot technologies. In the field of digital human development, the capture operation usually records an action, an expression, and the like of the human, and converts the action, the expression, and the like of the human into an action that can drive a digital model, to generate a two-dimensional or three-dimensional computer animation. When a tiny movement of a face or finger is captured in the capture operation, the capture operation is often referred to as performance capture (performance capture). In many fields, motion capture is sometimes referred to as motion tracking (motion tracking).

In the digital human service scenario provided in this embodiment of this application, the capture operation is mainly used to obtain a drive parameter of the user, where the drive parameter includes but is not limited to at least one of lip shape, expression, action, depth information, and the like of the user.

In this embodiment of this application, there may be a plurality of specific implementations of the capture operation, including but not limited to the following several implementations:

Manner 1: The drive parameter is extracted from a video stream.

For example, expression information, action information, and the like of the user are recorded in a video of the user collected by the terminal device.

Manner 2: The drive parameter is extracted from audio.

For example, real-person joy and anger are analyzed from audio of the user collected by the terminal device, to generate expression information.

Manner 3: A sensor is used to collect the drive parameter.

For example, a gyroscope in the terminal device collects action information of the real person.

For example, a depth camera on the terminal device collects spatial location information of the real person.

It can be learned that in Manner 2 and Manner 3, the terminal device may not collect a video of the user.

It may be understood that the foregoing four methods for extracting the drive parameter are merely examples rather than specific limitations. Actually, there may be another manner.

(3) Rebuilding operation: a process of converting a static digital human model to a dynamic digital human. A specific implementation may be generating digital human dynamic data (that is, dynamic data used to display a virtual character), for example, generating a digital human image sequence, based on the drive parameter and the digital human model, where the digital human image sequence includes a group of image frames with a time sequence (where the image frames may be stored in device storage space in a file manner, and the file describes a plurality of frames of two-dimensional or three-dimensional images of the virtual character). When the digital human image sequence is loaded to a display device, the display device may present the plurality of frames of two-dimensional or three-dimensional images by using the display screen, so that the digital human shows behavior, such as an action or an expression, similar to the real person.

It may be understood that the image frame obtained by performing the rebuilding operation may include only an image of the digital human, that is, may not include a background image.

(4) Rendering operation: refers to a process of generating an image through software by using a model. The model is a description of a two-dimensional or three-dimensional object or virtual scene that is strictly defined in a computer by using a language or a data structure, and includes information such as geometric information, viewpoint information, texture information, illumination information, and shadow information.

In this embodiment of this application, the rendering operation may include a process of synthesizing (or merging or superimposing) a digital human image and a scene image, that is, a process of fusing each frame of the digital human image and the scene image, where each image frame obtained through fusion includes the digital human image and the scene image. It may be understood that digital humans in different image frames after fusion may be different, and scenes may also be different. When a plurality of fused image frames are sequentially loaded on a display device based on a time sequence, a picture presented by the display device is that the digital human is active in a scene, and the digital human presents an appearance and behavior similar to that of the real person. In this embodiment of this application, when the digital human service is provided for the user in a call scenario, an image obtained by performing the rendering operation is an image in call picture content presented by the user to a peer end.

The scene image may be an image corresponding to a real scene, for example, an image of a background in a real environment in which the real person (the user) is located, or may be a virtual scene image, for example, a pre-arranged background image or a background image downloaded from a network. This is not limited in this application.

In this embodiment of this application, the rendering operation may be further performed with reference to a perspective of an observer. The observer is a user that finally watches the call picture content. For example, a user a is the observer when the user a watches call picture content of a user b. When the rendering operation is performed on a digital human of the user b, the call picture content of the user b may be synthesized based on viewpoint information of the user a. In this way, the call picture content of the user b can better meet a watching requirement of the user a. Similarly, the user b is the observer when the user b watches call picture content of the user a. When the rendering operation is performed on a digital human of the user a, the call picture content of the user a may be synthesized based on viewpoint information of the user b. In this way, the call picture content of the user a can better meet a watching requirement of the user b.

Further, the rendering operation may further include fusing a digital asset with the digital human image and the scene image. That is, the image obtained by performing the rendering operation may further include the digital asset and the like of the user. The digital asset includes but is not limited to virtual clothes, virtual scenes, or other props used to modify the digital human of the user.

In this embodiment of this application, each operation of the capture operation, the rebuilding operation, and the rendering operation may be performed by the communication server (for example, an MS network element), or may be performed by the terminal device. This is not limited in this application.

An example in which the digital human service is provided for a user a of a terminal device A is used:
Example 1: When the capture operation is performed by the terminal device A of the user a, the terminal device A obtains a drive parameter of the user a from a video, audio, and the like collected by the terminal device A.

When capturing is performed by the MS network element, the MS network element obtains the drive parameter of the user a from the video, audio, and the like collected by the terminal device A.

Example 2: When the rebuilding operation is performed by the terminal device A of the user a, the terminal device A maps an expression and/or an action of the user a to a digital character model of the user a based on the drive parameter of the user a, to obtain a digital human image sequence of the user a, where the drive parameter of the user a may be obtained by the terminal device A by performing the capture operation, or may be provided by the MS network element for the terminal device A; and the terminal device A may locally read the digital human model (for example, the digital human model is stored locally on the terminal device A), or the terminal device A may download the digital human model (for example, the digital human model is stored on the MS network element) from the MS network element.

When the rebuilding is performed by the MS network element, the MS network element maps the expression and/or action of the user a to the digital character model of the user a based on the drive parameter of the user a, to obtain the digital human image sequence of the user a, where the drive parameter of the user a may be obtained by the MS network element by performing the capture operation, or may be provided by the terminal device A for the MS network element; and the MS network element may obtain the digital human model from the terminal device A (for example, the digital human model is stored locally on the terminal device A), or the MS network element may read the digital human model locally (for example, the digital human model is stored on the MS network element).

Example 3: When the rendering operation is performed by the terminal device A of the user a, the terminal device A superimposes the digital human image of the user a on a scene image of the user a, to obtain the call picture content of the user a, where the digital human image of the user a may be obtained by the terminal device A by performing the rebuilding operation, or may be provided by the MS network element for the terminal device A.

When the rendering operation is performed by the MS network element, the MS network element superimposes the digital human image of the user a on the scene image of the user a, to obtain the call picture content of the user a, where the digital human image of the user a may be obtained by the MS network element by performing the rebuilding operation, or may be provided by the terminal device A for the MS network element.

When the rendering operation is performed by a terminal device B, the terminal device B superimposes the digital human image of the user a on the scene image of the user a, to obtain the call picture content of the user a, where the digital human image of the user a may be provided by the MS network element for the terminal device B, or may be provided by the terminal device A to for the terminal device B.

It may be understood that, when the terminal device is on a call with at least one peer terminal device, if a user corresponding to the terminal device requires to use the digital human service, division of work between the communication server and the terminal device is required, for example, a device (for example, the terminal device, the communication server, or the peer terminal device) that performs each operation is specified.

FIG. 3B is a flowchart of another method for providing a call additional service according to an embodiment of this application. An example in which the method is applied to the scenario shown in FIG. 1C and a digital human service is provided for a terminal device A is used. The method includes the following steps:

S31: The terminal device A sends first call additional service capability information, and correspondingly, a communication server receives the first call additional service capability information.

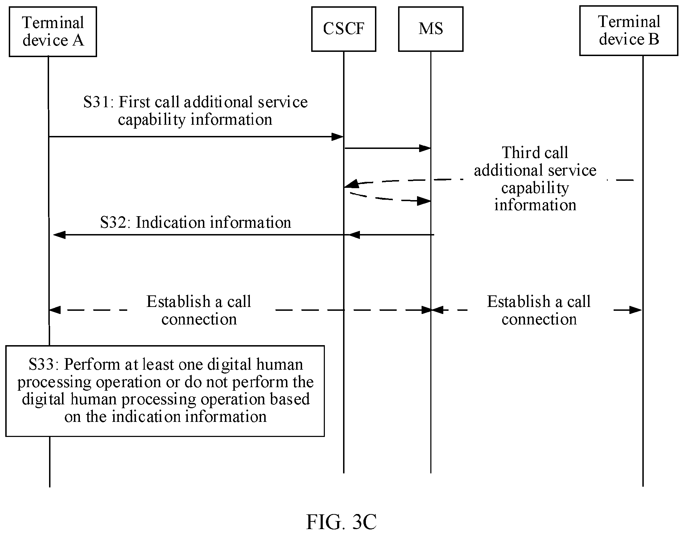

The communication server is specifically, for example, an MS network element, and the call additional service capability information of the device A may first reach a CSCF network element, and then be forwarded to the MS network element by the CSCF network element, as shown in FIG. 3C.

The first call additional service capability information includes digital human service capability information of the terminal device A. For example, the first call additional service capability information indicates a digital human service capability possessed by the terminal device A.

For example, the first call additional service capability information may include one or more of the following:
(1) information indicating whether the terminal device A stores a digital human model of a user corresponding to the terminal device A;
(2) information indicating whether the terminal device A stores a virtual scene of the user corresponding to the terminal device A;
(3) information indicating whether the terminal device A can perform a rebuilding operation;
(4) information indicating a drive parameter (such as audio, a video, an expression, and a body action) that can be provided by the terminal device A;
(5) information indicating whether the terminal device A can perform a rendering operation;
(6) information indicating whether the terminal device A needs the communication server to backhaul the call picture content of the terminal device A; and
(7) information indicating whether the terminal device A provides viewpoint information.

It may be understood that the foregoing several types are merely examples but not specific limitations.

S32: The communication server sends indication information to the terminal device A, and correspondingly, the terminal device A receives the indication information sent by the communication server.

The indication information may be sent by the MS network element to the CSCF network element, and then forwarded to the terminal device A by the CSCF network element, as shown in FIG. 3C.

In a possible implementation, an operation that needs to be performed by the terminal device A may be determined by the MS network element. For example, the MS network element determines, based on at least one of the first call additional service capability information, second call additional service capability information, and third call additional service capability information, a digital human processing operation to be performed by the terminal device; and then the MS network element sends the indication information to the terminal device A through the CSCF network element, where the indication information indicates the digital human processing operation to be performed by the terminal device A, and the digital human processing operation to be performed by the terminal device A is, for example, at least one operation of a capture operation, a rebuilding operation, or a rendering operation, or "n/a" or "0" (that is, the digital human processing operation is not performed).

The second call additional service capability information includes digital human service capability information of the communication server. For example, the second call additional service capability information indicates a digital human service capability possessed by the communication server.

For example, the call additional service capability information of the communication server (the MS network element) includes one or more of the following:
(1) information indicating whether the communication server stores the digital human model of the user corresponding to the terminal device A;
(2) information indicating whether the communication server stores a virtual scene of the user corresponding to the terminal device A;
(3) information indicating whether the communication server can perform the rebuilding operation;
(4) information indicating a drive parameter that can be received by the communication server;
(5) information indicating a drive parameter that can be extracted by the communication server;
(6) information indicating whether the communication server can perform the rendering operation; and
(7) information indicating whether the communication server can backhaul the call picture content of the terminal device A to the terminal device A.

It may be understood that the foregoing several types are merely examples but not specific limitations.

The third call additional service capability information includes digital human service capability information of at least one peer terminal device. For example, the third call additional service capability information indicates a digital human service capability possessed by the at least one peer terminal device.

For example, if there is only one peer terminal device, for example, a terminal device B, the third call additional service capability information indicates a digital human service capability possessed by the terminal device B. The third call additional service capability information includes one or more of the following:
(1) information indicating whether the terminal device B can perform a rendering operation; and
(2) information indicating whether the terminal device B provides viewpoint information.

It may be understood that the foregoing several types are merely examples but not specific limitations.

Optionally, the terminal device B further sends the third call additional service capability information, and the communication server receives the third call additional service capability information.

In another possible implementation, the operation performed by the terminal device A may be determined by the terminal device B. For example, the terminal device B determines the digital human processing operation to be performed by the terminal device A based on the first call additional service capability information, the second call additional service capability information, and the third call additional service capability information, then the terminal device B sends indication information to the MS network element through the CSCF network element, and then the MS network element sends the indication information to the terminal device A through the CSCF network element, where the indication information indicates the digital human processing operation to be performed by the terminal device A, and the digital human processing operation to be performed by the terminal device Ais, for example, at least one operation of a capture operation, a rebuilding operation, and a rendering operation, or "n/a" or "0" (that is, the digital human processing operation is not performed).

In another possible implementation, the operation that needs to be performed by the terminal device A may be determined by the terminal device A. Correspondingly, the indication information may be used to indicate the second call additional service capability information and the third call additional service capability information.

S33: The terminal device A performs at least one digital human processing operation or does not perform the digital human processing operation based on the indication information.

Correspondingly, if the indication information indicates the terminal device A to perform at least one of the capture operation, the rebuilding operation, and the rendering operation, the terminal device A directly performs the at least one operation indicated by the indication information.

If the digital human processing operation to be performed by the terminal device A is "n/a" or "0" (that is, the digital human processing operation is not performed), the terminal device A does not perform the digital human processing operation.

If the indication information indicates the second call additional service capability information and the third call additional service capability information, the terminal device A determines, based on at least one of the first call additional service capability information, the second call additional service capability information, and the third call additional service capability information, the digital human processing operation to be performed by the terminal device A.

Based on the foregoing method, an operation that needs to be performed by a terminal device corresponding to a user in a process of providing the digital human service for the user may be specified.

It may be understood that the terminal device A performs the at least one operation in a call process between the terminal device A and the terminal device B (that is, a call connection has been established). S31 and S32 may be performed before the terminal device A and the terminal device B start to communicate in a call, for example, S31 and S32 may be performed in a calling phase.

In an optional implementation, the communication server may perform at least one of the capture operation, the rebuilding operation, and the rendering operation based on at least one of the first call additional service capability information, the second call additional service capability information, and the third call additional service capability information. It may be understood that the terminal device A and the communication server perform different digital human processing operations.

For example, the terminal device performs the capture operation, and the communication server performs the rebuilding operation and the rendering operation; the terminal device performs the capture operation and the rebuilding operation, and the communication server performs the rendering operation; or the terminal device performs the capture operation, and the communication server performs the rebuilding operation and the rendering operation.

It may be understood that if a user b corresponding to the terminal device B requires that a digital human of the user a appear in a (real or virtual) scene of the user b, the rendering operation may alternatively be performed by the terminal device B.

It may be understood that the capture operation, the rebuilding operation, and the rendering operation may alternatively be all performed by the terminal device A or the communication server.

It may be understood that, in the foregoing embodiments shown in S31 to S33, that the terminal device A provides the digital human service is used as an example. During actual application, a call is bidirectional. During a call, the digital human service may be provided only for the user a, the digital human service may be provided only for the user b, or the digital human service may be simultaneously provided for the user a and the user b. Therefore, the same method may also be applied to providing the digital human service for the terminal device B. In an optional implementation, the first call additional service capability information, the second call additional service capability information, the third call additional service capability information, the indication information, and the like may be carried in an SDP message or a SIP message, for example, may be carried in a header field of the SIP message.

It may be understood that the embodiment shown in S31 to S33 and the embodiment shown in S21 and S22 may be mutually combined for implementation. For example, in the calling phase, the terminal device A may include a capability (for example, the first call additional service capability information) of the terminal device A and a requirement of the user a on the digital human service (for example, first call additional service requirement information and third call additional service requirement information) in a same message, to notify the communication server and the terminal device B of the capability of the terminal device A and the requirement of the user a. For example, after the call is connected, in the process of communication in the call between the terminal device A and the terminal device B, the terminal device A and the communication server cooperate to complete operations such as the capture operation, the rebuilding operation, and the rendering operation, so that the terminal device A enables the communication server to send the call picture content (including digital human content and/or virtual scene content) of the user a to the terminal device B.

It may be understood that, in the embodiment shown in S21 and S22, the operation of generating the digital human content may include all operations of the capture operation, the rebuilding operation, and the rendering operation, or may include only some operations (for example, only include the rendering operation). This is not limited in this embodiment of this application. Further, the "digital human content" in the embodiment shown in S21 and S22 may be static digital human data (for example, the digital human model), may be dynamic digital human data (that is, data obtained by performing the rebuilding operation, for example, a digital human image sequence), or may be call picture content including a digital human image (that is, data obtained by performing the rendering operation), or the like. This is not limited in this application. Similarly, the virtual scene content may include only an image corresponding to a virtual scene, or may be call picture content including a virtual scene picture, or the like. This is not limited in this application.

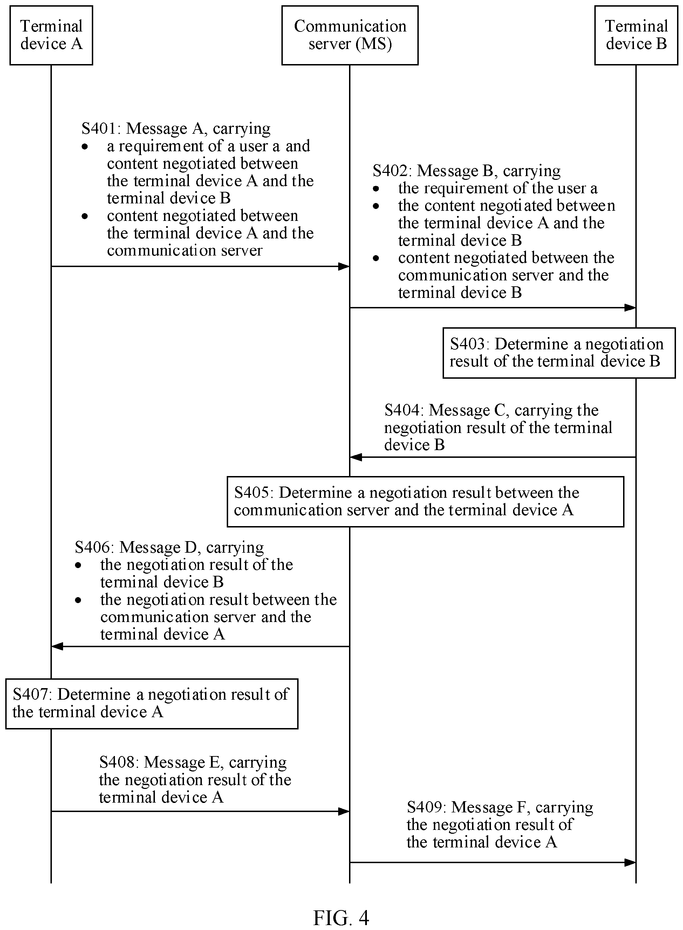

For example, FIG. 4 is a flowchart of another communication method according to an embodiment of this application. The method uses an example in which a terminal device A is a caller terminal device and a terminal device B is a callee terminal device. The method includes the following steps:
S401: The terminal device A sends a message A to a communication server (using an MS network element as an example), where the message A carries the following several parameters: a requirement (Expect) of a user a, content negotiated between the terminal device A and the terminal device B (Caller-Callee), and content negotiated between the terminal device A and the communication server (Caller-CN).
S402: The communication server sends a message B to the terminal device B, where the message B carries the following several parameters: the requirement of the user a, the content negotiated between the terminal device A and the terminal device B, and content negotiated between the communication server and the terminal device B (CN-Callee).
S403: The terminal device B determines a negotiation result (Callee) of the terminal device B based on a requirement of the user b, call additional service capability information of the terminal device B, and the parameter carried in the message B.
S404: The terminal device B sends a message C to the communication server, where the message C carries the following parameter: the negotiation result of the terminal device B.
S405: The communication server determines a negotiation result (CN-Caller) between the communication server and the terminal device A.
S406: The communication server sends a message D to the terminal device B, where the message D carries the following several parameters: the negotiation result of the terminal device B and the negotiation result between the communication server and the terminal device A.
S407: The terminal device B confirms a negotiation result (Caller) of the terminal device Abased on the negotiation result of the terminal device B and the negotiation result between the communication server and the terminal device A.
S408: The terminal device A sends a message E to the communication server, where the message E carries the following parameter: the negotiation result of the terminal device A.
S409: The communication server sends a message F to the terminal device B, where the message F carries the following parameter: the negotiation result of the terminal device A.

Related parameters and descriptions in step S401 to step S409 are shown in Table 2.

**Table 2**

| Parameter class | Specific value and meaning of parameter |
|---|---|
| Requirement of the user a (header: Expect) | Expect: digitalman; scene = virtual\|real. |
| | Parameter 1: digitalman, used to indicate that the user a requires to participate in a call in a digital human image of the user a. |
| | Parameter 2: scene, used to indicate a virtual (or real) scene that the user a requires the terminal device A to provide. |
| | For example, a value virtual indicates the virtual scene, and a value real indicates the real scene. |
| Content negotiated between the terminal device A (caller) and the communication server (header field: Caller-CN) | Caller-CN: source = [0\|1], [0\|1]; rebuild = [0\|1]; capture = 0, 1, 2, 3; render = 0, 1, 2, 3; tiny_stream = [0\|1] |
| | Parameter 1: source, used to indicate whether a digital human model exists on the terminal device A (where, for example, a value 0 indicates no, and a value 1 indicates yes), and whether a virtual scene exists on the terminal device A (where, for example, a value 0 indicates no, and a value 1 indicates yes). |
| | Parameter 2: rebuild, used to indicate whether the terminal device A can rebuild a digital human (where, for example, a value 0 indicates no, and a value 1 indicates yes). |
| | Parameter 3: capture, used to indicate a drive parameter that can be captured by the terminal device A (where, for example, a value 0 indicates audio, a value 1 indicates a video, a value 2 indicates an expression, and a value 3 indicates a body action). |
| | Parameter 4: render, used to indicate a rendering capability of the terminal device A (where, for example, a value 0 indicates that rendering of only a common video is supported, but rendering of a digital human video is not supported; a value 1 indicates that rendering of only a video image seen by the user a is supported; a value 2 indicates that rendering of a video image seen by the user b is supported; and a value 3 indicates that a variable viewpoint is supported, where, for example, the video image seen by the user a may be rendered based on a viewpoint of the user a). |
| | Parameter 5: tiny _stream, used to indicate whether the terminal device A needs the communication server to backhaul call picture content of the terminal device A (where, for example, a value 0 indicates no, and a value 1 indicates yes). |
| Content negotiated between the terminal device A and the terminal device B (header field: Caller-Callee) | Caller-Callee: scene = [0\|1]; viewpoint = [0\|1] |
| | Parameter 1: scene, used to indicate that the user a sees that a digital human of the user b appears in a scene of the user a or a scene of the user b (where, for example, a value 0 indicates the scene of the user a, and a value 1 indicates the scene of the user b). |
| | Parameter 2: viewpoint, used to indicate whether the user a can provide viewpoint information (where, for example, a value 0 indicates no, and a value 1 indicates yes). |
| Content negotiated between the communication server and the terminal device B (callee). (header field: CN-Callee) | CN-Callee: source = [0\|1], [0\|1]; rebuild = [0\|1]; action = 0, 1, 2; action_from_video = 0, 1, 2; render = 0, 1, 2; tiny_stream = [0\|1] |
| | Parameter 1: source, used to indicate whether a digital human model exists on the communication server (where, for example, a value 0 indicates no, and a value 1 indicates yes), and whether a virtual scene exists on the communication server (where, for example, a value 0 indicates no, and a value 1 indicates yes). |
| | Parameter 2: rebuild, used to indicate whether the communication server can rebuild a digital human (where, for example, a value 0 indicates no, and a value 1 indicates yes). |
| | Parameter 3: action, a field used to indicate a drive parameter that can be received by the communication server (where, for example, a value 0 indicates audio, a value 1 indicates an expression, and a value 2 indicates a body action). |
| | Parameter 4: action_from_video, used to indicate whether the communication server can extract a drive parameter from a video (where, for example, a value 0 indicates no, a value 1 indicates that the communication server can extract expression data from the video, and a value 2 indicates that the communication server can extract body action data from the video). |
| | Parameter 5: render, used to indicate a rendering capability of the communication server (where, for example, a value 0 indicates that rendering of the video image seen by the user b is not supported; a value 2 indicates that rendering of the video image seen by the user b is supported; and a value 3 indicates that a variable viewpoint is supported, where, for example, the video image seen by the user b may be rendered based on a viewpoint of the user b). |
| | Parameter 6: tiny_stream, used to indicate whether the communication server can backhaul call picture content of the terminal device B to the terminal device B (where, for example, a value 0 indicates no, and a value 1 indicates yes). |
| Negotiation result of the terminal device B (header field: Callee) | Callee: digitalman; scene = [virtual\|real], [0\|1]; source = [0\|1], [0\|1]; rebuild = [0\|1]; capture = 0, 1, 2, 3; render = 0, 1, 2, 3; tiny_stream = [0\|1]; viewpoint = [0\|1] |
| | Parameter 1: digitalman, used to indicate that the user b requires to participate in a call in a digital human image of the user b. |
| | Parameter 2: used to indicate a virtual (or real) scene that the user b requires the terminal device B to provide, where, for example, a value virtual indicates the virtual scene, and a value real indicates the real scene; and |
| | used to indicate that the user b sees the digital human of the user a in the scene of the user a or the user b (where, for example, a value 0 indicates the scene of the user a, and a value 1 indicates the scene of the user b). Parameter 3: used to indicate whether a digital human model exists on the terminal device B, and whether a virtual scene exists on the terminal device B (where, for example, a value 0 indicates no, and a value 1 indicates yes). |
| | Parameter 4: used to indicate whether the terminal device B can perform rebuilding (A value 0 indicates no, and a value 1 indicates yes.) |
| | Parameter 5: used to indicate a drive parameter that can be provided by terminal device B. (A value 0 indicates audio, a value 1 indicates a video, a value 2 indicates an expression, and a value 3 indicates a body action.) |
| | Parameter 6: used to indicate that the terminal device B can render only a common video (where, for example, a value 0 indicates that rendering of only the common video is supported, and rendering of a digital human video is not supported; a value 1 indicates that rendering of only the video image seen by the user b is supported; a value 2 indicates that rendering of the video image seen by the user a is supported; and a value 3 indicates that a variable viewpoint is supported, where, for example, the video image seen by the user b may be rendered based on the viewpoint of the user b). |
| | Parameter 7: used to indicate whether the terminal device B needs the communication server to backhaul the call picture content of the terminal device B (where a value 0 indicates no, and a value 1 indicates yes) |
| | Parameter 8: used to indicate whether the terminal device B can provide viewpoint information (where a value 0 indicates no, and a value 1 indicates yes) |
| Negotiation result between the communication server and the terminal device A (header field: CN-Caller) | CN-Caller: source = [0\| 1], [0\| 1]; rebuild = [0\|1]; action = 0, 1, 2, 3; action_from_video = 0, 1, 2; render = 0, 1, 2; tiny_stream = [0\|1] |
| | Parameter 1: used to indicate whether a digital human model exists on the communication server (where, for example, a value 0 indicates no, and a value 1 indicates yes), and whether a virtual scene exists on the communication server (where, for example, a value 0 indicates no, and a value 1 indicates yes). |
| | Parameter 2: used to indicate whether the communication server can rebuild a digital human (where, for example, a value 0 indicates no, and a value 1 indicates yes) |
| | Parameter 3: used to indicate a drive parameter that can be received by the communication server (where, for example, a value 0 indicates audio, a value 1 indicates a video, a value 2 indicates an expression, and a value 3 indicates a body action). |
| | Parameter 4: used to indicate whether the communication server can extract a drive parameter from a video (where, for example, a value 0 indicates no, a value 1 indicates that the communication server can extract an expression, and a value 2 indicates that the communication server can extract a body action). |
| | Parameter 5: used to indicate a rendering capability of the communication server (where, for example, a value 0 indicates that rendering of the video image seen by the user a is not supported; a value 1 indicates that rendering of the video image seen by the user a is supported; and a value 2 indicates that a variable viewpoint is supported, where, for example, the video image seen by the user a may be rendered based on the viewpoint of the user a). |
| | Parameter 6: used to indicate whether the communication server can backhaul the call picture content of the terminal device A to the terminal device A (where, for example, a value 0 indicates no, and a value 1 indicates yes). |
| Negotiation result of the terminal device A (header field: Caller) | Caller: digitalman; scene = [virtual\|real], [0\|1]; source = [0\|1], [0\|1]; rebuild = [0\|1]; capture = 0, 1, 2; render = 0, 1, 2, 3; tiny_stream = [0\|1]; viewpoint = [0\|1] |
| | Parameter 1: digitalman, used to indicate that the user a participates in a call in the form of a digital human. |
| | Parameter 2: scene, used to indicate that the terminal device A provides a virtual (or real) scene, where the user a sees that the digital human of the user b appears in the scene of the user a or the scene of the user b (where, for example, a value 0 indicates the scene of the user a, and a value 1 indicates the scene of the user b). |
| | Parameter 3: used to indicate whether a digital human model exists on the terminal device A, and whether a virtual scene exists on the terminal device A. (For example, a value 0 indicates no, and a value 1 indicates yes.) |
| | Parameter 4: used to indicate whether the terminal device A can perform rebuilding. (For example, a value 0 indicates no, and a value 1 indicates yes.) |
| | Parameter 5: used to indicate a drive parameter (audio, a video, and an expression) that can be provided by the terminal device A. (For example, a value 0 indicates the audio, a value 1 indicates the video, a value 2 indicates the expression, and a value 3 indicates a body action.) |
| | Parameter 6: used to indicate a rendering capability of the terminal device A (where, for example, a value 0 indicates that rendering of only a common video is supported, but rendering of a digital human video is not supported; a value 1 indicates that rendering of only the video image seen by the user a is supported; a value 2 indicates that rendering of the video image seen by the user b is supported; and a value 3 indicates that a variable viewpoint is supported, where, for example, the video image seen by the user a may be rendered based on the viewpoint of the user a). |
| | Parameter 7: used to indicate whether the terminal device A needs the communication server to backhaul the call picture content of the terminal device A (where, for example, a value 0 indicates no, and a value 1 indicates yes). |
| | Parameter 8: used to indicate whether the terminal device A can provide viewpoint information. (For example, a value 0 indicates no, and a value 1 indicates yes.) |

It may be understood that FIG. 4 uses an example in which the terminal device A is a caller terminal device, the terminal device B is a callee terminal device, and the caller terminal device (namely, the terminal device A) first initiates negotiation. During actual application, the callee terminal device (for example, the terminal device B) may first initiate negotiation, or the communication server first initiates negotiation. This is not limited in this application.

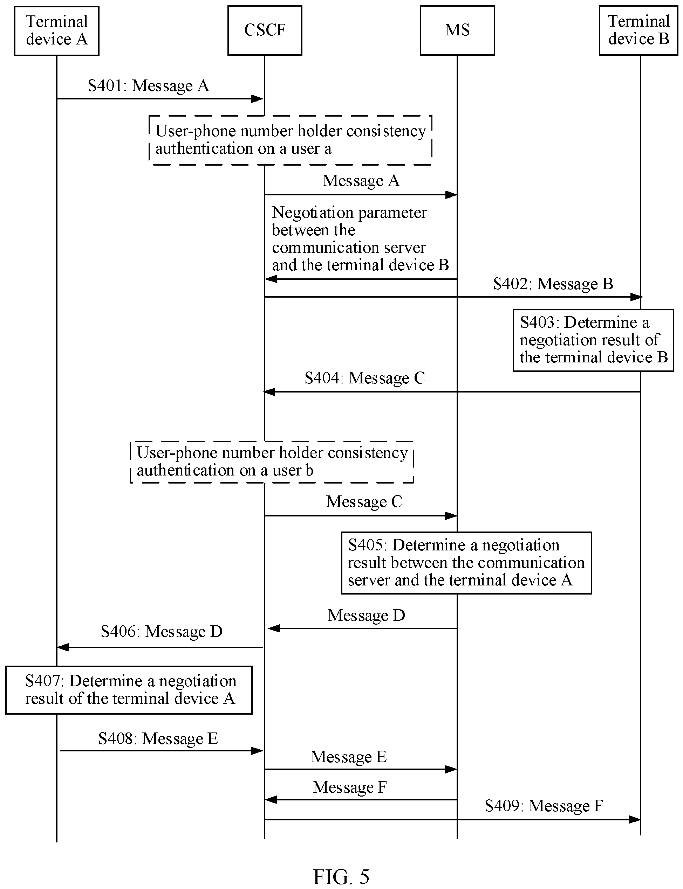

During specific implementation, a function performed by the communication server in FIG. 4 may be completed by the MS network element. For example, as shown in FIG. 5, a message (for example, a message A) sent by the terminal device A to the communication server first arrives at a CSCF network element (any one of a P_CSCF network element, an I_CSCF network element, and an S_CSCF network element), and then is forwarded by the CSCF network element to the MS network element; a message (for example, a message C) sent by the terminal device B to the communication server first arrives at the CSCF network element, and then is forwarded by the CSCF network element to the MS network element; a message (for example, a message D) sent by the communication server to the terminal device A is sent from the MS network element to the CSCF network element, and then is forwarded by the CSCF network element to the terminal device A; and a message (for example, a message F) sent by the communication server to the terminal device B is sent from the MS network element to the CSCF network element, and then is forwarded by the CSCF network element to the terminal device B. It may be understood that, when forwarding the message, the CSCF network element may forward the message to the MS network element in a transparent transmission manner (that is, directly forward the message without parsing data content carried in the message), or may forward the message in a non-transparent transmission manner (for example, parse data content carried in the message, re-encapsulate the data content, and then forward the data content to the MS network element). This is not limited in this application.

Optionally, the CSCF network element of the network may further perform user-phone number holder consistency authentication on the user a after receiving the message A, and then perform a subsequent process after determining that a current user of the user a is consistent with a user bound to a number of the user a. Similarly, the CSCF network element of the network may further perform user-phone number holder consistency authentication on the user b after receiving the message C, and perform a subsequent process after determining that a current user of the user b is consistent with a user bound to a number of the user b.

It may be understood that a same message identifier (for example, the message A in step 1 and the message A in step 3) in different transmission phases in FIG. 5 is merely used to indicate that negotiation parameters carried in the messages are the same. During actual implementation, different messages carrying a same negotiation parameter may have different names, and may further carry other different data content. This is not limited in this application.

It may be understood that FIG. 5 uses an example in which the terminal device A and the terminal device B belong to a same IMS network. During actual application, the terminal device A and the terminal device B may be served by different IMS networks. In this case, more network elements are required to participate in communication. For example, the terminal device A corresponds to one set of a CSCF network element and an MS network element, the terminal device B corresponds to another set of a CSCF network element and an MS network element, and transmission parameters between the terminal device A and the terminal device B need to pass through the two sets of CSCF network elements and MS network elements.

In an optional implementation, after the terminal device (for example, the terminal device A and the terminal device B) participating in a call and the communication server (for example, the MS network element) providing a call service for the terminal device respectively determine their own division of work, the communication server (for example, the MS network element) may establish a data transmission channel between the communication server (for example, the MS network element) and the terminal device, to transmit data that needs to be exchanged between the terminal device and the communication server (for example, the MS network element) during a call.

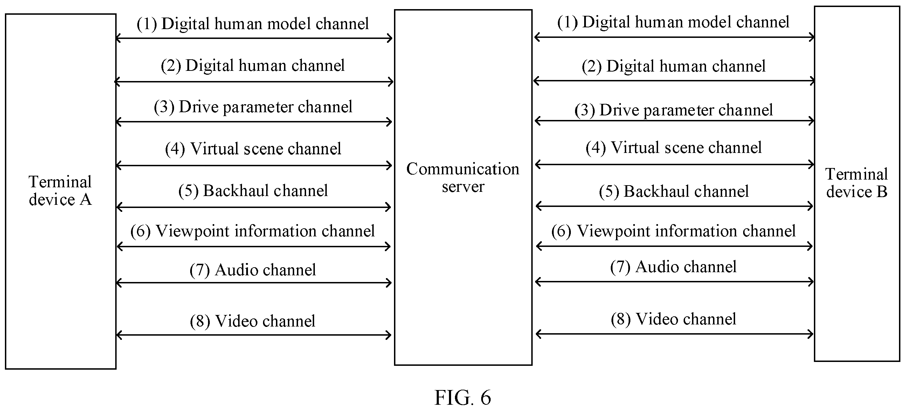

For example, referring to FIG. 6, types of data transmission channels in this embodiment of this application include but are not limited to the following several types:
(1) digitalman_model_channel: a digital human model channel, used to transmit a digital human model that is not rebuilt;
(2) digitalman_channel: a digital human channel, used to transmit rebuilt digital human dynamic data (that is, a digital human image sequence);
(3) action_channel: a drive parameter channel, used to transmit a drive parameter;
(4) scene_channel: a virtual scene channel, used to transmit a virtual scene, that is, virtual background picture data of a digital human;
(5) backhaul_channel: a backhaul channel, used to transmit local call picture content in a viewpoint of a peer end;
(6) viewpoint_channel: a viewpoint information channel, used to transmit a viewpoint information, where
   the viewpoint information is used to describe a viewpoint of an observer; for example, viewpoint information of a user a is spatial location information of the user a when the user a watches call picture content of a user b; for example, viewpoint information of the user b is spatial location information of the user b when the user b watches call picture content of the user a;
(7) audio_channel: an audio channel, used to transmit audio; and
(8) video_channel: a video channel, used to transmit a video, where the video may be a video including a real-person image (for example, an original video collected by a terminal device), or may be a video including a digital human image (for example, a video obtained by performing a digital human processing operation).

It is to be noted that the division of the foregoing several channel types is logical division. Physically, the foregoing channels may correspond to a same physical channel, or may correspond to different physical channels. For example, quintuple information (a source IP address, a source port, a destination IP address, a destination port, and a transmission protocol) of the foregoing different channels is different; or different channels may be combined. For example, the drive parameter channel and the viewpoint information channel are combined, that is, same quintuple information is shared.

Optionally, a type of a data transmission channel that needs to be established between a communication server (an MS network element) and the terminal device is associated with division of work between the communication server and the terminal device.

An example in which a terminal device A needs to use a digital human service during a call between the terminal device A and a terminal device B is used.

Example 1: The terminal device A performs a rebuilding operation. A first channel (digitalman_model_channel) is established between the terminal device A and the communication server, where the first channel is used to transmit a digital human model of a user corresponding to the terminal device A.

Example 2: The terminal device A performs a rebuilding operation, and the communication server or the terminal device B performs a rendering operation. A second channel (digitalman_channel) is established between the terminal device A and the communication server, where the second channel is used to transmit a digital human image sequence of the user a corresponding to the terminal device A.

Example 3: The terminal device A performs a capture operation and the communication server performs the rebuilding operation. A third channel (action_channel) is established between the terminal device A and the communication server, where the third channel is used to transmit a drive parameter of the user corresponding to the terminal device A.

Example 4: The communication server performs the rendering operation, a scene image is a virtual scene image of the user a, and the virtual scene image is stored on the terminal device A. A fourth channel (scene_channel) is established between the communication server and any terminal device A, where the fourth channel is used to transmit a virtual scene of the user b corresponding to the terminal device B. It may be understood that, if the virtual scene is stored on the communication server, and the rendering operation is performed by the communication server, the channel may not be established.

Example 5: The terminal device A needs the communication server to backhaul call picture content of the terminal device A. Afifth channel (backhaul_channel) is established between the communication server and the terminal device A, where the fifth channel is used by the communication server to backhaul the call picture content of the user corresponding to the terminal device A to the terminal device A.

Example 6: The communication server performs the rendering operation, and call additional service capability information of the terminal device B includes information indicating viewpoint information provided by the terminal device B. A sixth channel (viewpoint channel) is established between the communication server and the terminal device B, where the sixth channel is used to transmit the viewpoint information provided by the terminal device B.

Example 7: If the communication server performs the capture operation, and the communication server captures the drive parameter of the user from audio of the user a, a seventh channel (audio_channel) may be established between the terminal device A and the communication server. If the communication server performs the capture operation, and the communication server captures the drive parameter of the user from a video of the user a, an eighth channel (video_channel) may be established between the terminal device A and the communication server.

It may be understood that, the foregoing describes an example of establishment scenarios of channels (types of established channels may be different in a case of different division of work), but a specific establishment scenario is not limited.

In some possible designs, scenarios may not be distinguished, but some or all of the foregoing channels are established by default. For example, video_channel, audio_channel, and action_channel can be established in any scenario. This reduces changes to an existing call process. For example, each of the foregoing channels may be established in any scenario (that is, all the foregoing channels need to be established in any case of division of work). In this way, complexity of the solution can be reduced, and applicability of the solution can be improved. It may be understood that the foregoing is merely an example rather than a limitation, and more types of data transmission channels may be extended based on types of data that needs to be transmitted.

Based on the foregoing implementation, a data transmission channel may be established between the communication server and the terminal device based on digital human service capabilities of the communication server and the terminal device, to meet different transmission requirements of different data in a digital human communication process.

The following describes how to ensure security of a digital human service when a digital human is introduced in a large-scale real-time communication scenario.

The digital human service brings better user experience, but also brings new risks and challenges to call security and anti-fraud governance. To ensure legal use of the digital human service in a call scenario, corresponding authentication (briefly referred to as "authentication") needs to be performed in producing (that is, producing a digital human model), auditing (that is, auditing the digital human model), managing (that is, managing the digital human model), communicating (that is, a user uses the digital human service), and other processes.

For example, authentication scenarios in embodiments of this application include but are not limited to several scenarios shown in Table 3.

**Table 3**

| Authentication scenario | Authentication content | Authentication party | Authentication method |
|---|---|---|---|
| Digital human model production | User identity authentication | Digital human model production device (for example, a device of a digital human production company) | Performs authentication on the user identity based on a check feature such as a fingerprint, a face, and a voiceprint. |
| Digital human model audit | Digital human model and user information audit | Digital human audit device (for example, a device of a digital human audit authority) | The digital human model production device encrypts a produced digital human, the user information, and the check feature by using a public key of the digital human audit device, and the digital human audit device performs audit after performing decryption by using a private key. |
| Digital human model uploading | Digital human model and user information tamper-resistant check | Digital human management center device | The digital human audit device adds a digital signature in the digital human, the user information corresponding to the digital human, the check feature, and the like by using the private key, and the digital human management center device verifies the digital signature by using the public key of the digital human audit device. |
| Digital human model downloading | User identity authentication (involved when the digital human model is stored on the terminal device) | Digital human management center device | Performs authentication on the user identity based on the check feature such as the fingerprint, the face, and the voiceprint, and checks whether identity information of a user on a current call is consistent with identity information bound to the digital human. |
| Digital human communication (where the user uses the digital human service) | User-phone number holder consistency authentication | Communication server that provides a call service | Checks whether the user on the current call is consistent with an account holder of the phone number based on the check feature such as the fingerprint, the face, and the voiceprint. |
| Digital human communication (where the user uses the digital human service) | Digital human consistency authentication (involved when the digital human model is stored in the network) | Communication server that provides the call service | Checks whether the digital human model in the network matches a rebuilt digital human based on information such as a facial feature. |
| Digital human communication (where the user uses the digital human service) | User identity authentication (involved when the digital human model is stored on the terminal device) | Terminal device | Performs authentication on the user identity based on the check feature such as the fingerprint, the face, and the voiceprint to ensure that the identity information of the user on the current call is consistent with user identity information bound to the digital human. |
| Digital human communication (where the user uses the digital human service) | Terminal device authentication result tamper-resistant check (involved when the digital human model is stored on the terminal device) | Communication server that provides the call service | The terminal device adds a digital signature in the user identity authentication result by using a private key (such as the private key of a SIM card) allocated by the network, and the network verifies the digital signature by using a corresponding public key (such as a public key of the SIM card). |

It may be understood that the foregoing several authentication scenarios are merely examples rather than limitations.

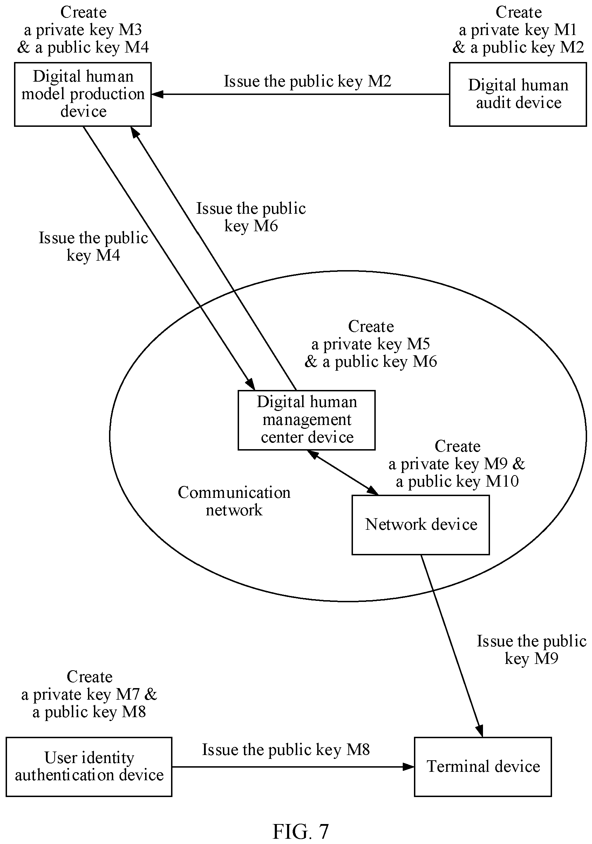

FIG. 7 is a schematic diagram of several keys (M1, M2, M3, M4, M5, M6, M7 and M8) that may be involved in the foregoing several authentication scenarios. The functions of the keys are as follows:

M1: A digital human audit device decrypts, by using the private key M1, a digital human model and user information ciphertext that are provided by a digital human model production device, and then performs audit.

The user information ciphertext includes, for example, but is not limited to, identity information and a check feature of the user.

M2: The digital human model production device encrypts a produced digital human model and the user information by using the public key M2, and then sends the encrypted digital human model and user information to the digital human audit device.

M3 and M6: The digital human model production device adds a digital signature in the produced digital human model and the user information by using the private key M3, encrypts the digital human model and the user information by using the public key M6, and sends the encrypted digital human model and user information to a management center.

M4 and M5: The management center decrypts, by using the private key M5, the digital human model and the user information ciphertext that are provided by the digital human model production device, and verifies the digital signature by using the public key M4.

M8:
Usage 1: Before the user uses a digital human service, when requesting the digital human model production device to produce the digital human model, the user collects the check feature (a fingerprint, a voiceprint, a face, and the like) of the user, encrypts the check feature by using the public key M8, and sends the encrypted check feature to the digital human model production device.
Usage 2: Before the user uses the digital human service, when managing (including downloading) the digital human model of the user in the management center, the user collects the check feature (the fingerprint, the voiceprint, the face, and the like) of the user, encrypts the check feature by using the public key M8, and sends the encrypted feature to the management center.
Usage 3: When the user uses the digital human service, the terminal device collects the check feature (the fingerprint, the voiceprint, the face, and the like) of the user, encrypts the check feature by using the public key M8, and sends the encrypted check feature to the network.

M7:
Usage 1: Before the user uses the digital human service, the digital human model production device needs to send, to a user identity authentication device (for example, a device of a household registration management center) before producing the digital human model, ciphertext, such as the identity information and the check feature, provided by the user, and the user identity authentication device decrypts the check feature by using the private key M7 and then performs authentication.
Usage 2: Before the user uses the digital human service, a digital human management center device needs to send, to the user identity authentication device before the user uses the digital human model, the ciphertext, such as the identity information and the check feature, provided by the user, and the user identity authentication device decrypts the check feature by using the private key M7 and then performs authentication.
Usage 3: When the user uses the digital human service, the network sends, to the user identity authentication device, the ciphertext, such as the identity information and the check feature, provided by the user, and the user identity authentication device decrypts the identity information and the check feature by using the private key M7 and then performs authentication.

M9: When the user uses the digital human service, the terminal device performs legality authentication on the user, adds a digital signature in an authentication result by using the private key M9, and sends the authentication result to the network.

M10: When the user uses the digital human service, the network verifies, by using the public key M10, the digital signature of the authentication result sent by the terminal device; if the verification succeeds, it indicates that the authentication result is not tampered with.

It may be understood that the foregoing several keys are merely examples but not limitations.

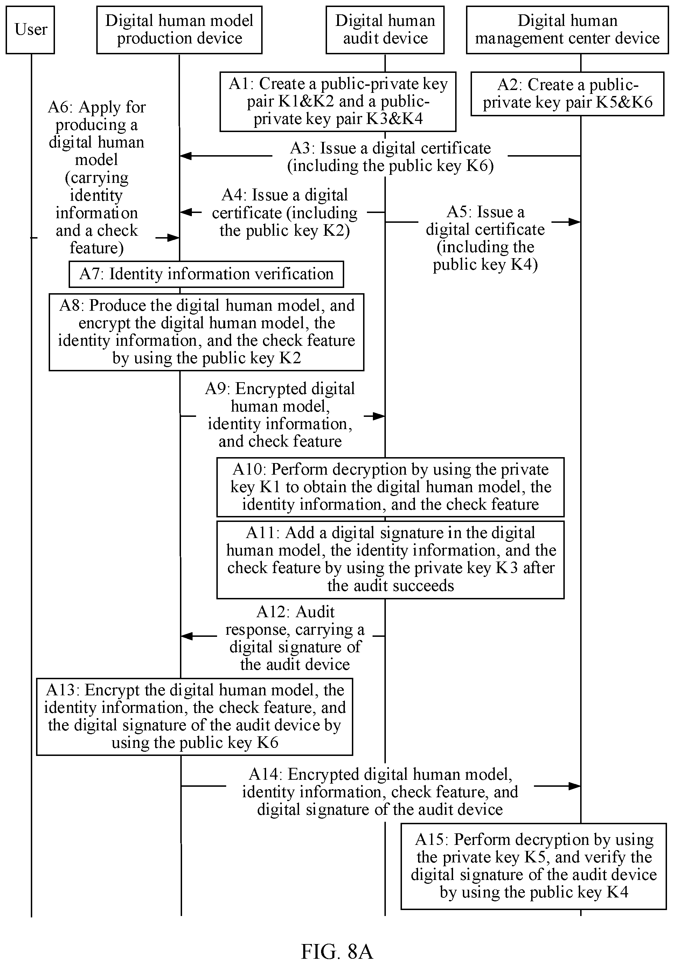

With reference to FIG. 8A, the following provides an example of related authentication of a digital human in a production, audit, and management process.

Referring to FIG. 8A, an embodiment of this application provides an authentication method, including the following steps:
A1: A digital human audit device creates a public-private key pair K1&K2 and a public-private key pair K3&K4.

The digital human audit device may be specifically an application server (Application Server, AS) network element, and may be located in a mobile network that provides a call service for a terminal device of a user (for example, an IMS network to which the terminal device belongs), or may be located outside the mobile network. This is not limited in this application.

K1 is a private key, K2 is a public key, K3 is a private key, and K4 is a public key.

A2: A digital human management center device creates a public-private key pair K5&K6.

The digital human management center device may be specifically an AS network element, and may be located in the mobile network that provides the call service for the terminal device, or may be located outside the mobile network. This is not limited in this application. For ease of description, an example in which the digital human management center device is located in the mobile network is used in this specification.

During specific implementation, a digital human management center device and a network element (for example, the MS network element shown in FIG. 1C) configured to provide a digital human service may be integrated into one entity, or may be integrated into different entities. This is not limited in this application. When the digital human management center device and the MS network element are integrated in different entities, the MS network element may obtain a digital human model and information related to the digital human model (for example, identity information and a check feature corresponding to the digital human model) from the digital human management center device.

K5 is a private key, and K6 is a public key.

A3: The digital human management center device issues a digital certificate (including the public key K6) to a digital human management center device generation device.

The digital human model production device may be specifically an AS network element, and may be located in the mobile network that provides the call service for the terminal device, or may be located outside the mobile network. This is not limited in this application.

A4: The digital human audit device issues a digital certificate (including the public key K2) to the digital human model production device.

A5: The digital human audit device issues a digital certificate (including the public key K4) to the digital human management center device.

A6: The user applies to the digital human model production device for producing a digital human (carrying identity information and a check feature that are of the user).

The identity information of the user is, for example, a name, an identity card number, or a phone number of the user. The check feature of the user is, for example, information such as a face image, a fingerprint, or an iris of the user.

A7: The digital human model production device verifies the identity information of the user, and it is assumed that the verification succeeds.

For example, identity authenticity and legality are verified.

A8: The digital human model production device produces a corresponding digital human model for the user, and encrypts the digital human model, the identity information, and the check feature that are of the user by using the public key K2.

A9: The digital human model production device sends the encrypted digital human model, identity information, and check feature to the digital human audit device.

A10: The digital human model production device performs decryption by using the private key K1, to obtain the decrypted digital human model, identity information, and check feature.

A11: The digital human model production device audits the digital human model, the identity information, and the check feature that are of the user, and adds a digital signature in the digital human model, the identity information, and the check feature by using the private key K3 after the audit succeeds.

For example, authenticity and legality of the identity of the user are audited; and legality of the digital human model of the user is audited. For example, whether the digital human model of the user matches the check feature of the user is audited.

A12: The digital human audit device returns an audit response message to the digital human model production device, where the audit response message carries a digital signature of the digital human audit device.

A13: The digital human model production device encrypts, by using the public key K6, the digital human model, the identity information, the check feature, and the digital signature of the digital human audit device that are returned by the digital human audit device.

A14: The digital human model production device sends the encrypted digital human model, identity information, check feature, and digital signature that is of the digital human audit device to the digital human management center device.

A15: The digital human management center device performs decryption by using the private key K5, to obtain the digital human model, the identity information, and the check feature that are of the user, and the digital signature of the digital human audit device; and then verifies the digital signature of the digital human audit device by using the public key K4.

If successfully verifying the digital signature of the digital human audit device, the digital human management center device determines that the digital human model, the identity information, and the check feature that are of the user are successfully audited by the digital human audit device, are legal, and can be used by the user to initiate/receive a digital human-based call. The digital human management center device binds the digital human model, the identity information, and the check feature that are of the user to registration information (such as the identity card number and the phone number) of the user.

For example, the digital human management center device stores the digital human model, the identity information, and the check feature that are of the user into the registration information of the user, the digital human management center device stores a mapping relationship between the digital human model, the identity information, and the check feature that are of the user and the registration information (such as the identity card number and the phone number) of the user, or the digital human management center device stores a mapping relationship between the digital human model, the identity information, the check feature that are of the user and the registration information (such as the identity card number and the phone number) of the user into another network element. This is not limited in this application.

In this embodiment of this application, a digital asset of the user may be alternatively superimposed in call picture content, so that user experience can be further improved.

Through the foregoing procedure, it can be ensured that only a digital human audited by the digital human audit device can enter the network and be used by the user, and the digital human can be prevented from being tampered with, thereby standardizing a process of producing, auditing, and using the digital human.

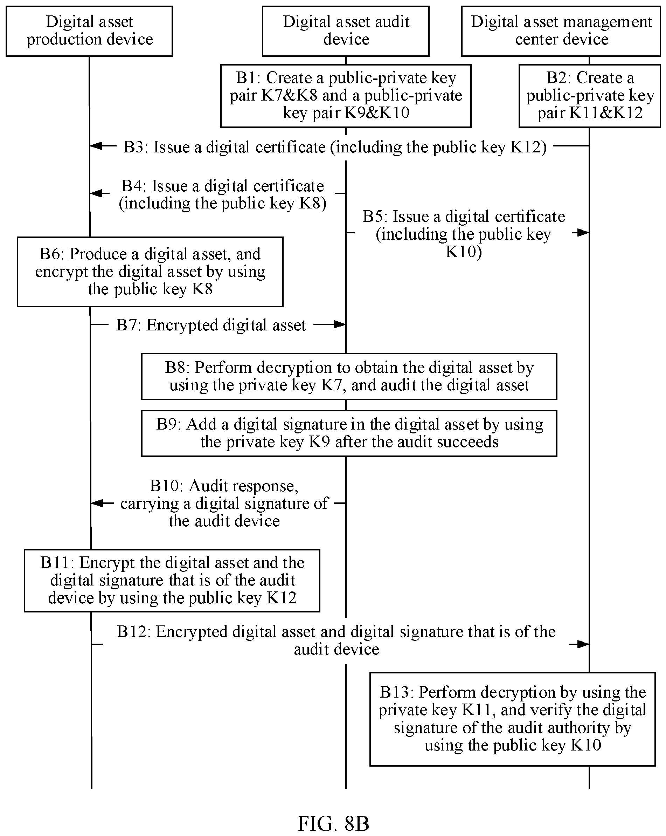

With reference to FIG. 8B, the following provides an example of related authentication in a process of producing, auditing, and managing the digital asset.

Referring to FIG. 8B, an embodiment of this application further provides an authentication method, including the following steps:
B1: A digital asset audit device creates a public-private key pair K7&K8 and a public-private key pair K9&K10.

The digital asset audit device may be specifically an AS network element, and may be located in a mobile network that provides a call service for a user, or may be located outside the mobile network. This is not limited in this application. During specific implementation, the digital asset audit device may be integrated with the foregoing digital human audit device, or may be separated from the foregoing digital human audit device. This is not limited in this application. K7 is a private key, K8 is a public key, K9 is a private key, and K10 is a public key.

B2: A digital asset management center device creates a public-private key pair K11&K12.

The digital asset management center device may be specifically an AS network element, and may be located in a mobile network that provides a call service for a terminal device, or may be located outside the mobile network. This is not limited in this application. For ease of description, an example in which the digital asset management center device is located in the mobile network is used in this specification.

During specific implementation, the digital asset management center device and a network element (the MS network element shown in FIG. 1C) configured to provide a digital human service may be integrated together, or may be separated into different network elements. This is not limited in this application.

K11 is a private key, and K12 is a public key. During specific implementation, the digital asset management center device may be integrated with the foregoing digital human management center device, or may be separated from the foregoing digital human management center device. This is not limited in this application.

B3: The digital asset management center device issues a digital certificate (including the public key K12) to a digital asset management center device generation device.

The digital asset production device may be specifically an AS network element, and may be located in the mobile network that provides the call service for the terminal device, or may be located outside the mobile network. This is not limited in this application. During specific implementation, the digital asset production device may be integrated with the foregoing digital human model production device, or may be separated from the foregoing digital human model production device. This is not limited in this application.

B4: The digital asset audit device issues a digital certificate (including the public key K8) to the digital asset production device.

B5: The digital asset audit device issues a digital certificate (including the public key K10) to the digital asset management center device.

B6: The digital asset production device is configured to produce a digital asset, and encrypts the digital asset by using the public key K8.

B7: The digital asset production device sends the encrypted digital asset to the digital asset audit device.

B8: The digital asset production device performs decryption by using the private key K7 to obtain the decrypted digital asset.

B9: The digital asset production device audits the digital asset, and adds a digital signature in the digital asset by using the private key K9 after the audit succeeds.

For example, legality of the digital asset is checked.

B10: The digital asset audit device returns an audit response message to the digital asset production device, where the message carries a digital signature of the audit device.

B11: The digital asset production device encrypts, by using the public key K12, the digital asset and the digital signature that are returned by the digital asset audit device.

B12: The digital asset production device sends the encrypted digital asset and digital signature to the digital asset management center device.

B13: The digital asset management center device performs decryption by using the private key K11 to obtain the digital asset and the digital signature, and then verifies the digital signature by using the public key K10.

If successfully verifying the digital signature of the digital asset audit device, the digital asset management center device determines that the digital asset is successfully audited by the digital asset audit device and is legal.

Through the foregoing procedure, it can be ensured that only the digital asset audited by the digital asset audit device can enter the network and be used by the user, and the digital asset can be prevented from being tampered with, thereby standardizing a process of producing, auditing, and using the digital asset.

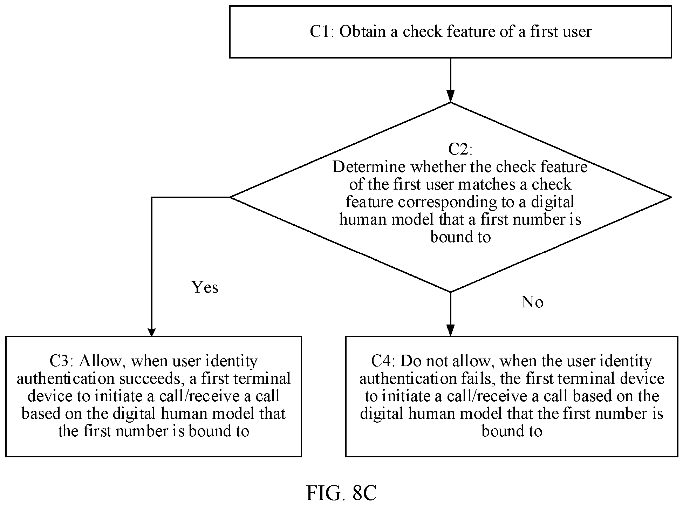

With reference to FIG. 8C, the following provides an example of related authentication of a digital human in a communication process.

An example in which a first terminal device (where, for example, the first terminal device is any terminal device in FIG. 1A or FIG. 1B) is provided with a digital human service is used. Referring to FIG. 8C, an embodiment of this application provides an authentication method. The method includes the following steps:
C1: Obtain a check feature of a first user of the first terminal device, and obtain a check feature of a digital character model bound to a first phone number of the first terminal device.

The first user is a user currently using the first terminal device. The first terminal device may collect the check feature of the first user. The check feature of the first user is, for example, a fingerprint, a voiceprint, an iris, or a face of the first user.

A scenario in which the first terminal device is triggered to collect the check feature of the first user may be that the first terminal device receives a preset operation entered by the user (for example, receives an operation of making a call or answering a call by the user), or may be that the first terminal device receives a related indication sent by a network. This is not limited in this application.

C2: Determine whether the check feature of the first user matches the check feature of the digital character model; perform C3 if the check feature of the first user matches the check feature of the digital character model; otherwise, perform C4.

According to the foregoing description of the embodiment related to FIG. 8A, the communication server stores the check feature (the fingerprint, the voiceprint, the iris, the face, or the like) of the digital human model of each user. Therefore, the check feature of the first user may be compared with the check feature of the digital character model, to determine whether the check features match each other, so as to determine whether an identity of the first user is consistent with an identity bound to the digital character model, to be specific, whether the first user has permission to use the digital character model.

C3: Allow the first terminal device to use a digital human service, for example, present a digital human image of the first user as a communication subject of the first user to a peer terminal device during a call.

C4: Not allow the first terminal device to use the digital human service.

Not allowing the first terminal device to use the digital human service may be allowing the first terminal device to use a common call service (that is, presenting and providing original call picture content of the first user to a peer end), or may be not allowing the first terminal device to use any call service (including a digital human call and a common call). This is not limited in this application.

It may be understood that the method shown in FIG. 8C may be performed by the first terminal device, or may be performed by the communication server. This is not limited in this application.

When the method shown in FIG. 8C is performed by the communication server, the method may be specifically performed by a CSCF network element in an IMS network. Further, a network element (for example, the MS network element shown in FIG. 1C) that is in the IMS network or outside the IMS network and that is specially responsible for the digital human service may trigger the CSCF network element to perform the foregoing authentication process.

For example, if detecting that a digital human service of a user of the first phone number is triggered, the MS network element sends notification information to the CSCF network element, to instruct the CSCF network element to verify an identity of a user of the first terminal device that is on a current call and that is corresponding to the first phone number (briefly referred to as a current user) (that is, the first user). Further, the CSCF network element obtains a check feature of the first user from the first terminal device, obtains a check feature of a digital character model bound to the phone number of the first terminal device from the digital human management center device, and then performs a verification process. After successfully verifying the identity of the current user of the first terminal device (that is, the check feature of the first user matches the check feature of the digital character model), the CSCF network element instructs the MS network element to continue to perform a related procedure of providing the digital human service for the user. Optionally, that the digital human service of the user of the first phone number is triggered may be specifically the MS network element receives a request for downloading the digital character model from the first terminal device, and after the CSCF network element successfully verifies an identity of the current user of the first terminal device, the MS network element delivers the digital human model to the first terminal device.

When the procedure shown in FIG. 8C is performed by the first terminal device, after obtaining a verification result (match or mismatch), the first terminal device adds a digital signature in the verification result by using a private key of the first terminal device, and then uploads, to the network, the verification result including the digital signature. The CSCF network element in the network verifies the digital signature by using a public key of the first terminal device, and determines the identity of the current user of the first terminal device based on the verification result uploaded by the first terminal device.

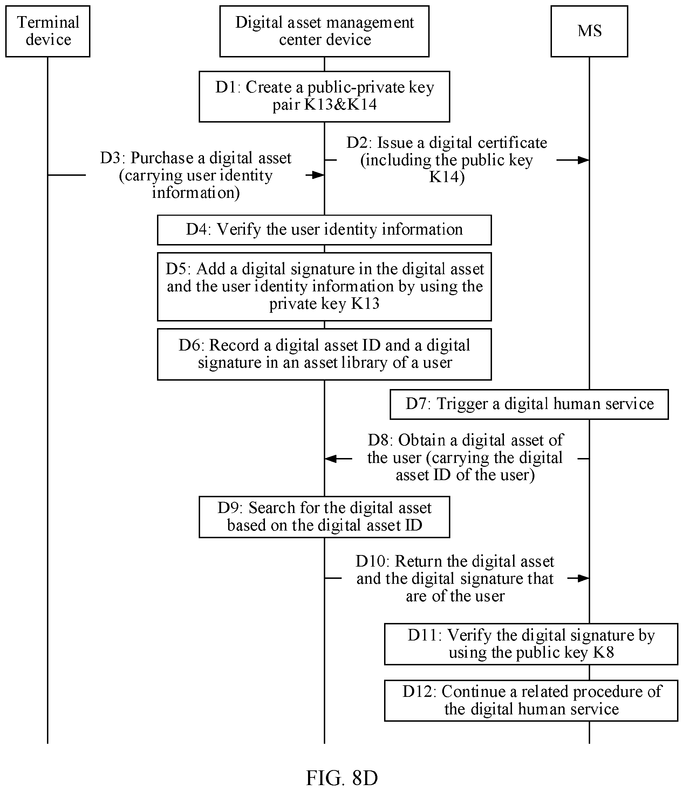

Referring to FIG. 8D, an embodiment of this application provides a digital asset purchasing method, including the following steps:
D1: A digital asset management center creates a public-private key pair K13&K14, where K13 is a private key and K14 is a public key.
D2: The digital asset management center issues a digital certificate (including the public key K14) to an MS network element.
D3: A terminal device initiates a request for purchasing a digital asset (carrying user identity information corresponding to the terminal device) to the digital asset management center.
D4: The digital asset management center verifies the user identity information.
For example, authenticity (whether an account is opened) and legality (whether a holder of the account is an adult) of the identity information are verified.
D5: The digital asset management center adds a digital signature in the digital asset and the user identity information by using the private key K13.
D6: The digital asset management center records a digital asset identifier (Identity Document, ID) and a digital signature that correspond to the digital asset in an asset library of the user, and records the digital asset ID and the digital signature.
D7: The MS network element detects that a digital human service of the user is triggered.

For example, the MS network element receives a message sent by a CSCF network element, indicating that the user requires to use a digital human of the user during the call.

D8: The MS network element sends a request (carrying the digital asset ID) for obtaining the digital asset of the user to the digital asset management center.

D9: The digital asset management center searches, based on the digital asset ID sent by the MS network element, for the corresponding digital asset and the digital signature associated with the asset.

D10: The digital asset management center returns the digital asset and the digital signature to the MS network element.

D11: The MS network element verifies the digital signature by using the public key K8.

D12: Continue a related procedure of the digital human service of the user if the verification of the digital signature succeeds.

For example, the digital asset is superimposed on a call picture corresponding to the user, rendering is performed, and a rendered call is sent to another user who is on a call with the user.

Through the foregoing procedure, the user can use, during the call, the digital asset purchased by the user, and effectively prevent the digital asset from being illegally embezzled by others, thereby standardizing a process of purchasing and using the digital asset.

It may be understood that the foregoing implementations may be separately implemented, or may be implemented in combination with each other.

The following lists several possible specific examples. In the following examples, unless otherwise specified, a network refers to an MS network element in the network.

In Example 1 to Example 10, that a caller terminal device is a terminal device A (where a caller user is a user a), a callee terminal device is a terminal device B (where a callee user is a user b), and both the user a and the user b use a digital human service is used as an example.

Example 1: Capturing, rebuilding, rendering, and authentication are implemented on a communication server.

Specifically, an example in which a digital human model is stored on a communication server, both the caller user and the callee user see a real scene of a peer end, and both the caller terminal device and the callee terminal device support a variable viewpoint (that is, the caller terminal device supports presenting a call picture based on a viewpoint of the caller user, and the callee terminal device supports presenting a call picture based on a viewpoint of the callee user) is used.

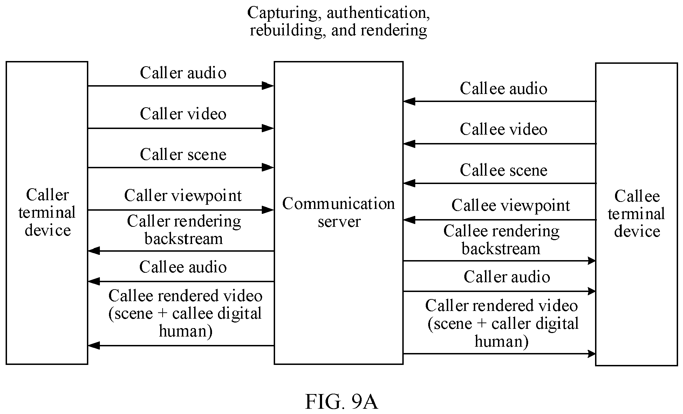

Types of data that needs to be transmitted between the caller/callee terminal device and the communication server include those shown in FIG. 9A.

Data transmission between the caller terminal device and the communication server includes the following:
The caller terminal device sends caller audio to the communication server.

The caller terminal device sends a caller video (that is, an original video of the caller user, including a real-person image of the caller user) to the communication server.

The caller terminal device sends a caller scene to the communication server.

The caller terminal device sends caller viewpoint information to the communication server.

The communication server backhauls a caller rendered video (including a digital human image of the caller user) to the caller terminal device.

The communication server sends callee audio to the caller terminal device.

The communication server sends a callee rendered video (including the digital human image of the callee user) to the caller terminal device.

Data transmission between the callee terminal device and the communication server includes the following:
The callee terminal device sends the callee audio to the communication server.

The callee terminal device sends a callee video (that is, an original video of the callee user, including a real-person image of the callee user) to the communication server.

The callee terminal device sends a callee scene A1 to the communication server.

The callee terminal device sends callee viewpoint information to the communication server.

The communication server backhauls the callee rendered video to the callee terminal device.

The communication server sends the caller audio to the callee terminal device.

The communication server sends the caller rendered video (including the digital human image of the caller user and a real scene of the caller user) to the callee terminal device.

It may be understood that, for ease of description, in the following, the original video (a video including the real-person image and the real scene that are of the caller user) of the caller user is described as the "caller video", a video (including the digital human image and/or a virtual scene picture that is/are of the caller user) that is of the caller user and obtained by performing a digital human processing operation is described as the "caller rendered video", the original video (a video including the real-person image and a real scene that are of the callee user) of the callee user is described as the "callee video", a video that is of the callee user (including the digital human image and/or a virtual scene picture that is/are of the callee user) and obtained by performing a digital human processing operation is described as "the callee rendered video".

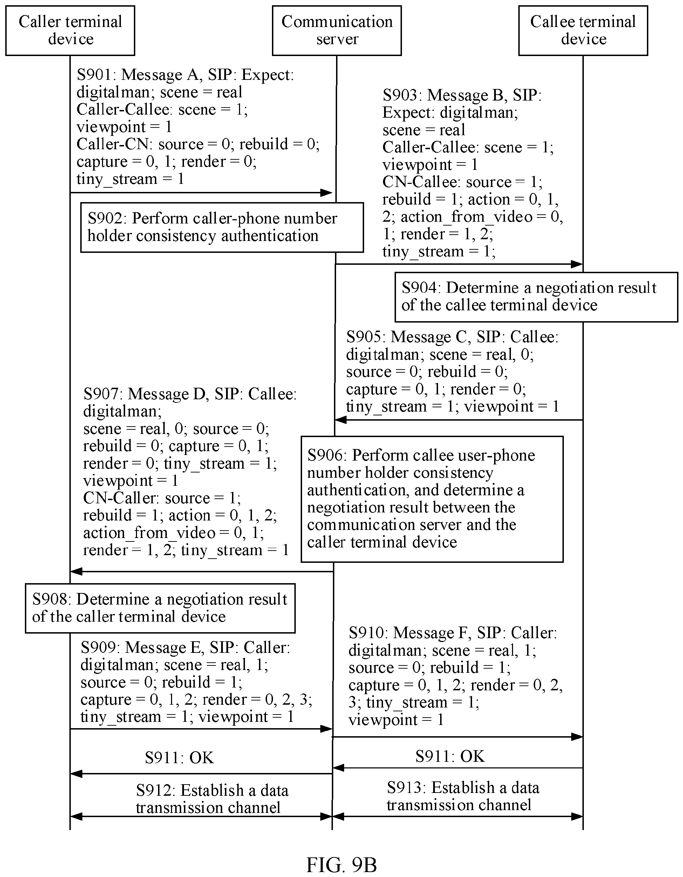

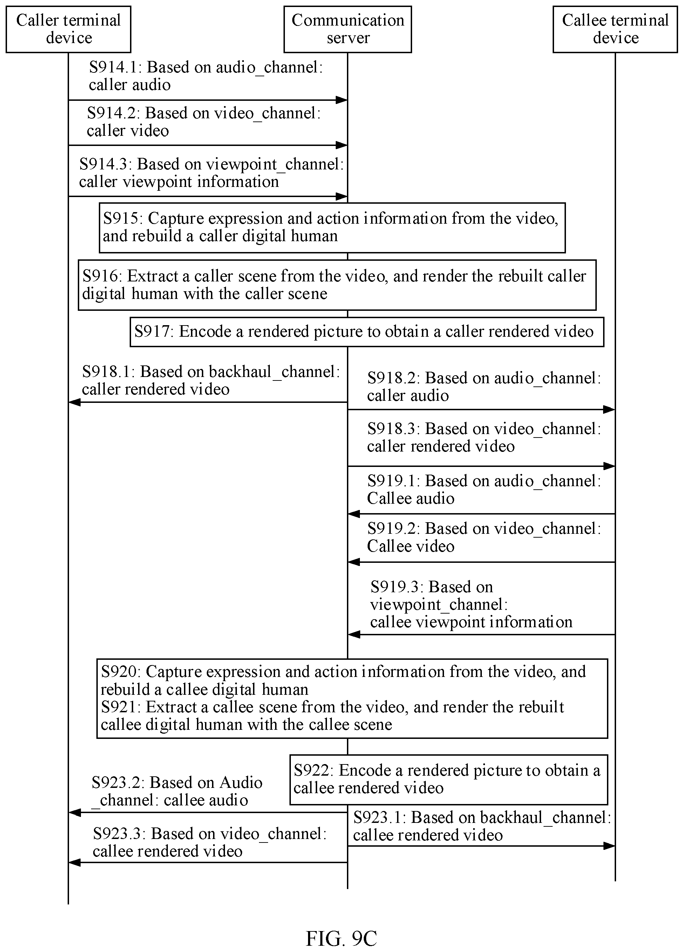

FIG. 9B and FIG. 9C each show a process of communication between a caller user, a callee user, and a communication server, and the process is described as follows:
S901: A caller terminal device sends a message A (where a message type is a SIP message) to the communication server, where the message A carries the following several parameters: a requirement of the caller user, content negotiated between the caller terminal device and a callee terminal device, and content negotiated between the caller terminal device and the communication server.
S902: The communication server performs caller-phone number holder consistency authentication, that is, verifies whether a current user of the caller terminal device is an account holder of the phone number corresponding to the caller terminal device, and performs a next step, namely, S903, after the verification succeeds.
S903: The communication server sends a message B (where a message type is the SIP message) to the callee terminal device, where the message B carries the following several parameters: the requirement of the caller user, the content negotiated between the caller terminal device and the callee terminal device, and content negotiated between the communication server and the callee terminal device.
S904: The callee terminal device determines a negotiation result of the callee terminal device based on a requirement of the callee user, call additional service capability information of the callee terminal device, and the parameters carried in the message B.
S905: The callee terminal device sends a message C (where a message type is the SIP message) to the communication server, where the message C carries the following parameter: the negotiation result of the callee terminal device.
S906: The communication server performs callee-phone number holder consistency authentication, that is, verifies whether a current user of the callee terminal device is an account holder of the phone number corresponding to the callee terminal device, and determines a negotiation result between the communication server and the caller terminal device after the verification succeeds.
S907: The communication server sends a message D (where a message type is the SIP message) to the caller terminal device, where the message D carries the following several parameters: the negotiation result of the callee terminal device and the negotiation result between the communication server and the caller terminal device.
S908: The caller terminal device confirms a negotiation result of the caller terminal device based on the negotiation result of the callee terminal device and the negotiation result between the communication server and the caller terminal device.
S909: The caller terminal device sends a message E (where a message type is the SIP message) to the communication server, where the message E carries the following parameter: the negotiation result of the caller terminal device.
S910: The communication server sends a message F (where a message type is the SIP message) to the callee terminal device, where the message F carries the following parameter: the negotiation result of the caller terminal device.

For descriptions of the parameters involved in the foregoing steps, refer to Table 2. Details are not described herein again.

S911: The callee terminal device sends an "OK" message to the communication server, and the communication server sends an "OK" message to the caller terminal device, where the "OK" message indicates that parameter interaction is completed.

S912: The caller terminal device establishes a transmission channel with the communication server.

Step S913: The callee terminal device establishes a transmission channel with the communication server.

Types of the data transmission channels that need to be established include audio_channel, video_channel, backhaul_channel, and viewpoint channel.

S914. 1: The caller terminal device sends caller audio to the communication server based on audio _channel.

S914.2: The caller terminal device sends a caller video to the communication server based on video _channel.

S914.3: The caller terminal device sends caller viewpoint information to the communication server based on viewpoint channel.

It may be understood that S914.1, S914.2, and S914.3 are not sequenced.

S915: The communication server captures a drive parameter (for example, information such as an expression and an action) and scene information from the video, and then rebuilds a digital human of the caller user based on the information such as a sound and the expression.

S916: Render the rebuilt digital human of the caller user with a scene of the caller user to obtain a rendered picture.

S917: Code the rendered picture to obtain a caller rendered video.

S918.1: The communication server sends the caller rendered video to the caller terminal device based on backhaul _channel.

S918.2: The communication server sends the caller audio to the callee terminal device based on audio _channel.

S918.3: The communication server sends the caller rendered video to the callee terminal device based on video _channel.

It may be understood that S918.1, S918.2, and S918.3 are not sequenced.

The callee terminal device may play call picture content of the caller. For example, after receiving the caller rendered video, the callee terminal device may load the caller rendered video to a display screen for display, and may further play the caller audio.

After receiving the caller rendered video, the caller terminal device may also load the caller rendered video to a display screen for display, and may further play the caller audio. In this way, the caller user can watch a replay of call picture content of a local end.

S919.1: The callee terminal device sends callee audio to the communication server based on audio _channel.

S919.2: The callee terminal device sends a callee video to the communication server based on video _channel.

S919.3: The callee terminal device sends callee viewpoint information to the communication server based on viewpoint channel.

It may be understood that S919.1, S919.2, and S919.3 are not sequenced.

S920: The communication server captures a drive parameter and scene information from the video, and then rebuilds a digital human of the callee user based on the drive parameter.

S921: Render the rebuilt digital human of the callee user with a scene of the callee user to obtain a rendered picture.

S922: Code the rendered picture to obtain a callee rendered video.

S923.1: The communication server sends the callee rendered video to the callee terminal device based on backhaul_channel.

S923.2: The communication server sends the callee audio to the caller terminal device based on audio _channel.

S923.3: The communication server sends the callee rendered video to the caller terminal device based on video _channel.

It may be understood that S923.1, S923.2, and S923.3 are not sequenced.

The caller terminal device may play call picture content of the callee. For example, after receiving the callee rendered video of the callee user, the caller terminal device may load the callee rendered video to the display screen for display, and may further play the callee audio.

After receiving the callee rendered video, the callee terminal device may also load the callee rendered video to the display screen for display, and may further play the callee audio, so that the callee user can watch call picture content of the callee user.

In Example 1, a terminal device may express a call requirement of a user to the communication server and a peer terminal device, to implement a technical effect of providing call picture content of a local end for a peer end based on the user requirement and presenting, at the local end based on the user requirement, call picture content provided by the peer end, that is, both the caller user and the callee user make a call in a digital human image, and both the caller user and the callee user see that a digital human of the peer end is in a real scene of the peer end. In addition, by exchanging call additional service capability information, the communication server and the terminal device clarify division of work (that is, operations that need to be performed by the devices) between the terminal device and the communication server in a process of providing a digital human service for the user, so that capturing, rebuilding, rendering, and authentication (for example, user-phone number holder consistency authentication) are all implemented on the communication server, and a data transmission channel required by the digital human service is established based on the division of work. In addition, through authentication, secure and legal use of the digital human service are ensured in a call scenario.

Example 2: Capturing is implemented on a terminal device, and authentication, rebuilding, and rendering are implemented on a communication server.

Specifically, an example in which a digital human model is stored on the communication server, capturing is implemented on the terminal device, rebuilding and rendering are implemented on the communication server, both the caller user and the callee user see a real scene of a peer end, and neither the caller terminal device nor the callee terminal device supports a variable viewpoint is used.

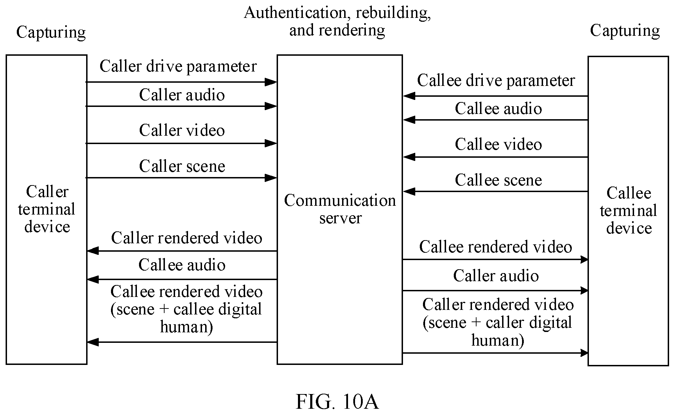

Types of data that needs to be transmitted between the caller/callee user and the communication server include those shown in FIG. 10A.

Data transmission between the caller terminal device and the communication server includes the following:
The caller terminal device sends a caller drive parameter to the communication server.

The caller terminal device sends caller audio to the communication server.

The caller terminal device sends a caller video to the communication server.

The caller terminal device sends a caller scene to the communication server.

The communication server backhauls a caller rendered video to the caller terminal device.

The communication server sends callee audio to the caller terminal device.

The communication server sends a callee rendered video to the caller terminal device.

Data transmission between the callee terminal device and the communication server includes the following:
The callee terminal device sends a callee drive parameter to the communication server.

The callee terminal device sends the callee audio to the communication server.

The callee terminal device sends a callee video to the communication server.

The callee terminal device sends a callee scene to the communication server.

The communication server backhauls the callee rendered video to the callee terminal device.

The communication server sends the caller audio to the callee terminal device.

The communication server sends the caller rendered video to the callee terminal device.

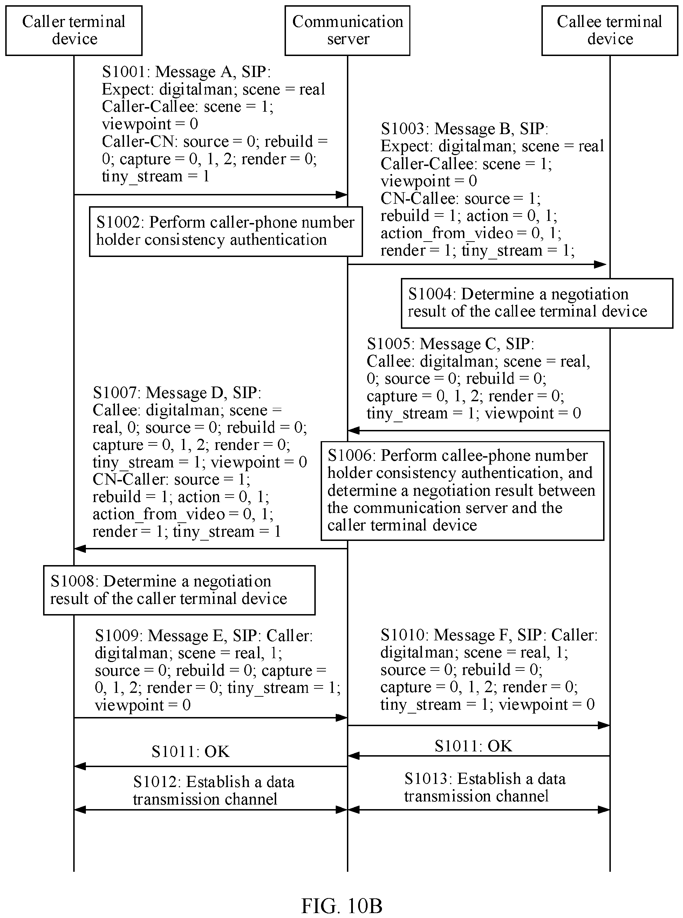

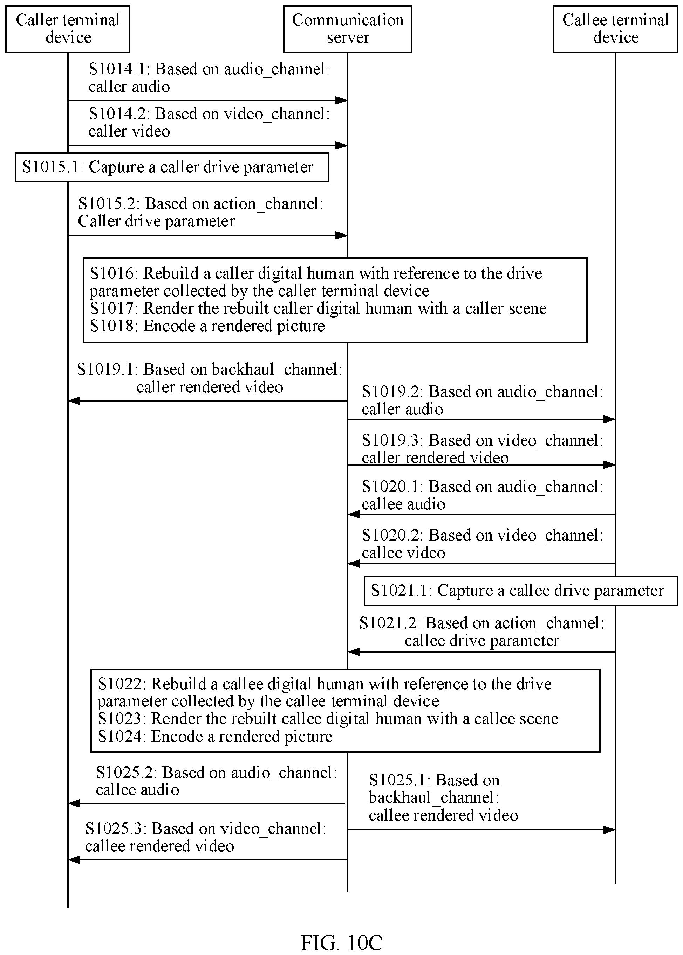

FIG. 10B and FIG. 10C each show a process of communication between a caller user, a callee user, and a communication server, and the process is described as follows:
S1001: A caller terminal device sends a message A to the communication server, where the message A carries the following several parameters: a requirement of the caller user, content negotiated between the caller terminal device and a callee terminal device, and content negotiated between the caller terminal device and the communication server.
S1002: The communication server performs caller-phone number holder consistency authentication, that is, verifies whether a current user of the caller terminal device is an account holder of the phone number corresponding to the caller terminal device, and performs a next step, namely, S1003, after the verification succeeds.
S1003: The communication server sends a message B to the callee terminal device, where the message B carries the following several parameters: the requirement of the caller user, the content negotiated between the caller terminal device and the callee terminal device, and content negotiated between the communication server and the callee terminal device.
S 1004: The callee terminal device determines a negotiation result of the callee terminal device based on a requirement of the callee user, call additional service capability information of the callee terminal device, and the parameters carried in the message B.
S1005: The callee terminal device sends a message C to the communication server, where the message C carries the following parameter: the negotiation result of the callee terminal device.
S1006: The communication server performs callee-phone number holder consistency authentication, that is, verifies whether a current user of the callee terminal device is an account holder of the phone number corresponding to the callee terminal device, and determines a negotiation result between the communication server and the caller terminal device after the verification succeeds.
S1007: The communication server sends a message D to the caller terminal device, where the message D carries the following several parameters: the negotiation result of the callee terminal device and the negotiation result between the communication server and the caller terminal device.
S1008: The caller terminal device confirms a negotiation result of the caller terminal device based on the negotiation result of the callee terminal device and the negotiation result between the communication server and the caller terminal device.
S1009: The caller terminal device sends a message E to the communication server, where the message E carries the following parameter: the negotiation result of the caller terminal device.
S1010: The communication server sends a message F to the callee terminal device, where the message F carries the following parameter: the negotiation result of the caller terminal device.

For descriptions of the parameters involved in the foregoing steps, refer to Table 2. Details are not described herein again.

S1011: The callee terminal device sends an "OK" message to the communication server, and the communication server sends an "OK" message to the caller terminal device, where the "OK" message indicates that parameter interaction is completed.

S1012: The caller terminal device establishes a transmission channel with the communication server.

Step S1013: The callee terminal device establishes a transmission channel with the communication server.

Types of the data transmission channels that to be established include audio_channel, video_channel, backhaul_channel, and action_channel.

S1014.1: The caller terminal device sends caller audio to the communication server based on audio _channel.

S1014.2: The caller terminal device sends a caller video to the communication server based on video _channel.

It may be understood that S1014.1 and S1014.2 are not sequenced.

S1015.1: The caller terminal device captures a caller drive parameter.

S1015.2: The caller terminal device sends the caller drive parameter to the communication server based on action _channel.

S1016: The communication server rebuilds a caller digital human based on the caller drive parameter.

S1017: The communication server renders the rebuilt caller digital human with a scene of the caller user to obtain a rendered picture.

S1018: The communication server encodes the rendered picture to obtain a caller rendered video.

S1019.1: The communication server sends the caller rendered video to the caller terminal device based on backhaul _channel.

S1019.2: The communication server sends the caller audio to the callee terminal device based on audio _channel.

S1019.3: The communication server sends the caller rendered video to the callee terminal device based on video _channel.

It may be understood that S1019.1, S1019.2, and S1019.3 are not sequenced.

After receiving the caller rendered video, the callee terminal device may load the caller rendered video to a display screen for display, and may further play the caller audio.

After receiving the caller rendered video, the caller terminal device may also load the caller rendered video to a display screen for display, and may further play the caller audio. In this way, the caller user can watch a replay of call picture content of a local end.

S1020.1: The callee terminal device sends callee audio to the communication server based on audio _channel.

S1020.2: The callee terminal device sends a callee video to the communication server based on video _channel.

It may be understood that S1020.1 and S1020.2 are not sequenced.

S1021.1: The callee terminal device captures a callee drive parameter.

S1021.2: The callee terminal device sends the callee drive parameter to the communication server.

S1022: The communication server rebuilds a digital human of the callee user based on the callee drive parameter.

S1023: The communication server renders the rebuilt digital human of the callee user with a scene of the callee user to obtain a rendered picture.

S1024: The communication server encodes the rendered picture to obtain a callee rendered video.

S1025.1: The communication server sends the callee rendered video to the callee terminal device based on backhaul _channel.

S1025.2: The communication server sends the callee audio to the caller terminal device based on audio _channel.

S1025.3: The communication server sends the callee rendered video to the caller terminal device based on video_channel.

It may be understood that S1025.1, S1025.2, and S1025.3 are not sequenced.

After receiving the callee rendered video of the callee user, the caller terminal device may load the callee rendered video to the display screen for display, and may further play the callee audio.

After receiving the callee rendered video, the callee terminal device may also load the callee rendered video to the display screen for display, and may further play the callee audio, so that the callee user can watch call picture content of the callee user.

In Example 2, a terminal device may express a call requirement of a user to the communication server and a peer terminal device, to implement a technical effect of providing call picture content of a local end for a peer end based on the user requirement and presenting, at the local end based on the user requirement, call picture content provided by the peer end, that is, both the caller user and the callee user make a call in a digital human image, and both the caller user and the callee user see that a digital human of the peer end is in a real scene of the peer end. In addition, by exchanging call additional service capability information, the communication server and the terminal device clarify division of work (that is, operations that need to be performed by the devices) between the terminal device and the communication server in a process of providing a digital human service for the user, so that capturing is implemented on the terminal device, rebuilding, rendering, and authentication (for example, user-phone number holder consistency authentication) are implemented on the communication server, and a data transmission channel required by the digital human service is established based on the division of work. In addition, through authentication, secure and legal use of the digital human service are ensured in a call scenario.

Example 3: Rebuilding is implemented on a terminal device, and authentication, capturing, and rendering are implemented on a communication server.

Specifically, an example in which a digital human model is stored on the communication server, capturing and rendering are implemented on the communication server, rebuilding is implemented on the terminal device, both the caller user and the callee user see a real scene of a peer end, and neither the caller terminal device nor the callee terminal device supports a variable viewpoint is used.

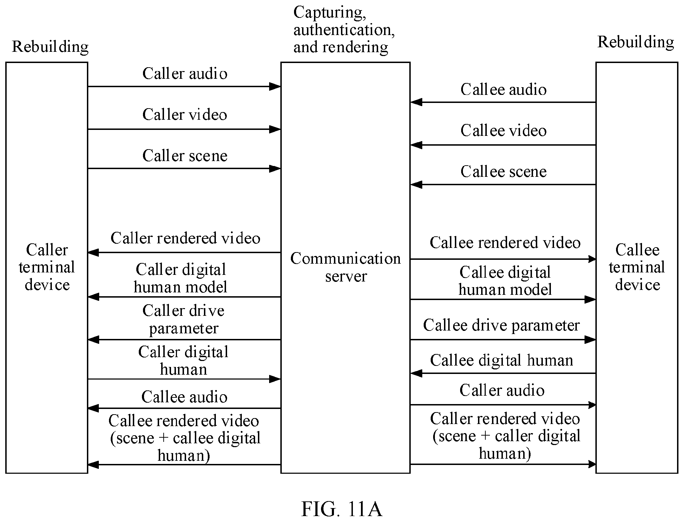

Types of data that needs to be transmitted between the caller/callee user and the communication server include those shown in FIG. 11A.

Data transmission between the caller terminal device and the communication server includes the following:
The caller terminal device sends caller audio to the communication server.

The caller terminal device sends a caller video to the communication server.

The caller terminal device sends a caller scene to the communication server.

The communication server backhauls a caller rendered video to the caller terminal device.

The communication server sends a caller digital human model to the caller terminal device.

The communication server sends a caller drive parameter to the caller terminal device.

The caller terminal device sends a caller digital human (that is, dynamic data of the caller digital human) rebuilt by the caller to the communication server.

The communication server sends callee audio to the caller terminal device.

The communication server sends a callee rendered video to the caller terminal device.

Data transmission between the callee terminal device and the communication server includes the following:
The callee terminal device sends the callee audio to the communication server.

The callee terminal device sends a callee video to the communication server.

The callee terminal device sends a callee scene to the communication server.

The communication server backhauls the callee rendered video to the callee terminal device.

The communication server sends a callee digital human model to the callee terminal device.

The communication server sends a callee drive parameter to the callee terminal device.

The callee terminal device sends a callee digital human (that is, dynamic data of the callee digital human) rebuilt by the callee to the communication server.

The communication server sends the caller audio to the callee terminal device.

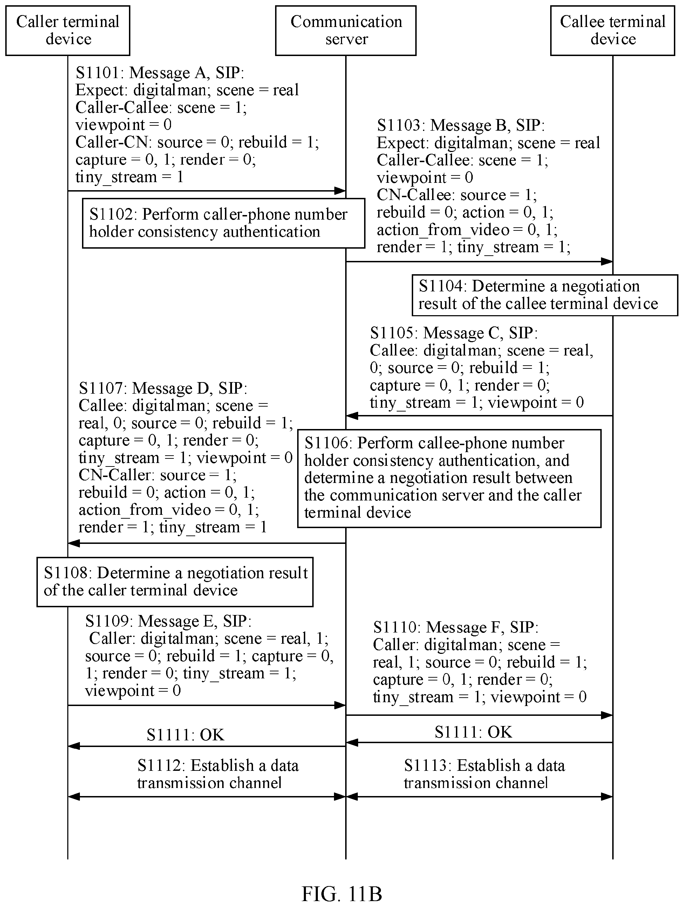

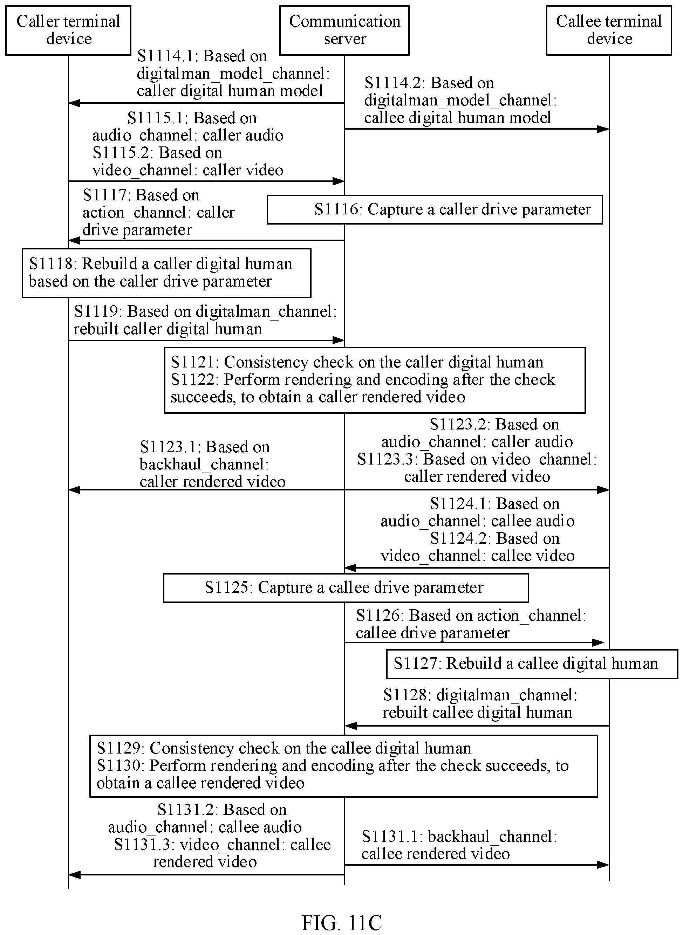

The communication server sends the caller rendered video to the callee terminal device. FIG. 11B and FIG. 11C each show a process of communication between a caller user, a callee user, and a communication server, and the process is described as follows:
S1101: A caller terminal device sends a message A to the communication server, where the message A carries the following several parameters: a requirement of the caller user, content negotiated between the caller terminal device and a callee terminal device, and content negotiated between the caller terminal device and the communication server.

S1102: The communication server performs caller-phone number holder consistency authentication, that is, verifies whether a current user of the caller terminal device is an account holder of the phone number corresponding to the caller terminal device, and performs a next step, namely, S1103, after the verification succeeds.

S1103: The communication server sends a message B to the callee terminal device, where the message B carries the following several parameters: the requirement of the caller user, the content negotiated between the caller terminal device and the callee terminal device, and content negotiated between the communication server and the callee terminal device.

S1104: The callee terminal device determines a negotiation result of the callee terminal device based on a requirement of the callee user, call additional service capability information of the callee terminal device, and the parameters carried in the message B.

S1105: The callee terminal device sends a message C to the communication server, where the message C carries the following parameter: the negotiation result of the callee terminal device.

S1106: The communication server performs callee-phone number holder consistency authentication, that is, verifies whether a current user of the callee terminal device is an account holder of the phone number corresponding to the callee terminal device, and determines a negotiation result between the communication server and the caller terminal device after the verification succeeds.

S1107: The communication server sends a message D to the caller terminal device, where the message D carries the following several parameters: the negotiation result of the callee terminal device and the negotiation result between the communication server and the caller terminal device.

S1108: The caller terminal device confirms a negotiation result of the caller terminal device based on the negotiation result of the callee terminal device and the negotiation result between the communication server and the caller terminal device.

S1109: The caller terminal device sends a message E to the communication server, where the message E carries the following parameter: the negotiation result of the caller terminal device.

S1110: The communication server sends a message F to the callee terminal device, where the message F carries the following parameter: the negotiation result of the caller terminal device.

For descriptions of the parameters involved in the foregoing steps, refer to Table 2. Details are not described herein again.

S1111: The callee terminal device sends an "OK" message to the communication server, and the communication server sends an "OK" message to the caller terminal device, where the "OK" message indicates that parameter interaction is completed.

S1112: The caller terminal device establishes a transmission channel with the communication server.

Step S1113: The callee terminal device establishes a transmission channel with the communication server.

Types of data transmission channels that need to be established include audio_channel, video_channel, backhaul_channel, action_channel, digitalman _channel, and digitalman_model_channel.

S1114.1: The caller terminal device downloads a caller digital human model from the communication server based on digitalman_model_channel.

S1114.2: The callee terminal device downloads a callee digital human model from the communication server based on digitalman_model_channel.

It may be understood that S1114.1 and S1114.2 are not sequenced.

S1115.1: The caller terminal device sends caller audio to the communication server based on audio _channel.

S1115.2: The caller terminal device sends a caller video to the communication server based on video _channel.

It may be understood that S1115.1 and S1115.2 are not sequenced.

S1116: The communication server captures a caller drive parameter.

S1117: The communication server sends the caller drive parameter to the caller terminal device based on action _channel.

S1118: The caller terminal device rebuilds a caller digital human based on the caller drive parameter.

S1119: The caller terminal device sends the rebuilt caller digital human to the communication server based on digitalman_channel.

S1121: The communication server performs consistency check on the caller digital human.

S1122: After the consistency check on the caller digital human succeeds, the communication server renders the rebuilt caller digital human with a scene of the caller user to obtain a rendered picture, and encodes the rendered picture to obtain a caller rendered video.

S1123.1: The communication server sends the caller rendered video to the caller terminal device based on backhaul _channel.

S1123.2: The communication server sends the caller audio to the callee terminal device based on audio _channel.

S1123.3 : The communication server sends the caller rendered video to the callee terminal device based on video _channel.

It may be understood that S1123.1, S1123.2, and S1123.3 are not sequenced.

After receiving the caller rendered video, the callee terminal device may load the caller rendered video to a display screen for display, and may further play the caller audio.

After receiving the caller rendered video, the caller terminal device may also load the caller rendered video to a display screen for display, and may further play the caller audio. In this way, the caller user can watch a replay of call picture content of a local end.

S1124.1: The callee terminal device sends callee audio to the communication server based on audio _channel.

S1124.2: The callee terminal device sends a callee video to the communication server based on video_channel.

It may be understood that S1124.1 and S1124.2 are not sequenced.

S1125: The communication server captures a callee drive parameter.

S1126: The communication server sends the callee drive parameter to the callee terminal device based on action _channel.

S1127: The callee terminal device rebuilds a callee digital human based on the callee drive parameter.

S1128: The callee terminal device sends the rebuilt callee digital human to the communication server based on digitalman_channel.

S1129: The communication server performs consistency check on the callee digital human.

S1130: After the consistency check on the callee digital human succeeds, the communication server renders the rebuilt callee digital human with a scene of the callee user to obtain a rendered picture, and encodes the rendered picture to obtain a callee rendered video.

S1131.1: The communication server sends the callee rendered video to the callee terminal device based on backhaul _channel.

S1131.2: The communication server sends the callee audio to the caller terminal device based on audio _channel.

S1131.3: The communication server sends the callee rendered video to the caller terminal device based on video _channel.

It may be understood that S1131.1, S1131.2, and S1131.3 are not sequenced.

After receiving the callee rendered video, the caller terminal device may load the callee rendered video to the display screen for display, and may further play the callee audio.

After receiving the callee rendered video, the callee terminal device may also load the callee rendered video to the display screen for display, and may further play the callee audio, so that the callee user can watch a replay of call picture content of a local end.

In Example 3, a terminal device may express a call requirement of a user to the communication server and a peer terminal device, to implement a technical effect of providing call picture content of a local end for a peer end based on the user requirement and presenting, at the local end based on the user requirement, call picture content provided by the peer end, that is, both the caller user and the callee user make a call in a digital human image, and both the caller user and the callee user see that a digital human of the peer end is in a real scene of the peer end. In addition, by exchanging call additional service capability information, the communication server and the terminal device clarify division of work (that is, operations that need to be performed by the devices) between the terminal device and the communication server in a process of providing a digital human service for the user, so that rebuilding is implemented on the terminal device, capturing, rendering, and authentication (for example, user-phone number holder consistency authentication) are implemented on the communication server, and a data transmission channel required by the digital human service is established based on the division of work. In addition, through authentication, secure and legal use of the digital human service are ensured in a call scenario.

Example 4: Capturing and rebuilding are implemented on a terminal device, and authentication and rendering are implemented on a communication server.

Specifically, an example in which a digital human model is stored on the communication server, rendering is implemented on the communication server, capturing and rebuilding are implemented on the terminal device, both the caller user and the callee user see a real scene of a peer end, and a variable viewpoint is not supported is used.

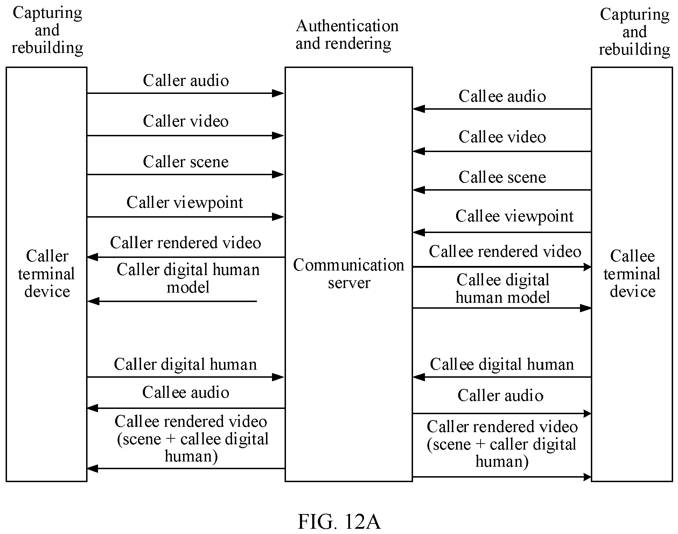

Types of data that needs to be transmitted between the caller/callee user and the communication server include those shown in FIG. 12A.

Data transmission between the caller terminal device and the communication server includes the following:
The caller terminal device sends caller audio to the communication server.

The caller terminal device sends a caller video to the communication server.

The caller terminal device sends a caller scene to the communication server.

The caller terminal device sends caller viewpoint BIB information to the communication server.

The communication server backhauls a caller rendered video to the caller terminal device.

The communication server sends a caller digital human model to the caller terminal device.

The caller terminal device sends a caller digital human rebuilt by the caller to the communication server.

The communication server sends callee audio to the caller terminal device.

The communication server sends a callee rendered video to the caller terminal device.

Data transmission between the callee terminal device and the communication server includes the following:
The callee terminal device sends the callee audio to the communication server.

The callee terminal device sends a callee video to the communication server.

The callee terminal device sends a callee scene to the communication server.

The callee terminal device sends callee viewpoint information to the communication server.

The communication server backhauls the callee rendered video to the callee terminal device.

The communication server sends a callee digital human model to the callee terminal device.

The callee terminal device sends a callee digital human rebuilt by the callee to the communication server.

The communication server sends the caller audio to the callee terminal device.

The communication server sends the caller rendered video to the callee terminal device.

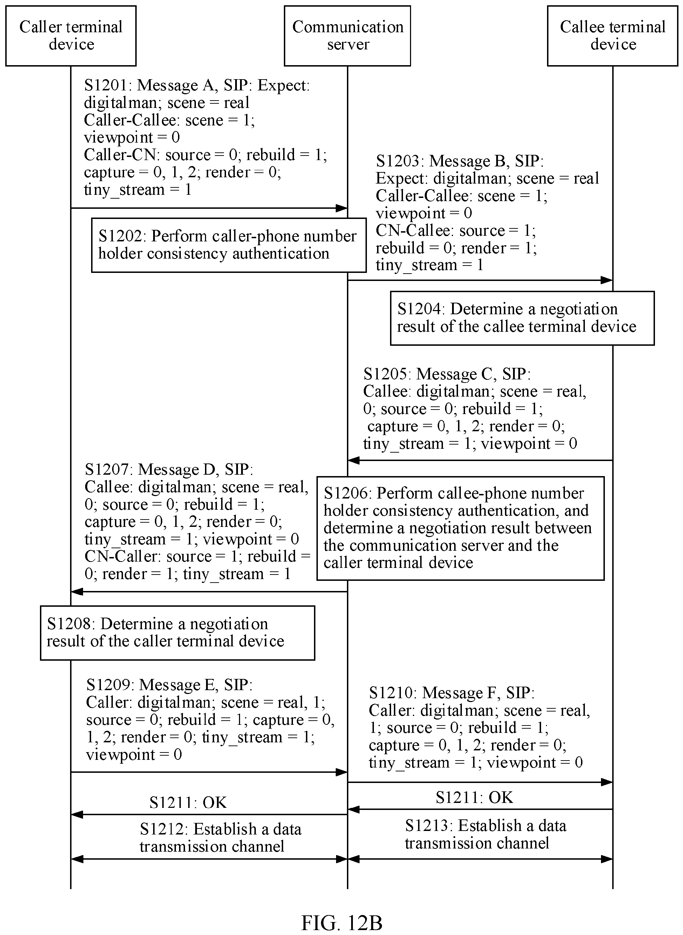

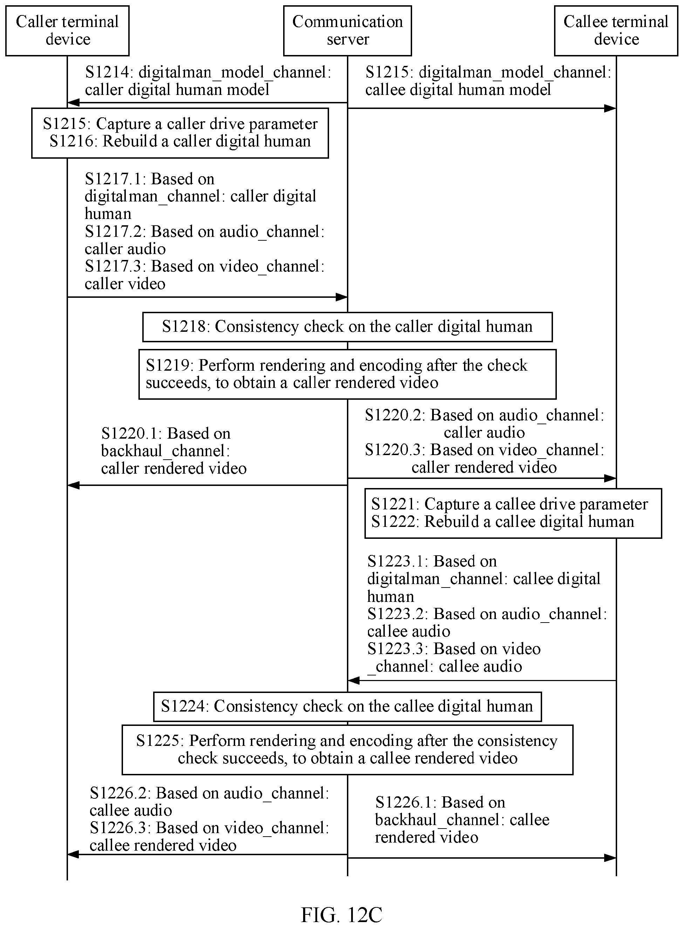

FIG. 12B and FIG. 12C each show a process of communication between a caller user, a callee user, and a communication server, and the process is described as follows:
S1201: A caller terminal device sends a message A to the communication server, where the message A carries the following several parameters: a requirement of the caller user, content negotiated between the caller terminal device and a callee terminal device, and content negotiated between the caller terminal device and the communication server.
S1202: The communication server performs caller-phone number holder consistency authentication, that is, verifies whether a current user of the caller terminal device is an account holder of the phone number corresponding to the caller terminal device, and performs a next step, namely, S1203, after the verification succeeds.
S1203: The communication server sends a message B to the callee terminal device, where the message B carries the following several parameters: the requirement of the caller user, the content negotiated between the caller terminal device and the callee terminal device, and content negotiated between the communication server and the callee terminal device.
S1204: The callee terminal device determines a negotiation result of the callee terminal device based on a requirement of the callee user, call additional service capability information of the callee terminal device, and the parameters carried in the message B.
S1205: The callee terminal device sends a message C to the communication server, where the message C carries the following parameter: the negotiation result of the callee terminal device.
S1206: The communication server performs callee-phone number holder consistency authentication, that is, verifies whether a current user of the callee terminal device is an account holder of the phone number corresponding to the callee terminal device, and determines a negotiation result between the communication server and the caller terminal device after the verification succeeds.
S1207: The communication server sends a message D to the caller terminal device, where the message D carries the following several parameters: the negotiation result of the callee terminal device and the negotiation result between the communication server and the caller terminal device.
S1208: The caller terminal device confirms a negotiation result of the caller terminal device based on the negotiation result of the callee terminal device and the negotiation result between the communication server and the caller terminal device.
S1209: The caller terminal device sends a message E to the communication server, where the message E carries the following parameter: the negotiation result of the caller terminal device.
S1210: The communication server sends a message F to the callee terminal device, where the message F carries the following parameter: the negotiation result of the caller terminal device.
For descriptions of the parameters involved in the foregoing steps, refer to Table 2. Details are not described herein again.
S1211: The callee terminal device sends an "OK" message to the communication server, and the communication server sends an "OK" message to the caller terminal device, where the "OK" message indicates that parameter interaction is completed.
S1212: The caller terminal device establishes a transmission channel with the communication server.
Step S1213: The callee terminal device establishes a transmission channel with the communication server.

Types of data transmission channels that need to be established include audio_channel, video_channel, backhaul_channel, digitalman_channel, and digitalman_model_channel.

S1214.1: The caller terminal device downloads a caller digital human model from the communication server based on digitalman_model_channel.

S1214.2: The callee terminal device downloads a callee digital human model from the communication server based on digitalman_model_channel.

It may be understood that S1214.1 and S1214.2 are not sequenced.

S1215: The caller terminal device captures a caller drive parameter.

S1216: The caller terminal device rebuilds a caller digital human based on the caller drive parameter.

S1217.1: The caller terminal device sends the rebuilt caller digital human to the communication server based on digitalman_channel.

S1217.2: The caller terminal device sends caller audio to the communication server based on audio _channel.

S1217.3: The caller terminal device sends a caller video to the communication server based on video _channel.

It may be understood that 1217.1, 1217.2, and 1217.3 are not sequenced.

S1218: The communication server performs consistency check on the caller digital human.

S1219: After the consistency check on the caller digital human succeeds, the communication server renders the rebuilt caller digital human with a scene of the caller user to obtain a rendered picture, and encodes the rendered picture to obtain a caller rendered video.

S1220.1: The communication server sends the caller rendered video to the caller terminal device based on backhaul_channel.

S 1220.2: The communication server sends the caller audio to the callee terminal device based on audio _channel.

S1220.3 : The communication server sends the caller rendered video to the callee terminal device based on video _channel.

It may be understood that S1220.1, S1220.2, and S1220.3 are not sequenced.

After receiving the caller rendered video, the callee terminal device may load the caller rendered video to a display screen for display, and may further play the caller audio.

After receiving the caller rendered video, the caller terminal device may also load the caller rendered video to a display screen for display, and may further play the caller audio. In this way, the caller user can watch a replay of call picture content of a local end.

S1221: The callee terminal device captures a callee drive parameter.

S1222: The callee terminal device rebuilds a callee digital human based on the callee drive parameter.

S1223.1: The callee terminal device sends the rebuilt callee digital human to the communication server based on digitalman_channel.

S1223.2: The callee terminal device sends callee audio to the communication server based on audio_channel.

S1223.3 : The callee terminal device sends a callee video to the communication server based on video _channel.

It may be understood that 1223.1, 1223.2, and 1223.3 are not sequenced.

S1224: The communication server performs consistency check on the callee digital human.

S1225: After the consistency check on the callee digital human succeeds, the communication server renders the rebuilt callee digital human with a scene of the callee user to obtain a rendered picture, and encodes the rendered picture to obtain a callee rendered video.

S1226.1: The communication server sends the callee rendered video to the callee terminal device based on backhaul _channel.

S 1226.2: The communication server sends the callee audio to the caller terminal device based on audio _channel.

S1226.3 : The communication server sends the callee rendered video to the caller terminal device based on video _channel.

It may be understood that S1226.1, S1226.2, and S1226.3 are not sequenced.

After receiving the callee rendered video, the caller terminal device may load the callee rendered video to the display screen for display, and may further play the callee audio.

After receiving the callee rendered video, the callee terminal device may also load the callee rendered video to the display screen for display, and may further play the callee audio, so that the callee user can watch a replay of call picture content of a local end.

In Example 4, a terminal device may express a call requirement of a user to the communication server and a peer terminal device, to implement a technical effect of providing call picture content of a local end for a peer end based on the user requirement and presenting, at the local end based on the user requirement, call picture content provided by the peer end, that is, both the caller user and the callee user make a call in a digital human image, and both the caller user and the callee user see that a digital human of the peer end is in a real scene of the peer end. In addition, by exchanging call additional service capability information, the communication server and the terminal device clarify division of work (that is, operations that need to be performed by the devices) between the terminal device and the communication server in a process of providing a digital human service for the user, so that capturing and rebuilding are implemented on the terminal device, rendering and authentication (for example, user-phone number holder consistency authentication) are implemented on the communication server, and a data transmission channel required by the digital human service is established based on the division of work. In addition, through authentication, secure and legal use of the digital human service are ensured in a call scenario.

Example 5: Capturing, rebuilding, and rendering are implemented on a terminal device, and authentication is implemented on a communication server.

Specifically, an example in which a digital human model is stored on the communication server, capturing, rebuilding, and rendering are implemented on the terminal device, both the caller user and the callee user see a real scene of a peer end, and the caller terminal device and the callee terminal device support a variable viewpoint is used.

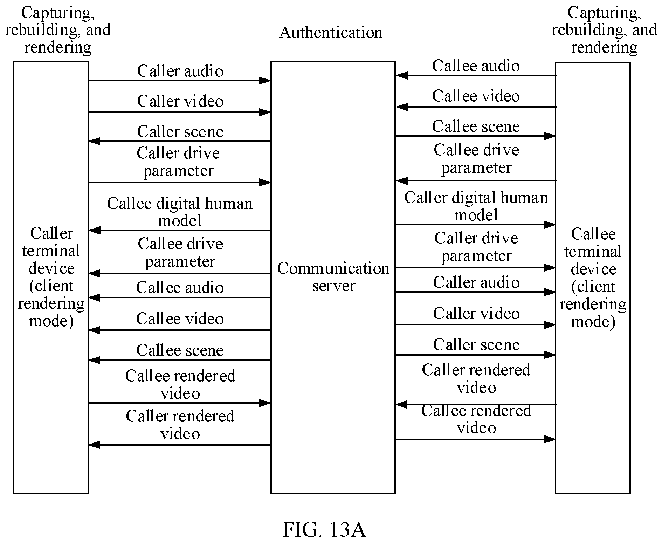

When a rendering capability is implemented on the terminal device, the terminal device may render content displayed on a local end (in a client rendering mode) or content displayed on the peer end (in a server rendering mode). A client rendering mode of the callee terminal device represents that a client of the callee user renders content, for example, a digital human of the caller user being in a real/virtual scene of the callee user, seen by the callee user; a server rendering mode of the callee terminal device represents that the client of the callee user renders content, for example, a digital human of the callee user being in the real/virtual scene of the callee user, seen by the caller user; a client rendering mode of the caller terminal device represents that a client of the caller user renders content, for example, the digital human of the callee user being in a real/virtual scene of the caller user, seen by the caller user; a server rendering mode of the caller terminal device represents that the client of the caller user renders content, for example, the digital human of the caller user being in the real/virtual scene of the caller user, seen by the callee user. In a communication process, a mode of the caller/callee terminal device may be determined based on a requirement of the caller/callee user and a capability of the caller/callee terminal device. Rendering modes of the caller terminal device and the callee terminal device may be inconsistent.
1. If both a caller terminal device and a callee terminal device are in a client rendering mode, FIG. 13A is an example of types of data that needs to be transmitted between a caller/callee user and a communication server.

Data transmission between the caller terminal device and the communication server may include the following:
The caller terminal device sends caller audio to the communication server.

The caller terminal device sends a caller video to the communication server.

The communication server sends a caller scene to the caller terminal device.

The caller terminal device sends a caller drive parameter to the communication server.

The communication server sends a callee digital human model to the caller terminal device.

The communication server sends a callee drive parameter to the caller terminal device.

The communication server sends callee audio to the caller terminal device.

The communication server sends a callee video to the caller terminal device.

The communication server sends a callee scene to the caller terminal device.

The caller terminal device sends a callee rendered video to the communication server.

The communication server sends a caller rendered video to the caller terminal device.

Data transmission between the callee terminal device and the communication server includes the following:
The callee terminal device sends the callee audio to the communication server.

The callee terminal device sends the callee video to the communication server.

The communication server sends the callee scene to the callee terminal device.

The callee terminal device sends the callee drive parameter to the communication server.

The communication server sends a caller digital human model to the callee terminal device.

The communication server sends the caller drive parameter to the callee terminal device.

The communication server sends the caller audio to the callee terminal device.

The communication server sends the caller video to the callee terminal device.

The communication server sends the caller scene to the callee terminal device.

The callee terminal device sends the caller rendered video to the communication server.

The communication server sends the callee rendered video to the callee terminal device.

If the callee user sees a digital human of the caller user in a real/virtual scene of the callee user, and both the caller terminal device and the callee terminal device are in the client rendering mode, the caller terminal device and the communication server transmit the digital human model of the caller user and the digital human drive parameter of the caller user to the callee terminal device; the callee terminal device rebuilds the digital human of the caller user based on the digital human model of the caller user and the digital human drive parameter of the caller user; and the callee terminal device performs rendering and displaying based on the digital human of the caller user and the real/virtual scene and a viewpoint that are of the callee user.

If the callee user sees a digital human of the caller user in a real/virtual scene of the caller user, and both the caller terminal device and the callee terminal device are in the client rendering mode, the caller terminal device and the communication server transmit the digital human model of the caller user + the digital human drive parameter of the caller user to the callee terminal device; the caller terminal device and the communication server transmit the real/virtual scene and a viewpoint that are of the caller user to the callee terminal device; the callee terminal device rebuilds the digital human of the caller user based on the digital human model of the caller user and the digital human drive parameter of the caller user; and the callee terminal device performs rendering and displaying based on the digital human of the caller user and the real/virtual scene and the viewpoint that are of the caller user.

To enable the caller/callee user to see a presentation form of the caller/callee user at a peer end, the caller/callee terminal device may further establish two rendering stream channels between the caller/callee terminal device and the communication server, where one is used to upload a rendering result of the other party at a local end, and the other is used to receive a rendering result of the local end at the peer end.

It may be understood that the caller terminal device receives the scene of the caller user from the communication server only when the virtual scene of the caller user is stored on the communication server, and the callee terminal device receives the scene of the callee user from the communication server only when the virtual scene of the callee user is stored on the communication server.

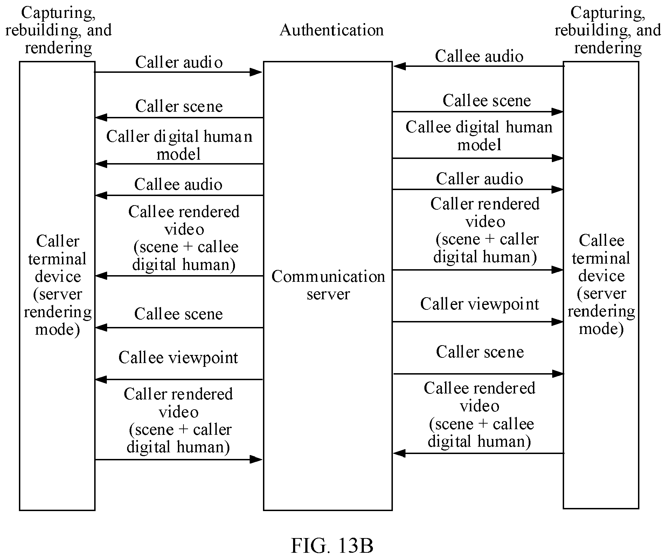

2. If both a caller terminal device and a callee terminal device are in a server rendering mode, FIG. 13B is an example of types of data that needs to be transmitted between a caller/callee user and a communication server.

Data transmission between the caller terminal device and the communication server may include the following:
The caller terminal device sends caller audio to the communication server.

The communication server sends a caller scene to the caller terminal device.

The communication server sends a callee digital human model to the caller terminal device.

The communication server sends callee audio to the caller terminal device.

The communication server sends a callee rendered video to the caller terminal device.

The communication server sends a callee scene to the caller terminal device.

The communication server sends callee viewpoint information to the caller terminal device.

The caller terminal device sends a caller rendered video to the communication server.

Data transmission between the callee terminal device and the communication server may include the following:

The callee terminal device sends the callee audio to the communication server.

The communication server sends the callee scene to the callee terminal device.

The communication server sends a caller digital human model to the callee terminal device.

The communication server sends the caller audio to the callee terminal device.

The communication server sends the caller rendered video to the callee terminal device.

The communication server sends the caller scene to the callee terminal device.

The communication server sends caller viewpoint information to the callee terminal device.

The callee terminal device sends the callee rendered video to the communication server.

If the callee user sees a digital human of the caller user in a real/virtual scene of the callee user, and both the caller terminal device and the callee terminal device are in the server rendering mode, the callee terminal device and the communication server transmit the real/virtual scene and a viewpoint that are of the callee user to the caller terminal device; the caller terminal device rebuilds the digital human of the caller user based on the digital human model of the caller user and the digital human drive parameter of the caller user; the caller terminal device performs rendering based on the digital human of the caller user and the real/virtual scene and the viewpoint that are of the callee user; the caller terminal device encodes the rendering result and transmits the encoded rendering result to the callee terminal device; and the callee terminal device performs decoding and displays the rendering result.

If the callee user sees a digital human of the caller user in a real/virtual scene of the caller user, and both the caller terminal device and the callee terminal device are in the server rendering mode, the callee terminal device and the communication server transmit a viewpoint of the callee user to the caller terminal device; the caller terminal device rebuilds the digital human of the caller user based on the digital human model of the caller user and a digital human drive parameter of the caller user; the caller terminal device performs rendering based on the digital human of the caller user and the real/virtual scene and a viewpoint that are of the caller user; the caller terminal device encodes a rendering result and transmits the encoded rendering result to the callee terminal device; and the callee terminal device performs decoding and displays the rendering result.

3. If rendering modes of a caller terminal device and a callee terminal device are inconsistent, for example, the caller terminal device is in a server rendering mode, and the callee terminal device is in a client rendering mode, or the callee terminal device is in the server rendering mode, and the caller terminal device is in the client rendering mode, when the callee user sees a digital human of the caller user in a virtual scene of the caller user, and the caller user sees a digital human of the callee user in a real scene of the caller user, rendered videos of the caller user and the callee user are both processed by the caller terminal device, which imposes a high requirement on the performance of the caller terminal device. A specific process and a specific channel are not described.

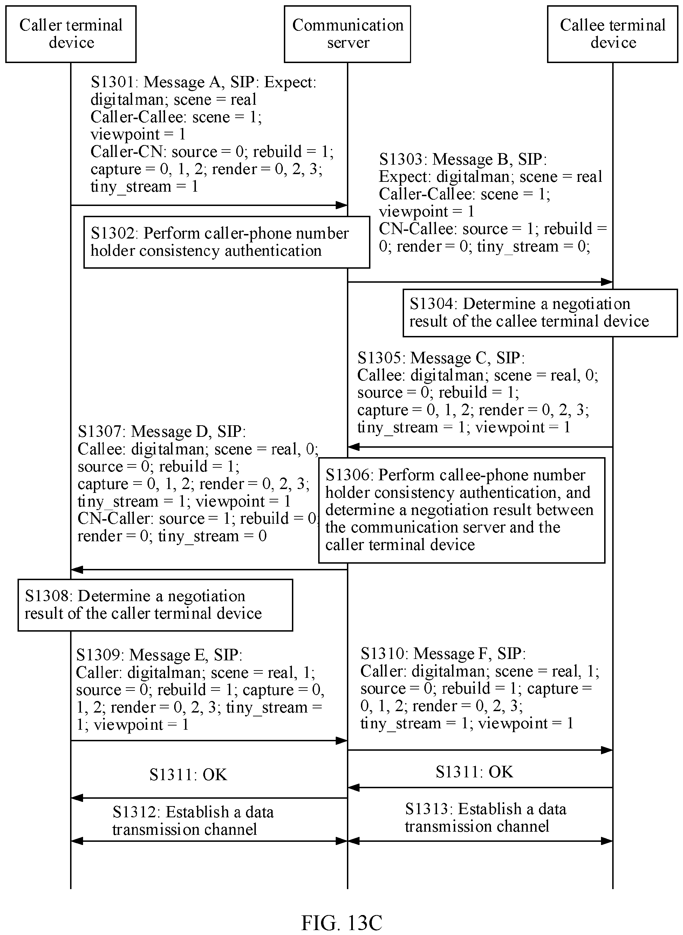

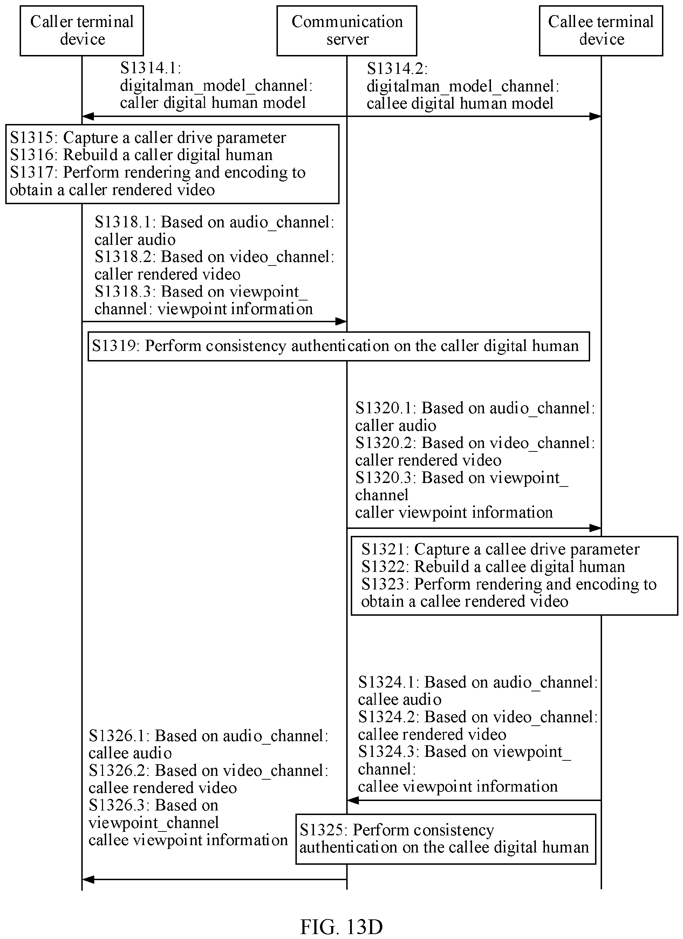

An example in which both the caller user and the callee user see a digital human of a peer end in a real scene of the peer end is used. FIG. 13C and FIG. 13D each show a process of communication between a caller user, a callee user, and a communication server, and the process is described as follows:
S1301: A caller terminal device sends a message A to the communication server, where the message A carries the following several parameters: a requirement of the caller user, content negotiated between the caller terminal device and a callee terminal device, and content negotiated between the caller terminal device and the communication server.

S1302: The communication server performs caller-phone number holder consistency authentication, that is, verifies whether a current user of the caller terminal device is an account holder of the phone number corresponding to the caller terminal device, and performs a next step, namely, S1303, after the verification succeeds.

S1303: The communication server sends a message B to the callee terminal device, where the message B carries the following several parameters: the requirement of the caller user, the content negotiated between the caller terminal device and the callee terminal device, and content negotiated between the communication server and the callee terminal device.

S1304: The callee terminal device determines a negotiation result of the callee terminal device based on a requirement of the callee user, call additional service capability information of the callee terminal device, and the parameters carried in the message B.

S1305: The callee terminal device sends a message C to the communication server, where the message C carries the following parameter: the negotiation result of the callee terminal device.

S1306: The communication server performs callee-phone number holder consistency authentication, that is, verifies whether a current user of the callee terminal device is an account holder of the phone number corresponding to the callee terminal device, and determines a negotiation result between the communication server and the caller terminal device after the verification succeeds.

S1307: The communication server sends a message D to the caller terminal device, where the message D carries the following several parameters: the negotiation result of the callee terminal device and the negotiation result between the communication server and the caller terminal device.

S1308: The caller terminal device confirms a negotiation result of the caller terminal device based on the negotiation result of the callee terminal device and the negotiation result between the communication server and the caller terminal device.

S1309: The caller terminal device sends a message E to the communication server, where the message E carries the following parameter: the negotiation result of the caller terminal device.

S1310: The communication server sends a message F to the callee terminal device, where the message F carries the following parameter: the negotiation result of the caller terminal device.

For descriptions of the parameters involved in the foregoing steps, refer to Table 2. Details are not described herein again.

S1311: The callee terminal device sends an "OK" message to the communication server, and the communication server sends an "OK" message to the caller terminal device, where the "OK" message indicates that parameter interaction is completed.

S1312: The caller terminal device establishes a transmission channel with the communication server.

Step S1313: The callee terminal device establishes a transmission channel with the communication server.

Types of the data transmission channels that need to be established include audio_channel, video_channel, digitalman_model_channel, and viewpoint_channel.

S1314.1: The caller terminal device downloads a caller digital human model from the communication server based on digitalman_model_channel.

S1314.2: The callee terminal device downloads a callee digital human model from the communication server based on digitalman_model_channel.

It may be understood that S1314.1 and S1314.2 are not sequenced.

S1315: The caller terminal device captures a caller drive parameter.

S1316: The caller terminal device rebuilds a caller digital human based on the caller drive parameter.

S1317: The caller terminal device renders the rebuilt caller digital human with a scene of the caller user to obtain a rendered picture, and encodes the rendered picture to obtain a caller rendered video.

S1318.1: The caller terminal device sends caller audio to the communication server based on audio _channel.

S1318.2: The caller terminal device sends the caller rendered video to the communication server based on video _channel.

S1318.3: The caller terminal device sends caller viewpoint information to the communication server based on viewpoint channel.

It may be understood that 1318.1, 1318.2, and 1318.3 are not sequenced.

S1319: The communication server performs consistency check on the caller digital human, where it is assumed that the consistency check succeeds.

S1320.1: The communication server sends the caller audio to the callee terminal device based on audio _channel.

S1320.2: The communication server sends the caller rendered video to the callee terminal device based on video _channel.

S1320.3: The communication server sends the caller viewpoint information to the callee terminal device based on viewpoint channel.

It may be understood that S1320. 1, S1320.2, and S1320.3 are not sequenced.

After receiving the caller rendered video, the callee terminal device may load the caller rendered video to a display screen for display, and may further play the caller audio.

After receiving the caller rendered video, the caller terminal device may also load the caller rendered video to a display screen for display, and may further play the caller audio. In this way, the caller user can watch a replay of call picture content of a local end.

S1321: The callee terminal device captures a callee drive parameter.

S1322: The callee terminal device rebuilds a callee digital human based on the callee drive parameter.

S1323: The callee terminal device renders the rebuilt callee digital human with a scene of the callee user to obtain a rendered picture, and encodes the rendered picture to obtain a callee rendered video.

S1324.1: The callee terminal device sends callee audio to the communication server based on audio _channel.

S1324.2: The callee terminal device sends the callee rendered video to the communication server based on video _channel.

S1324.3: The callee terminal device sends callee viewpoint information to the communication server based on viewpoint channel.

It may be understood that S1324.1, S1324.2, and S1324.3 are not sequenced.

S1325: The communication server performs consistency check on the callee digital human, where it is assumed that the consistency check succeeds.

S1326.1: The communication server sends the callee audio to the caller terminal device based on audio_channel.

S1326.2: The communication server sends the callee rendered video to the caller terminal device based on video _channel.

S1326.3: The communication server sends the callee viewpoint information to the caller terminal device based on viewpoint channel.

It may be understood that S1326.1, S1326.2, and S1326.3 are not sequenced.

After receiving the callee rendered video, the caller terminal device may load the callee rendered video to the display screen for display, and may further play the callee audio.

After receiving the callee rendered video, the callee terminal device may also load the callee rendered video to the display screen for display, and may further play the callee audio, so that the callee user can watch a replay of call picture content of a local end.

In Example 5, a terminal device may express a call requirement of a user to the communication server and a peer terminal device, to implement a technical effect of providing call picture content of a local end for a peer end based on the user requirement and presenting, at the local end based on the user requirement, call picture content provided by the peer end, that is, both the caller user and the callee user make a call in a digital human image, and both the caller user and the callee user see that a digital human of the peer end is in a real scene of the peer end. In addition, by exchanging call additional service capability information, the communication server and the terminal device clarify division of work (that is, operations that need to be performed by the devices) between the terminal device and the communication server in a process of providing a digital human service for the user, so that capturing, rebuilding, and rendering are all implemented on the terminal device, authentication (for example, user-phone number holder consistency authentication) is implemented on the communication server, and a data transmission channel required by the digital human service is established based on the division of work. In addition, through authentication, secure and legal use of the digital human service are ensured in a call scenario.

Example 6: Rebuilding and rendering are implemented on a terminal device, and authentication and capturing are implemented on a communication server.

Specifically, an example in which a digital human model is stored on the communication server, capturing is implemented on the communication server, rebuilding and rendering are implemented on the terminal device, both the caller user and the callee user see a real scene of a peer end, and neither the caller terminal device nor the callee terminal device supports a variable viewpoint is used.

Compared with implementation of the capturing, rebuilding, and rendering on the terminal device, after the capturing is implemented on the communication server, the caller/callee terminal device does not need to report a drive parameter of the caller user/callee user, but the communication server performs capturing based on audio and/or a video of the caller/callee user to generate the drive parameter, and delivers the drive parameter to the caller/callee terminal device. There is no other difference.

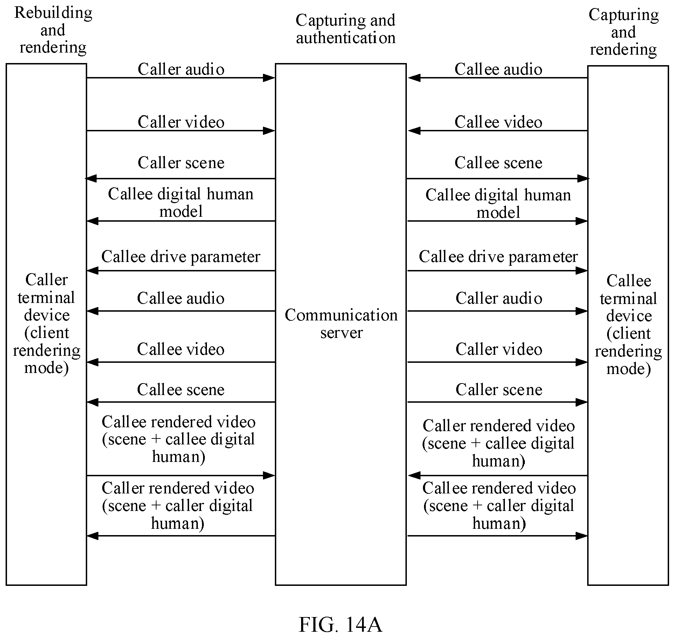

An example in which both the caller user and the callee user see a digital human of a peer end in a real scene of the peer end is still used. Types of data that needs to be transmitted between the caller/callee user and the communication server include those shown in FIG. 14A.

Data transmission between the caller terminal device and the communication server may include the following:
The caller terminal device sends caller audio to the communication server.

The caller terminal device sends a caller video to the communication server.

The communication server sends a caller scene to the caller terminal device.

The communication server sends a callee digital human model to the caller terminal device.

The communication server sends a callee drive parameter to the caller terminal device.

The communication server sends callee audio to the caller terminal device.

The communication server sends a callee video to the caller terminal device.

The communication server sends a callee scene to the caller terminal device.

The caller terminal device sends a callee rendered video to the communication server.

The communication server sends a caller rendered video to the caller terminal device.

Data transmission between the callee terminal device and the communication server may include the following:
The callee terminal device sends the callee audio to the communication server.

The callee terminal device sends the callee video to the communication server.

The communication server sends the callee scene to the callee terminal device.

The communication server sends a caller digital human model to the callee terminal device.

The communication server sends a caller drive parameter to the callee terminal device.

The communication server sends the caller audio to the callee terminal device.

The communication server sends the caller video to the callee terminal device.

The communication server sends the caller scene to the callee terminal device.

The callee terminal device sends the caller rendered video to the communication server.

The communication server sends the callee rendered video to the callee terminal device.

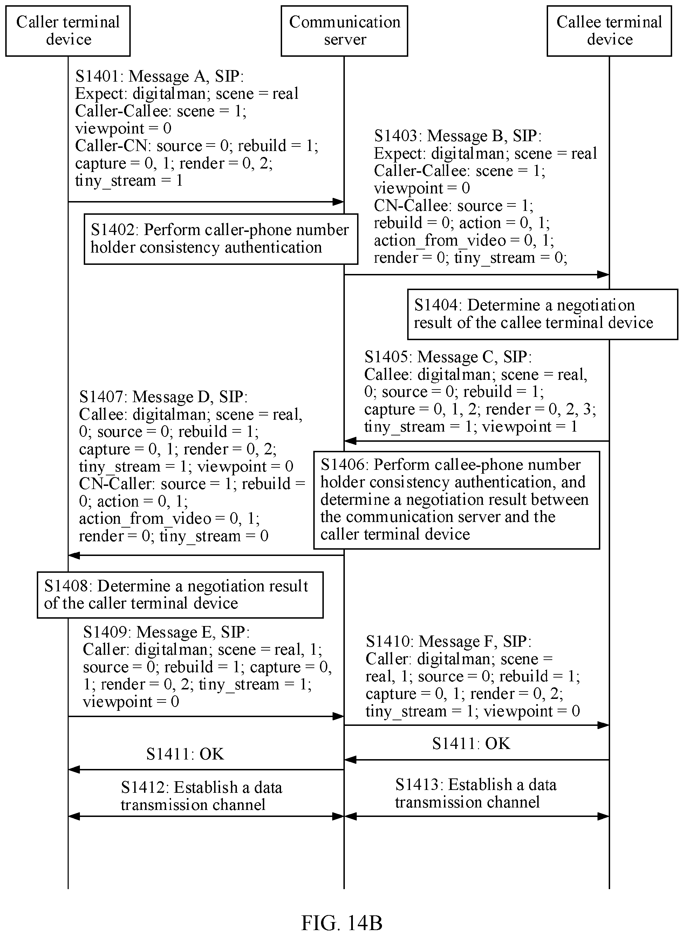

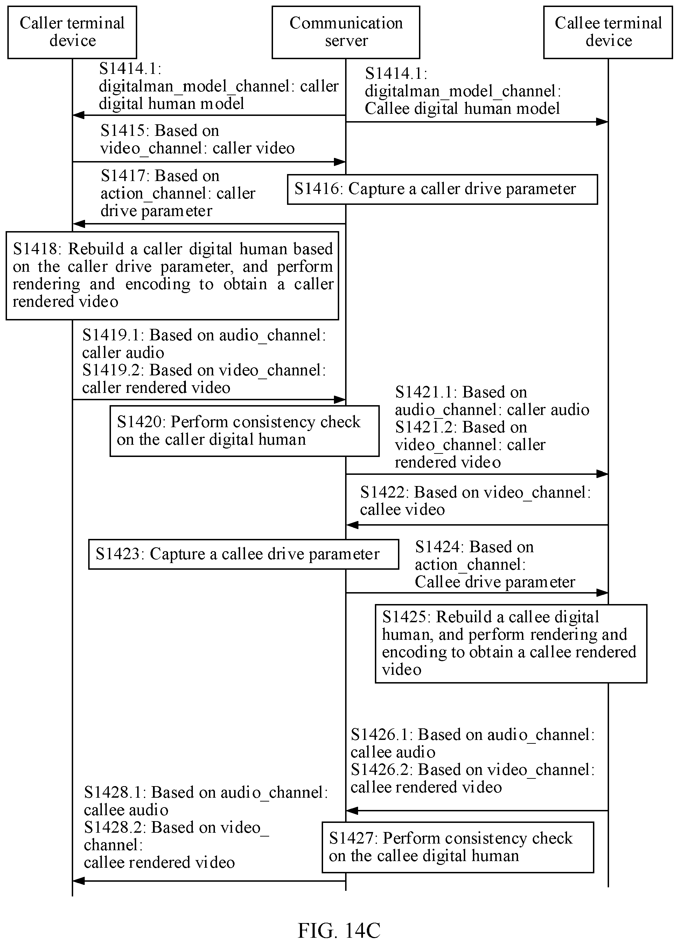

FIG. 14B and FIG. 14C each show a process of communication between a caller user, a callee user, and a communication server, and the process is described as follows:
S1401: A caller terminal device sends a message A to the communication server, where the message A carries the following several parameters: a requirement of the caller user, content negotiated between the caller terminal device and a callee terminal device, and content negotiated between the caller terminal device and the communication server.

S1402: The communication server performs caller-phone number holder consistency authentication, that is, verifies whether a current user of the caller terminal device is an account holder of the phone number corresponding to the caller terminal device, and performs a next step, namely, S1403, after the verification succeeds.

S1403: The communication server sends a message B to the callee terminal device, where the message B carries the following several parameters: the requirement of the caller user, the content negotiated between the caller terminal device and the callee terminal device, and content negotiated between the communication server and the callee terminal device.

S1404: The callee terminal device determines a negotiation result of the callee terminal device based on a requirement of the callee user, call additional service capability information of the callee terminal device, and the parameters carried in the message B.

S1405: The callee terminal device sends a message C to the communication server, where the message C carries the following parameter: the negotiation result of the callee terminal device.

S1406: The communication server performs callee-phone number holder consistency authentication, that is, verifies whether a current user of the callee terminal device is an account holder of the phone number corresponding to the callee terminal device, and determines a negotiation result between the communication server and the caller terminal device after the verification succeeds.

S1407: The communication server sends a message D to the caller terminal device, where the message D carries the following several parameters: the negotiation result of the callee terminal device and the negotiation result between the communication server and the caller terminal device.

S1408: The caller terminal device confirms a negotiation result of the caller terminal device based on the negotiation result of the callee terminal device and the negotiation result between the communication server and the caller terminal device.

S1409: The caller terminal device sends a message E to the communication server, where the message E carries the following parameter: the negotiation result of the caller terminal device.

S1410: The communication server sends a message F to the callee terminal device, where the message F carries the following parameter: the negotiation result of the caller terminal device.

For descriptions of the parameters involved in the foregoing steps, refer to Table 2. Details are not described herein again.

S1411: The callee terminal device sends an "OK" message to the communication server, and the communication server sends an "OK" message to the caller terminal device, where the "OK" message indicates that parameter interaction is completed.

S1412: The caller terminal device establishes a transmission channel with the communication server.

Step S1413: The callee terminal device establishes a transmission channel with the communication server.

Types of the data transmission channels that need to be established include digitalman_modelchannel, audio_channel, video_channel, and action_channel.

S1414.1: The caller terminal device downloads a caller digital human model from the communication server based on digitalman_model_channel.

S1414.2: The callee terminal device downloads a callee digital human model from the communication server based on digitalman_model_channel.

It may be understood that S1414.1 and S1414.2 are not sequenced.

S1415: The caller terminal device sends a caller video to the communication server based on video _channel.

S1416: The communication server captures a caller drive parameter based on the caller video.

S1417: The communication server sends the caller drive parameter to the caller terminal device based on action _channel.

S1418: The caller terminal device rebuilds a caller digital human based on the caller drive parameter; the caller terminal device renders the rebuilt caller digital human with a scene of the caller user to obtain a rendered picture; and encodes the rendered picture to obtain a caller rendered video.

S1419.1: The caller terminal device sends caller audio to the communication server based on audio _channel.

S1419.2: The caller terminal device sends the caller rendered video to the communication server based on video _channel.

It may be understood that S1419.1 and S1419.2 are not sequenced.

S1420: The communication server performs consistency check on the caller digital human, where it is assumed that the consistency check succeeds.

S1421.1: The communication server sends the caller audio to the callee terminal device based on audio _channel.

S1421.2: The communication server sends the caller rendered video to the callee terminal device based on video _channel.

It may be understood that S1421.1 and S1421.2 are not sequenced.

After receiving the caller rendered video, the callee terminal device may load the caller rendered video to a display screen for display, and may further play the caller audio.

After receiving the caller rendered video, the caller terminal device may also load the caller rendered video to a display screen for display, and may further play the caller audio. In this way, the caller user can watch a replay of call picture content of a local end.

S1422: The callee terminal device sends a callee video to the communication server based on video_channel.

S1423: The communication server captures a callee drive parameter based on the callee video.

S1424: The communication server sends the callee drive parameter to the callee terminal device based on action _channel.

S1425: The callee terminal device rebuilds a callee digital human based on the callee drive parameter; the callee terminal device renders the rebuilt callee digital human with a scene of the callee user to obtain a rendered picture; and encodes the rendered picture to obtain a callee rendered video.

S1426.1: The callee terminal device sends callee audio to the communication server based on audio_channel.

S1426.2: The callee terminal device sends the callee rendered video to the communication server based on video _channel.

It may be understood that S1426.1 and S1426.2 are not sequenced.

S1427: The communication server performs consistency check on the callee digital human, where it is assumed that the consistency check succeeds.

S1428.1: The communication server sends the callee audio to the caller terminal device based on audio _channel.

S1428.2: The communication server sends the callee rendered video to the caller terminal device based on video _channel.

It may be understood that S1428.1 and S1428.2 are not sequenced.

After receiving the callee rendered video, the caller terminal device may load the callee rendered video to the display screen for display, and may further play the callee audio.

After receiving the callee rendered video, the callee terminal device may also load the callee rendered video to the display screen for display, and may further play the callee audio, so that the callee user can watch a replay of call picture content of a local end.

In Example 6, a terminal device may express a call requirement of a user to the communication server and a peer terminal device, to implement a technical effect of providing call picture content of a local end for a peer end based on the user requirement and presenting, at the local end based on the user requirement, call picture content provided by the peer end, that is, both the caller user and the callee user make a call in a digital human image, and both the caller user and the callee user see that a digital human of the peer end is in a real scene of the peer end. In addition, by exchanging call additional service capability information, the communication server and the terminal device clarify division of work (that is, operations that need to be performed by the devices) between the terminal device and the communication server in a process of providing a digital human service for the user, so that rebuilding and rendering are all implemented on the terminal device, capturing and authentication (for example, user-phone number holder consistency authentication) are implemented on the communication server, and a data transmission channel required by the digital human service is established based on the division of work. In addition, through authentication, secure and legal use of the digital human service are ensured in a call scenario.

Example 7: Capturing and rendering are implemented on a terminal device, authentication and rebuilding are implemented on a communication server.

Specifically, an example in which a digital human model is stored on the communication server, capturing and rendering are implemented on the terminal device, rebuilding is implemented on the communication server, both the caller user and the callee user see a real scene of a peer end, and neither the caller terminal device nor the callee terminal device supports a variable viewpoint is used.

In this example, after the rebuilding is implemented on the communication server, the communication server no longer needs to send the digital human model to the caller/callee terminal device, but the communication server rebuilds a digital human of the caller/callee user based on a digital human drive parameter of the caller /callee user, and then sends the digital human to the caller/callee terminal device. There is no other difference.

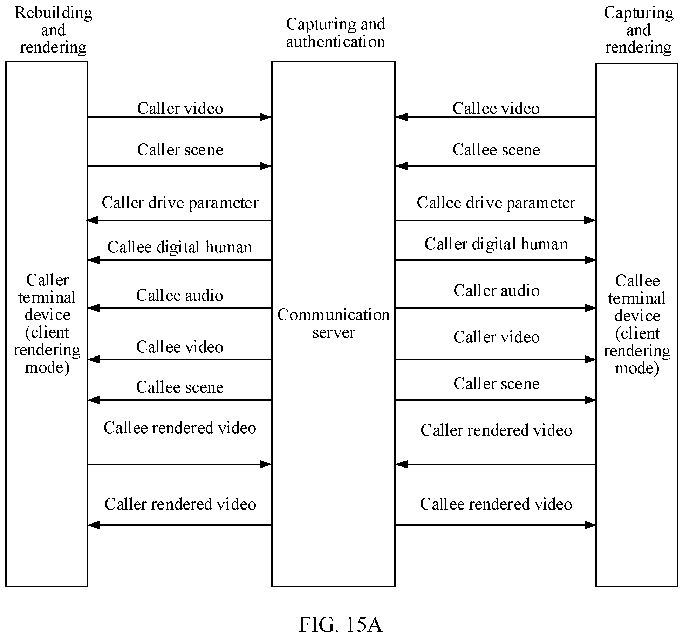

An example in which both the caller user and the callee user see a digital human of a peer end in a real scene of the peer end is still used. Types of data that needs to be transmitted between the caller/callee user and the communication server include those shown in FIG. 15A.

Data transmission between the caller terminal device and the communication server may include the following:
The caller terminal device sends a caller video to the communication server.

The caller terminal device sends a caller scene to the communication server.

The communication server sends a caller drive parameter to the caller terminal device.

The communication server sends a callee digital human to the caller terminal device.

The communication server sends callee audio to the caller terminal device.

The communication server sends a callee video to the caller terminal device.

The communication server sends a callee scene to the caller terminal device.

The caller terminal device sends a callee rendered video to the communication server.

The communication server sends a caller rendered video to the caller terminal device.

Data transmission between the callee terminal device and the communication server may include the following:
The callee terminal device sends the callee video to the communication server.

The callee terminal device sends the callee scene to the communication server.

The communication server sends a callee drive parameter to the callee terminal device.

The communication server sends a caller digital human to the callee terminal device.

The communication server sends the caller audio to the callee terminal device.

The communication server sends the caller video to the callee terminal device.

The communication server sends the caller scene to the callee terminal device.

The callee terminal device sends the caller rendered video to the communication server.

The communication server sends the callee rendered video to the callee terminal device.

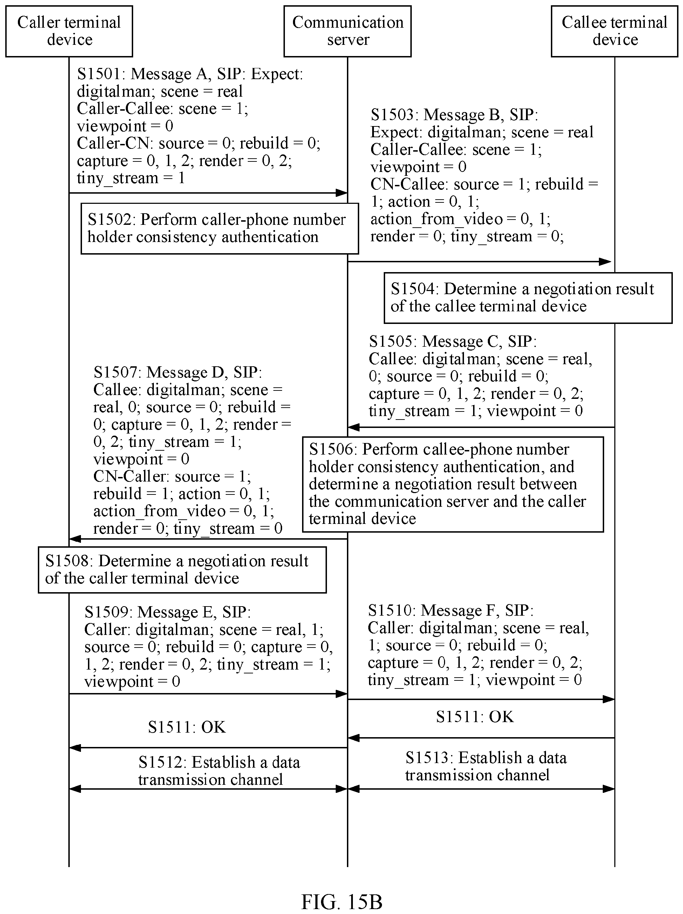

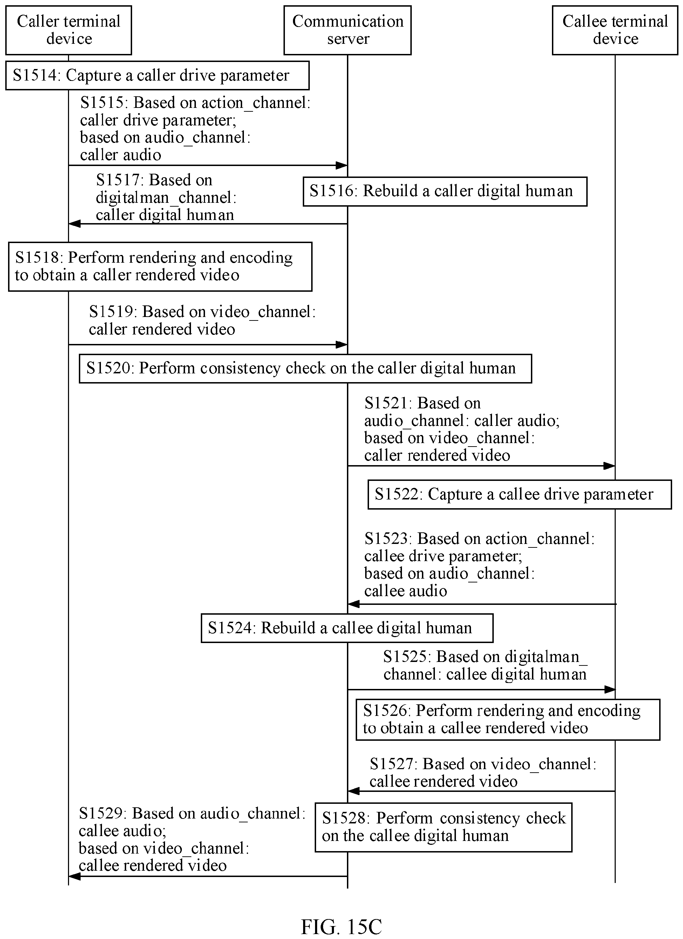

FIG. 15B and FIG. 15C each show a process of communication between a caller user, a callee user, and a communication server, and the process is described as follows:
S1501: A caller terminal device sends a message A to the communication server, where the message A carries the following several parameters: a requirement of the caller user, content negotiated between the caller terminal device and a callee terminal device, and content negotiated between the caller terminal device and the communication server.

S1502: The communication server performs caller-phone number holder consistency authentication, that is, verifies whether a current user of the caller terminal device is an account holder of the phone number corresponding to the caller terminal device, and performs a next step, namely, S1503, after the verification succeeds.

S1503: The communication server sends a message B to the callee terminal device, where the message B carries the following several parameters: the requirement of the caller user, the content negotiated between the caller terminal device and the callee terminal device, and content negotiated between the communication server and the callee terminal device.

S1504: The callee terminal device determines a negotiation result of the callee terminal device based on a requirement of the callee user, call additional service capability information of the callee terminal device, and the parameters carried in the message B.

S1505: The callee terminal device sends a message C to the communication server, where the message C carries the following parameter: the negotiation result of the callee terminal device.

S1506: The communication server performs callee-phone number holder consistency authentication, that is, verifies whether a current user of the callee terminal device is an account holder of the phone number corresponding to the callee terminal device, and determines a negotiation result between the communication server and the caller terminal device after the verification succeeds.

S1507: The communication server sends a message D to the caller terminal device, where the message D carries the following several parameters: the negotiation result of the callee terminal device and the negotiation result between the communication server and the caller terminal device.

S1508: The caller terminal device confirms a negotiation result of the caller terminal device based on the negotiation result of the callee terminal device and the negotiation result between the communication server and the caller terminal device.

S1509: The caller terminal device sends a message E to the communication server, where the message E carries the following parameter: the negotiation result of the caller terminal device.

S1510: The communication server sends a message F to the callee terminal device, where the message F carries the following parameter: the negotiation result of the caller terminal device.

For descriptions of the parameters involved in the foregoing steps, refer to Table 2. Details are not described herein again.

S1511: The callee terminal device sends an "OK" message to the communication server, and the communication server sends an "OK" message to the caller terminal device, where the "OK" message indicates that parameter interaction is completed.

S1512: The caller terminal device establishes a transmission channel with the communication server.

Step S1513: The callee terminal device establishes a transmission channel with the communication server.

Types of the data transmission channels that need to be established include audio_channel, video_channel, action_channel, and digitalman_channel.

S1514: The caller terminal device captures a caller drive parameter.

S1515: The caller terminal device sends the caller drive parameter to the communication server based on action_channel, and sends caller audio to the communication server based on audio _channel.

S1516: The communication server rebuilds a caller digital human based on the caller drive parameter and the caller audio.

S1517: The communication server sends the rebuilt caller digital human to the caller terminal device based on digitalman_channel.

S1518: The caller terminal device renders the rebuilt caller digital human with a scene of the caller user to obtain a rendered picture, and encodes the rendered picture to obtain a caller rendered video.

S1519: The caller terminal device sends the caller rendered video to the communication server based on video _channel.

S1520: The communication server performs consistency check on the caller digital human, where it is assumed that the check succeeds.

S1521: After the consistency check on the caller digital human succeeds, the communication server sends the caller audio to the callee terminal device based on audio_channel, and sends the caller rendered video to the callee terminal device based on video _channel.

After receiving the caller rendered video, the callee terminal device may load the caller rendered video to a display screen for display, and may further play the caller audio.

After receiving the caller rendered video, the caller terminal device may also load the caller rendered video to a display screen for display, and may further play the caller audio. In this way, the caller user can watch a replay of call picture content of a local end.

S1522: The callee terminal device captures a callee drive parameter.

S1523: The callee terminal device sends the callee drive parameter to the communication server based on action_channel, and sends callee audio to the communication server based on audio _channel.

S1524: The communication server rebuilds a callee digital human based on the callee drive parameter and the callee audio.

S1525: The communication server sends the rebuilt callee digital human to the callee terminal device based on digitalman_channel.

S1526: The callee terminal device renders the rebuilt callee digital human with a scene of the callee user to obtain a rendered picture, and encodes the rendered picture to obtain a callee rendered video.

S1527: The callee terminal device sends the callee rendered video to the communication server based on video_channel.

S1528: The communication server performs consistency check on the callee digital human, where it is assumed that the check succeeds.

S1529: After the consistency check on the callee digital human succeeds, the communication server sends the callee audio to the caller terminal device based on audio_channel, and sends the callee rendered video to the caller terminal device based on video _channel.

After receiving the callee rendered video, the caller terminal device may load the callee rendered video to the display screen for display, and may further play the callee audio.

After receiving the callee rendered video, the callee terminal device may also load the callee rendered video to the display screen for display, and may further play the callee audio, so that the callee user can watch a replay of call picture content of a local end.

In Example 7, a terminal device may express a call requirement of a user to the communication server and a peer terminal device, to implement a technical effect of providing call picture content of a local end for a peer end based on the user requirement and presenting, at the local end based on the user requirement, call picture content provided by the peer end, that is, both the caller user and the callee user make a call in a digital human image, and both the caller user and the callee user see that a digital human of the peer end is in a real scene of the peer end. In addition, by exchanging call additional service capability information, the communication server and the terminal device clarify division of work (that is, operations that need to be performed by the devices) between the terminal device and the communication server in a process of providing a digital human service for the user, so that capturing and rendering are all implemented on the terminal device, rebuilding and authentication (for example, user-phone number holder consistency authentication and digital human consistency check) are implemented on the communication server, and a data transmission channel required by the digital human service is established based on the division of work. In addition, through authentication, secure and legal use of the digital human service are ensured in a call scenario.

Example 8: Rendering is implemented on a terminal device, and authentication, capturing, and rebuilding are implemented on a communication server.

Specifically, an example in which a digital human model is stored on the communication server, rendering is implemented on the terminal device, capturing and rebuilding are implemented on the communication server, both the caller user and the callee user see a real scene of a peer end, and neither the caller terminal device nor the callee terminal device supports a variable viewpoint is used.

In this example, after both the capturing and the rebuilding are implemented on the communication server, the caller/callee terminal device no longer needs to report a digital human drive parameter of the caller user/callee user, but the communication server captures and generates the digital human drive parameter based on audio/video of the caller/callee user, performs rebuilding by using an input model of the caller/callee user, to generate a digital human of the caller/callee user, and sends the digital human of the caller/callee user to the caller/callee terminal device. There is no other difference.

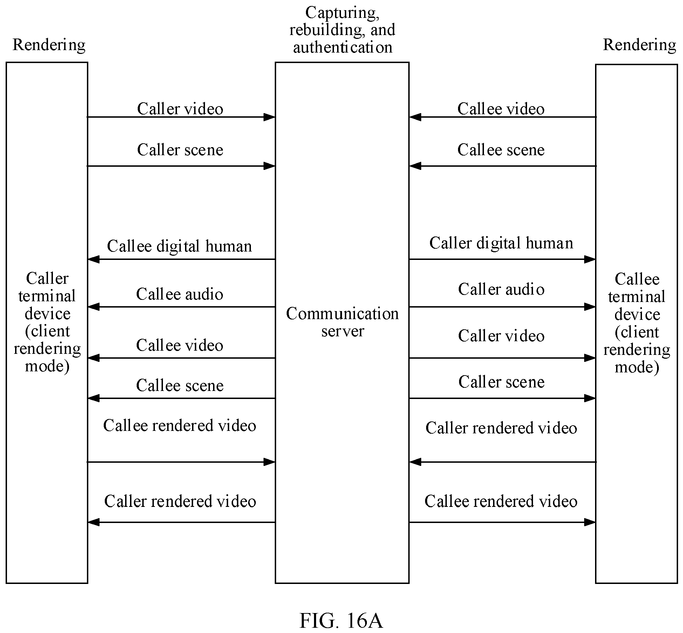

An example in which both the caller user and the callee user see a digital human of a peer end in a real scene of the peer end is still used. Types of data that needs to be transmitted between the caller/callee user and the communication server include those shown in FIG. 16A.

Data transmission between the caller terminal device and the communication server may include the following:
The caller terminal device sends a caller video to the communication server.

The caller terminal device sends a caller scene to the communication server.

The communication server sends a callee digital human to the caller terminal device.

The communication server sends callee audio to the caller terminal device.

The communication server sends a callee video to the caller terminal device.

The communication server sends a callee scene to the caller terminal device.

The caller terminal device sends a callee rendered video to the communication server.

The communication server sends a caller rendered video to the caller terminal device.

Data transmission between the callee terminal device and the communication server may include the following:
The callee terminal device sends the callee video to the communication server.

The callee terminal device sends the callee scene to the communication server.

The communication server sends a caller digital human to the callee terminal device.

The communication server sends the caller audio to the callee terminal device.

The communication server sends the caller video to the callee terminal device.

The communication server sends the caller scene to the callee terminal device.

The callee terminal device sends the caller rendered video to the communication server.

The communication server sends the callee rendered video to the callee terminal device.

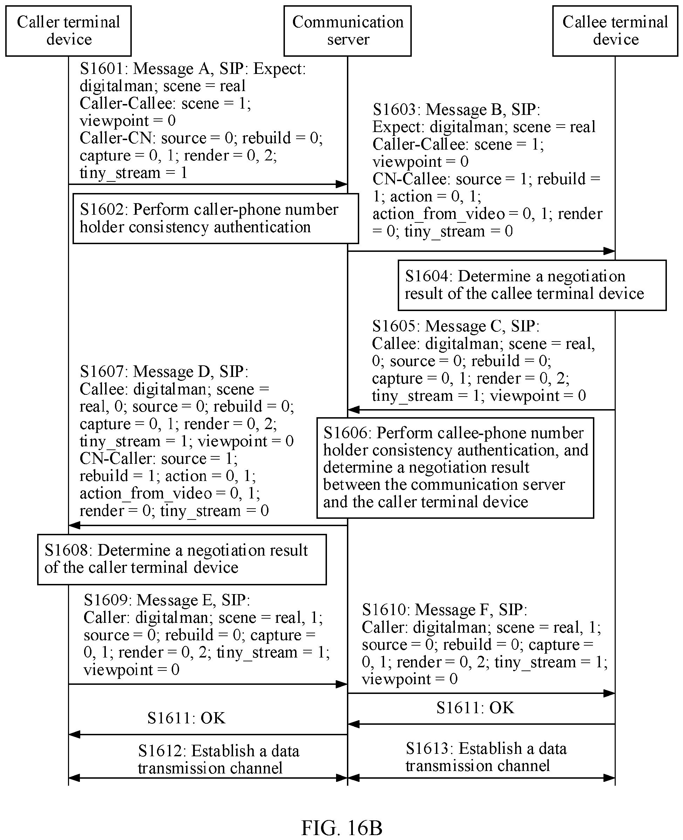

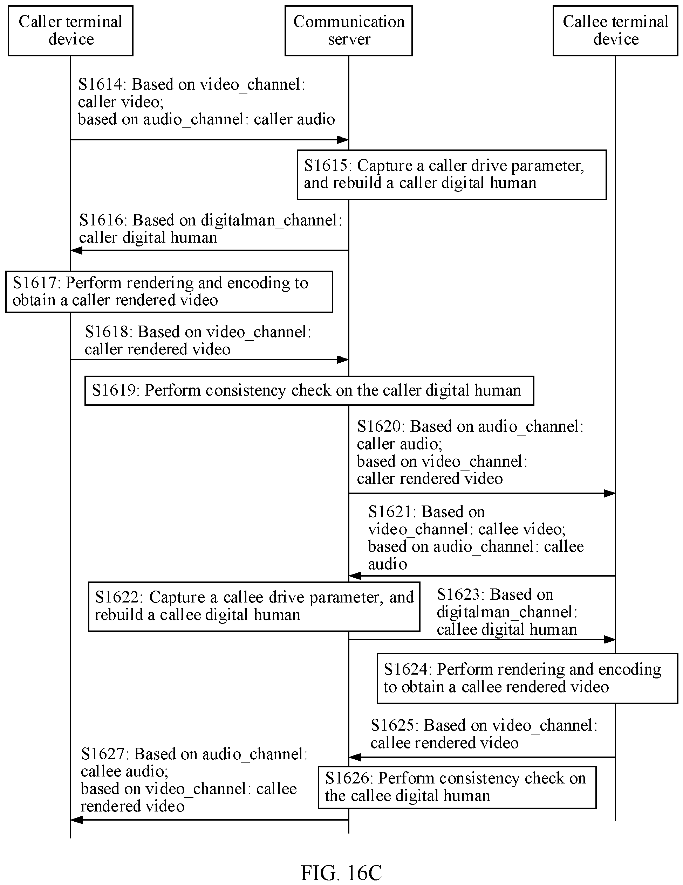

FIG. 16B and FIG. 16C each show a process of communication between a caller user, a callee user, and a communication server, and the process is described as follows:
S1601: A caller terminal device sends a message A to the communication server, where the message A carries the following several parameters: a requirement of the caller user, content negotiated between the caller terminal device and a callee terminal device, and content negotiated between the caller terminal device and the communication server.
S1602: The communication server performs caller-phone number holder consistency authentication, that is, verifies whether a current user of the caller terminal device is an account holder of the phone number corresponding to the caller terminal device, and performs a next step, namely, S1603, after the verification succeeds.
S1603: The communication server sends a message B to the callee terminal device, where the message B carries the following several parameters: the requirement of the caller user, the content negotiated between the caller terminal device and the callee terminal device, and content negotiated between the communication server and the callee terminal device.
S 1604: The callee terminal device determines a negotiation result of the callee terminal device based on a requirement of the callee user, call additional service capability information of the callee terminal device, and the parameters carried in the message B.
S1605: The callee terminal device sends a message C to the communication server, where the message C carries the following parameter: the negotiation result of the callee terminal device.
S1606: The communication server performs callee-phone number holder consistency authentication, that is, verifies whether a current user of the callee terminal device is an account holder of the phone number corresponding to the callee terminal device, and determines a negotiation result between the communication server and the caller terminal device after the verification succeeds.
S1607: The communication server sends a message D to the caller terminal device, where the message D carries the following several parameters: the negotiation result of the callee terminal device and the negotiation result between the communication server and the caller terminal device.
S1608: The caller terminal device confirms a negotiation result of the caller terminal device based on the negotiation result of the callee terminal device and the negotiation result between the communication server and the caller terminal device.
S1609: The caller terminal device sends a message E to the communication server, where the message E carries the following parameter: the negotiation result of the caller terminal device.
S1610: The communication server sends a message F to the callee terminal device, where the message F carries the following parameter: the negotiation result of the caller terminal device.

For descriptions of the parameters involved in the foregoing steps, refer to Table 2. Details are not described herein again.
S1611: The callee terminal device sends an "OK" message to the communication server, and the communication server sends an "OK" message to the caller terminal device, where the "OK" message indicates that parameter interaction is completed.
S1612: The caller terminal device establishes a transmission channel with the communication server.
Step S1613: The callee terminal device establishes a transmission channel with the communication server.

Types of the data transmission channels that need to be established include audio_channel, video_channel, and digitalman_channel.
S1614: The caller terminal device sends a caller video to the communication server based on video_channel, and sends caller audio to the communication server based on audio_channel.
S1615: The communication server captures a caller drive parameter based on the caller video, and rebuilds a caller digital human based on the caller drive parameter and the caller audio.
S1616: The communication server sends the rebuilt caller digital human to the caller terminal device based on digitalman_channel.
S1617: The caller terminal device renders the rebuilt caller digital human with a scene of the caller user to obtain a rendered picture, and encodes the rendered picture to obtain a caller rendered video.
S1618: The caller terminal device sends the caller rendered video to the communication server based on video _channel.
S1619: The communication server performs consistency check on the caller digital human, where it is assumed that the check succeeds.
S1620: After the consistency check on the caller digital human succeeds, the communication server sends the caller audio to the callee terminal device based on audio_channel, and sends the caller rendered video to the callee terminal device based on video _channel.

After receiving the caller rendered video, the callee terminal device may load the caller rendered video to a display screen for display, and may further play the caller audio.

After receiving the caller rendered video, the caller terminal device may also load the caller rendered video to a display screen for display, and may further play the caller audio. In this way, the caller user can watch a replay of call picture content of a local end.

S1621: The callee terminal device sends a callee video to the communication server based on video_channel, and sends callee audio to the communication server based on audio_channel.

S1622: The communication server captures a callee drive parameter based on the callee video, and rebuilds a callee digital human based on the callee drive parameter and the callee audio.

S1623: The communication server sends the rebuilt callee digital human to the callee terminal device based on digitalman_channel.

S1624: The callee terminal device renders the rebuilt callee digital human with a scene of the callee user to obtain a rendered picture, and encodes the rendered picture to obtain a callee rendered video.

S1625: The callee terminal device sends the callee rendered video to the communication server based on video _channel.

S1626: The communication server performs consistency check on the callee digital human, where it is assumed that the check succeeds.

S1627: After the consistency check on the callee digital human succeeds, the communication server sends the callee audio to the caller terminal device based on audio_channel, and sends the callee rendered video to the caller terminal device based on video _channel.

After receiving the callee rendered video, the caller terminal device may load the callee rendered video to the display screen for display, and may further play the callee audio.

After receiving the callee rendered video, the callee terminal device may also load the callee rendered video to the display screen for display, and may further play the callee audio, so that the callee user can watch a replay of call picture content of a local end.

In Example 8, a terminal device may express a call requirement of a user to the communication server and a peer terminal device, to implement a technical effect of providing call picture content of a local end for a peer end based on the user requirement and presenting, at the local end based on the user requirement, call picture content provided by the peer end, that is, both the caller user and the callee user make a call in a digital human image, and both the caller user and the callee user see that a digital human of the peer end is in a real scene of the peer end. In addition, by exchanging call additional service capability information, the communication server and the terminal device clarify division of work (that is, operations that need to be performed by the devices) between the terminal device and the communication server in a process of providing a digital human service for the user, so that capturing, rebuilding, and authentication (for example, user-phone number holder consistency authentication and digital human consistency check) are all implemented on the communication server, rendering is implemented on the terminal device, and a data transmission channel required by the digital human service is established based on the division of work. In addition, through authentication, secure and legal use of the digital human service are ensured in a call scenario.

Example 9: Authentication, capturing, rebuilding, and rendering are implemented on a terminal device.

Specifically, an example in which a digital human model is stored on the terminal device, capturing, rebuilding, and rendering are implemented on the terminal device, both the caller user and the callee user see a real scene of a peer end, and neither the caller terminal device nor the callee terminal device supports a variable viewpoint is used.

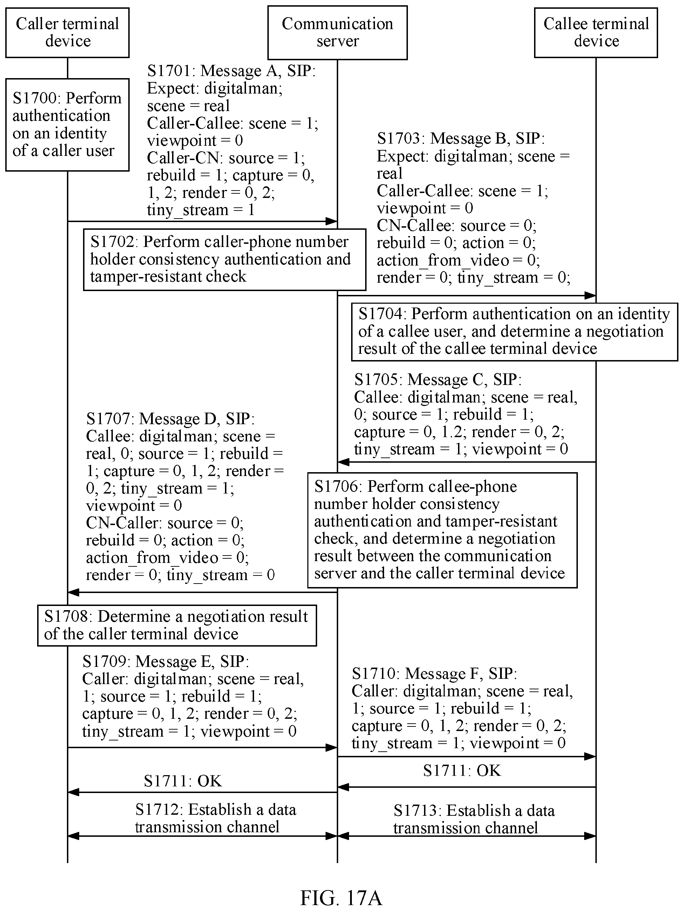

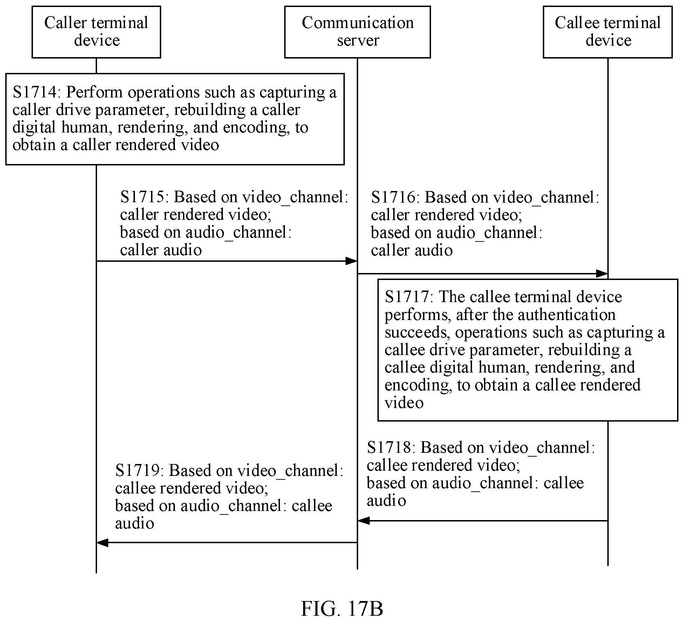

FIG. 17A and FIG. 17B each show a process of communication between a caller user, a callee user, and a communication server, and the process is described as follows:
S1700: A caller terminal device authenticates an identity of the caller user (for example, authenticates the user identity based on a check feature such as a fingerprint, a face, and a voiceprint, to ensure that identity information of the current user is consistent with user identity information bound to a caller human digital model).
S1701: The caller terminal device sends a message A to the communication server, where the message A carries the following several parameters: a requirement of the caller user, content negotiated between the caller terminal device and a callee terminal device, and content negotiated between the caller terminal device and the communication server.
S1702: The communication server performs caller-phone number holder consistency authentication (that is, verifies whether the current user of the caller terminal device is an account holder of the phone number corresponding to the caller terminal device), tamper-resistant check (for example, verifies, by using a public key of a digital human audit device or a public key of a digital human model production device, a digital signature of information such as the digital human model, the identity information, and the check feature that correspond to the caller user), and the like, and performs a next step, namely, S1703, after the foregoing verifications all succeed.
S1703: The communication server sends a message B to the callee terminal device, where the message B carries the following several parameters: the requirement of the caller user, the content negotiated between the caller terminal device and the callee terminal device, and content negotiated between the communication server and the callee terminal device.
S1704: The callee terminal device authenticates an identity of a user (for example, authenticates the user identity based on a check feature such as a fingerprint, a face, and a voiceprint, to ensure that identity information of the current user is consistent with user identity information bound to a callee digital human model); and the callee terminal device determines a negotiation result of the callee terminal device based on a requirement of the callee user, call additional service capability information of the callee terminal device, and the parameters carried in the message B.
S1705: The callee terminal device sends a message C to the communication server, where the message C carries the following parameter: the negotiation result of the callee terminal device.
S1706. The communication server performs callee-phone number holder consistency authentication (that is, verifies whether the current user of the callee terminal device is an account holder of the phone number corresponding to the callee terminal device), tamper-resistant check (for example, verifies, by using a public key of a digital human audit device or a public key of a digital human model production device, a digital signature of information such as the digital human model, the identity information, and the check feature corresponding to the callee user), and the like, and determines a negotiation result between the communication server and the caller terminal device after the foregoing verifications all succeed.
S1707: The communication server sends a message D to the caller terminal device, where the message D carries the following several parameters: the negotiation result of the callee terminal device and the negotiation result between the communication server and the caller terminal device.
S1708: The caller terminal device confirms a negotiation result of the caller terminal device based on the negotiation result of the callee terminal device and the negotiation result between the communication server and the caller terminal device.
S1709: The caller terminal device sends a message E to the communication server, where the message E carries the following parameter: the negotiation result of the caller terminal device.
S1710: The communication server sends a message F to the callee terminal device, where the message F carries the following parameter: the negotiation result of the caller terminal device.

For descriptions of the parameters involved in the foregoing steps, refer to Table 2. Details are not described herein again.

S1711: The callee terminal device sends an "OK" message to the communication server, and the communication server sends an "OK" message to the caller terminal device, where the "OK" message indicates that parameter interaction is completed.

S1712: The caller terminal device establishes a transmission channel with the communication server.

Step S1713: The callee terminal device establishes a transmission channel with the communication server.

Types of the data transmission channels that need to be established include audio _channel and video _channel.

S1714: The caller terminal device captures a caller drive parameter; rebuilds a caller digital human based on the caller drive parameter and caller audio; renders the rebuilt caller digital human with a scene of the caller user to obtain a rendered picture; and encodes the rendered picture to obtain a caller rendered video.

S1715: Send the caller rendered video to the communication server based on video_channel, and send the caller audio to the communication server based on audio_channel.

S1716: The communication server sends the caller rendered video to the callee terminal device based on video_channel, and sends the caller audio to the callee terminal device based on audio_channel.

After receiving the caller rendered video, the callee terminal device may load the caller rendered video to a display screen for display, and may further play the caller audio.

After receiving the caller rendered video, the caller terminal device may also load the caller rendered video to a display screen for display, and may further play the caller audio. In this way, the caller user can watch a replay of call picture content of a local end.

S1717: The callee terminal device captures a callee drive parameter; rebuilds a callee digital human based on the callee drive parameter and callee audio; renders the rebuilt callee digital human with a scene of the callee user to obtain a rendered picture; and encodes the rendered picture to obtain a callee rendered video.

S1718: Send the callee rendered video to the communication server based on video_channel, and send the callee audio to the communication server based on audio_channel.

S1719: The communication server sends the callee rendered video to the caller terminal device based on video_channel, and sends the callee audio to the caller terminal device based on audio_channel.

After receiving the callee rendered video, the caller terminal device may load the callee rendered video to the display screen for display, and may further play the callee audio.

After receiving the callee rendered video, the callee terminal device may also load the callee rendered video to the display screen for display, and may further play the callee audio, so that the callee user can watch a replay of call picture content of a local end.

In Example 9, a terminal device may express a call requirement of a user to the communication server and a peer terminal device, to implement a technical effect of providing call picture content of a local end for a peer end based on the user requirement and presenting, at the local end based on the user requirement, call picture content provided by the peer end, that is, both the caller user and the callee user make a call in a digital human image, and both the caller user and the callee user see that a digital human of the peer end is in a real scene of the peer end. In addition, by exchanging call additional service capability information, the communication server and the terminal device clarify division of work (that is, operations that need to be performed by the devices) between the terminal device and the communication server in a process of providing a digital human service for the user, so that capturing, rebuilding, rendering, and authentication (for example, user identity authentication) are all implemented on the terminal device, and a data transmission channel required by the digital human service is established based on the division of work. In addition, through authentication, secure and legal use of the digital human service are ensured in a call scenario.

Example 10: Capturing and rebuilding are implemented on a terminal device, and rendering is implemented on a communication server.

Specifically, an example in which a digital human model is stored on the terminal device, rendering is implemented on the communication server, capturing and rebuilding are implemented on the terminal device, both the caller user and the callee user see a real scene of a peer end, and neither the caller terminal device nor the callee terminal device supports a variable viewpoint is used.

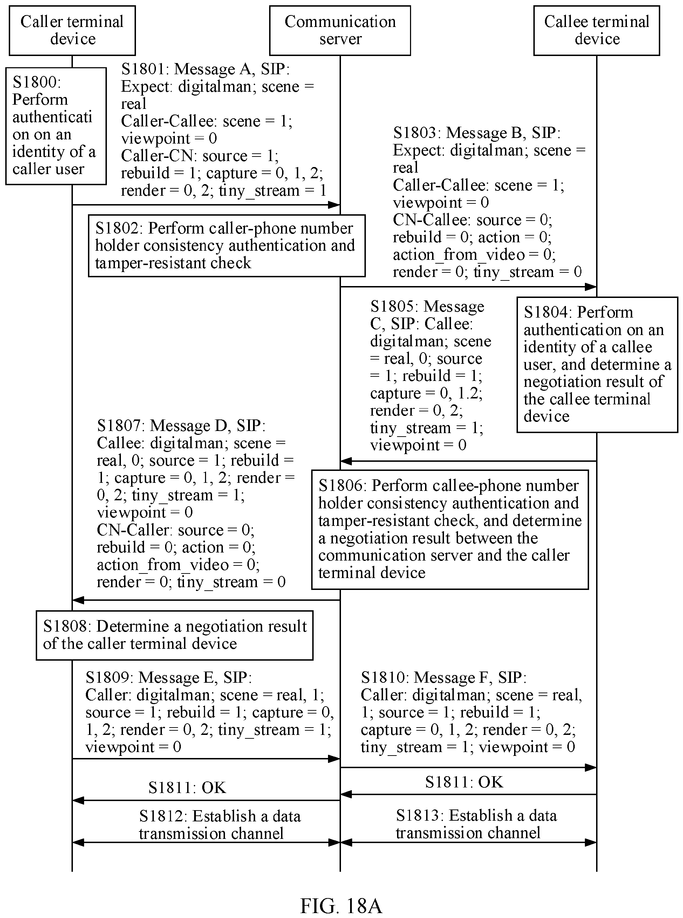

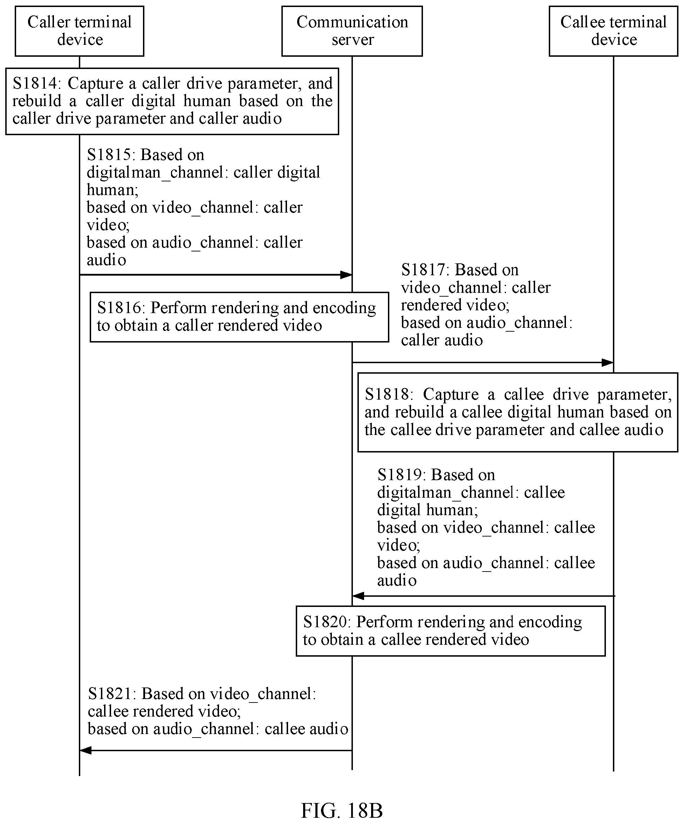

FIG. 18A and FIG. 18B each show a process of communication between a caller user, a callee user, and a communication server, and the process is described as follows:
S1800: A caller terminal device authenticates an identity of the caller user (for example, authenticates the user identity based on a check feature such as a fingerprint, a face, and a voiceprint, to ensure that identity information of the current user is consistent with user identity information bound to a caller digital human model).

S1801: The caller terminal device sends a message A to the communication server, where the message A carries the following several parameters: a requirement of the caller user, content negotiated between the caller terminal device and a callee terminal device, and content negotiated between the caller terminal device and the communication server.

S1802: The communication server performs caller-phone number holder consistency authentication (that is, verifies whether the current user of the caller terminal device is an account holder of the phone number corresponding to the caller terminal device), tamper-resistant check (for example, verifies, by using a public key of a digital human audit device or a public key of a digital human model production device, a digital signature of information such as a digital human model, the identity information, and the check feature that correspond to the caller user), and the like, and performs a next step, namely, S1803, after the foregoing verifications all succeed.

S1803: The communication server sends a message B to the callee terminal device, where the message B carries the following several parameters: the requirement of the caller user, the content negotiated between the caller terminal device and the callee terminal device, and content negotiated between the communication server and the callee terminal device.

S1804: The callee terminal device authenticates an identity of a callee user (for example, authenticates the user identity based on a check feature such as a fingerprint, a face, and a voiceprint, to ensure that identity information of the current user is consistent with user identity information bound to a callee digital human model); and the callee terminal device determines a negotiation result of the callee terminal device based on a requirement of the callee user, call additional service capability information of the callee terminal device, and the parameters carried in the message B.

S1805: The callee terminal device sends a message C to the communication server, where the message C carries the following parameter: the negotiation result of the callee terminal device.

S1806. The communication server performs callee-phone number holder consistency authentication (that is, verifies whether the current user of the callee terminal device is an account holder of the phone number corresponding to the callee terminal device), tamper-resistant check (for example, verifies, by using a public key of a digital human audit device or a public key of a digital human model production device, a digital signature of information such as a digital human model, the identity information, and the check feature corresponding to the callee user), and the like, and determines a negotiation result between the communication server and the caller terminal device after the foregoing verifications all succeed.

S1807: The communication server sends a message D to the caller terminal device, where the message D carries the following several parameters: the negotiation result of the callee terminal device and the negotiation result between the communication server and the caller terminal device.

S1808: The caller terminal device confirms a negotiation result of the caller terminal device based on the negotiation result of the callee terminal device and the negotiation result between the communication server and the caller terminal device.

S1809: The caller terminal device sends a message E to the communication server, where the message E carries the following parameter: the negotiation result of the caller terminal device.

S1810: The communication server sends a message F to the callee terminal device, where the message F carries the following parameter: the negotiation result of the caller terminal device.

For descriptions of the parameters involved in the foregoing steps, refer to Table 2. Details are not described herein again.

S1811: The callee terminal device sends an "OK" message to the communication server, and the communication server sends an "OK" message to the caller terminal device, where the "OK" message indicates that parameter interaction is completed.

S1812: The caller terminal device establishes a transmission channel with the communication server.

Step S1813: The callee terminal device establishes a transmission channel with the communication server.

Types of the data transmission channels that need to be established include audio_channel, video_channel, and digitalman _channel.

S1814: The caller terminal device captures a caller drive parameter, and rebuilds a caller digital human based on the caller drive parameter and caller audio.

S1815: The caller terminal device sends the rebuilt caller digital human to the communication server based on digitalman _channel, sends a caller video to the communication server based on video_channel, and sends caller audio to the communication server based on audio_channel.

S1816: The communication server renders the rebuilt caller digital human with a scene of the caller user to obtain a rendered picture, and encodes the rendered picture to obtain a caller rendered video.

S1817: The communication server sends the caller rendered video to the callee terminal device based on video_channel, and sends the caller audio to the callee terminal device based on audio_channel.

After receiving the caller rendered video, the callee terminal device may load the caller rendered video to a display screen for display, and may further play the caller audio.

After receiving the caller rendered video, the caller terminal device may also load the caller rendered video to a display screen for display, and may further play the caller audio. In this way, the caller user can watch a replay of call picture content of a local end.

S1818: The callee terminal device captures a callee drive parameter, and rebuilds a callee digital human based on the callee drive parameter and callee audio.

S1819: The callee terminal device sends the rebuilt callee digital human to the communication server based on digitalman _channel, sends a callee video to the communication server based on video_channel, and sends the callee audio to the communication server based on audio_channel.

S1820: The communication server renders the rebuilt callee digital human with a scene of the callee user to obtain a rendered picture, and encodes the rendered picture to obtain a callee rendered video.

S1821: The communication server sends the callee rendered video to the caller terminal device based on video_channel, and sends the callee audio to the caller terminal device based on audio_channel.

After receiving the callee rendered video, the caller terminal device may load the callee rendered video to the display screen for display, and may further play the callee audio.

After receiving the callee rendered video, the callee terminal device may also load the callee rendered video to the display screen for display, and may further play the callee audio, so that the callee user can watch a replay of call picture content of a local end.

In Example 10, a terminal device may express a call requirement of a user to the communication server and a peer terminal device, to implement a technical effect of providing call picture content of a local end for a peer end based on the user requirement and presenting, at the local end based on the user requirement, call picture content provided by the peer end, that is, both the caller user and the callee user make a call in a digital human image, and both the caller user and the callee user see that a digital human of the peer end is in a real scene of the peer end. In addition, by exchanging call additional service capability information, the communication server and the terminal device clarify division of work (that is, operations that need to be performed by the devices) between the terminal device and the communication server in a process of providing a digital human service for the user, so that a part of authentication (such as identity authentication), capturing, and rebuilding are implemented on the terminal device, the other part of authentication (such as tamper-resistant check and user-phone number holder consistency authentication) and rendering are implemented on the communication server, and a data transmission channel required by the digital human service is established based on the division of work. In addition, through authentication, secure and legal use of the digital human service are ensured in a call scenario.

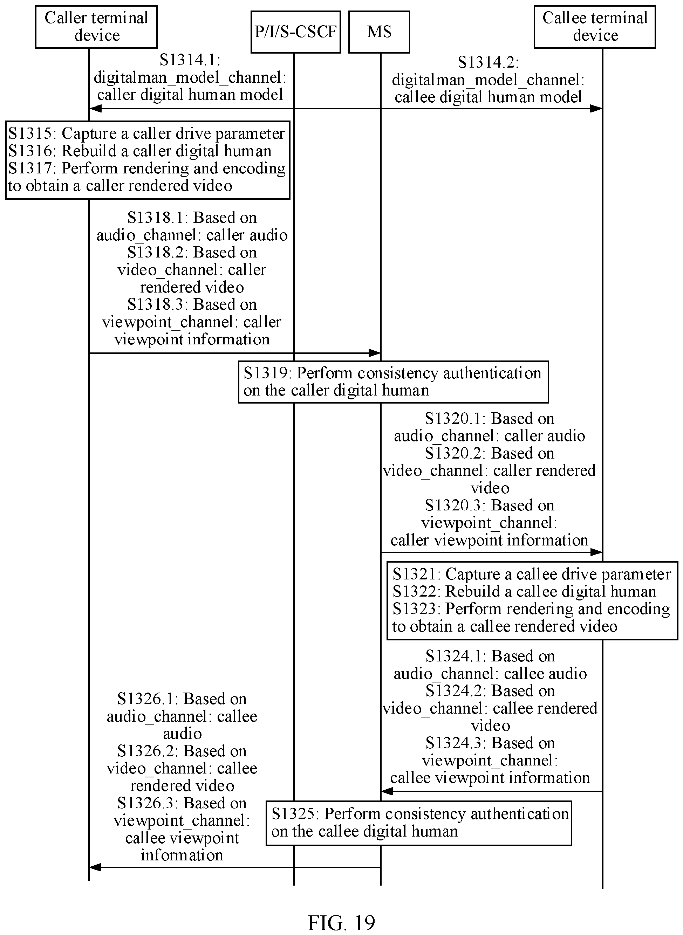

It may be understood that operations, of related functions (such as establishing a data transmission channel, capturing, rebuilding, rendering, and authentication), performed by the communication server in Example 1 to Example 10 may be completed by the CSCF network element in cooperation with the MS network element. The foregoing data transmission channel may be a data transmission channel between the MS network element and the caller/callee terminal device. For example, in the method shown in FIG. 13D in Example 5, specific details of the method steps performed by the communication server may be shown in FIG. 19.

It may be understood that the foregoing examples may be separately implemented, or may be implemented in combination with each other.

It may be understood that, to implement functions in the foregoing method embodiments, various devices in the foregoing method embodiments include corresponding hardware structures and/or software modules for performing various functions. A person skilled in the art should be easily aware that, in combination with the examples described in the embodiments disclosed in this application, units and method steps may be implemented by hardware or a combination of hardware and computer software in this application. Whether a function is performed by hardware or hardware driven by computer software depends on particular application scenarios and design constraints of the technical solutions.

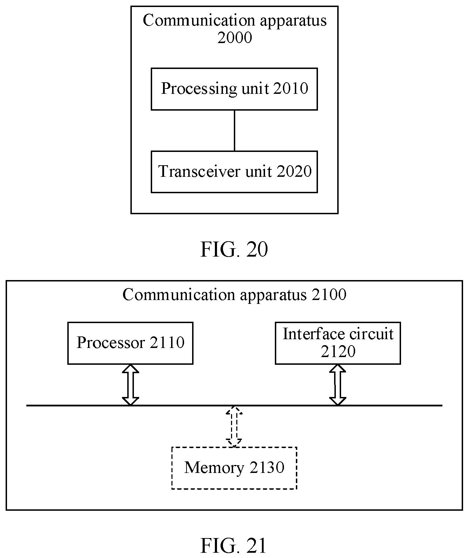

The following describes apparatuses provided in embodiments of this application with reference to FIG. 20 and FIG. 21.

FIG. 20 and FIG. 21 are each a possible schematic diagram of a structure of a communication apparatus according to an embodiment of this application. These communication apparatuses may be configured to implement a function of any terminal device or communication server in the foregoing method embodiments, and therefore can also implement beneficial effects of the foregoing method embodiments. In embodiments of this application, the communication apparatus may be one of the caller terminal device, the callee terminal device, or the communication server shown in FIG. 1A to FIG. 1G, or may be a module (for example, a chip) applied to the caller terminal device, the callee terminal device, or the communication server.

As shown in FIG. 20, a communication apparatus 2000 includes a processing unit 2010 and a transceiver unit 2020. The communication apparatus 2000 is configured to implement a function of the caller terminal device, the callee terminal device, or the communication server in the foregoing method embodiments.

As shown in FIG. 21, a communication apparatus 2100 includes a processor 2110 and an interface circuit 2120. The processor 2110 and the interface circuit 2120 are coupled to each other. It may be understood that the interface circuit 2120 may be a transceiver or an input/output interface. Optionally, the communication apparatus 2100 may further include a memory 2130, configured to store instructions executed by the processor 2110, store input data required by the processor 2110 to run the instructions, or store data generated after the processor 2110 runs the instructions.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

Based on a same technical concept, an embodiment of this application further provides a computer-readable storage medium. The storage medium stores a computer program or instructions. When the computer program or the instructions is or are executed by a communication apparatus, the method performed by any terminal device or communication server in the foregoing method embodiments is implemented.

Based on a same technical concept, an embodiment of this application further provides a computer program product, including instructions. When the instructions run on a computer, the method performed by any terminal device or communication server in the foregoing method embodiments is performed.

The method steps in embodiments of this application may be implemented in a hardware manner or may be implemented in a manner of executing a software instruction by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium or write information into the storage medium. Certainly, the storage medium may be a component of the processor. The processor and the storage medium may be located in an ASIC. In addition, the ASIC may be located in a network device or a terminal device. Certainly, the processor and the storage medium may exist in the network device or the terminal device as discrete components.

All or a part of the foregoing embodiments may be implemented by software, hardware, firmware, or any combination thereof. When software is used to implement the embodiments, all or a part of the embodiments may be implemented in the form of a computer program product. The computer program product includes one or more computer programs and instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer program or instructions may be stored in a computer-readable storage medium, or may be transmitted from one computer-readable storage medium to another computer-readable storage medium. For example, the computer program or instructions may be transmitted from one website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid state disk. The computer-readable storage medium may be a volatile or non-volatile storage medium, or may include two types of storage media: a volatile storage medium and a non-volatile storage medium.

In embodiments of this application, unless otherwise specified or a logical conflict occurs, terms and/or descriptions in different embodiments are consistent and may be referenced by each other, and technical features in different embodiments may be combined to form a new embodiment based on an internal logical relationship.

In this application, at least one means one or more, and a plurality of means two or more. "And/Or" is an association relationship for describing associated objects, and indicates that three relationships may exist. For example, A and/or B may indicate the following cases: Only A exists, both A and B exist, and only B exists, where A and B may be in a singular form or a plural form. In the text description of this application, the character "/" generally represents an "or" relationship between the associated objects. In the formula of this application, the character "/" represents a "division" relationship between the associated objects. "Including at least one of A, B, and C" may indicate: including A; including B; including C; including A and B; including A and C; including B and C; and including A, B, and C.

It may be understood that numerical symbols involved in embodiments of this application are differentiated merely for ease of description, but are not used to limit the scope of embodiments of this application. Sequence numbers of the foregoing processes do not mean execution sequences, and the execution sequences of the processes should be determined based on functions and internal logic of the processes.

A person skilled in the art can understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, and an optical memory) that include computer-usable program code.

This application is described with reference to the flowcharts and/or block diagrams of the method, the device (system), and the computer program product according to this application. It can be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of another programmable data processing device generate an apparatus for implementing a specific function in one or more procedures in the flowcharts and/or in one or more blocks in the block diagrams.

These computer program instructions may alternatively be stored in a computer-readable memory that can instruct the computer or another programmable data processing device to work in a specific manner, so that the instructions stored in the computer readable memory generate an artifact that includes an instruction apparatus. The instruction apparatus implements a specified function in one or more procedures in the flowcharts and/or in one or more blocks in the block diagrams.

These computer program instructions may alternatively be loaded onto a computer or another programmable data processing device, so that a series of operation steps are performed on the computer or another programmable device, thereby generating computer-implemented processing. Therefore, the instructions executed on the computer or another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A method for providing a call additional service, applied to a terminal device, wherein the terminal device makes a call with at least one peer terminal device using a service provided by a communication server; and the method comprises:
obtaining, by the terminal device, call additional service requirement information, wherein the call additional service requirement information indicates that a user corresponding to the terminal device requires to present a digital human image of the user in a call application interface of the at least one peer terminal device; and
enabling, by the terminal device based on the call additional service requirement information, the communication server to send digital human content of the user to the at least one peer terminal device, so that the at least one peer terminal device presents the digital human image of the user in the call application interface based on the digital human content of the user; or enabling, by the terminal device based on the call additional service requirement information, the at least one peer terminal device to generate digital human content of the user, so that the at least one peer terminal device presents the digital human image of the user in the call application interface based on the digital human content of the user.

2. The method according to claim 1, wherein the enabling, by the terminal device based on the call additional service requirement information, the communication server to send digital human content of the user to the at least one peer terminal device comprises:
generating, by the terminal device, the digital human content of the user based on the call additional service requirement information; and sending, by the terminal device, the digital human content of the user to the communication server, so that the communication server sends the digital human content of the user to the at least one peer terminal device; or
sending, by the terminal device, the call additional service requirement information to the communication server, so that the communication server generates the digital human content of the user and sends the digital human content of the user to the at least one peer terminal device.

3. The method according to claim 1, wherein the enabling, by the terminal device based on the call additional service requirement information, the at least one peer terminal device to generate digital human content of the user comprises:
sending, by the terminal device, the call additional service requirement information to the at least one peer terminal device, so that the at least one peer terminal device generates the digital human content of the user.

4. The method according to any one of claims 1 to 3, wherein the call additional service requirement information further indicates that the user corresponding to the terminal device requires to present a virtual scene picture of the user in the call application interface of the at least one peer terminal device; and the method further comprises:
enabling, by the terminal device based on the call additional service requirement information, the communication server to send virtual scene content of the user to the at least one peer terminal device, so that the at least one peer terminal device presents the virtual scene picture of the user in the call application interface based on the virtual scene content of the user; or enabling, by the terminal device based on the call additional service requirement information, the at least one peer terminal device to generate virtual scene content of the user, so that the at least one peer terminal device presents the virtual scene picture of the user in the call application interface based on the virtual scene content of the user.

5. The method according to claim 4, wherein the enabling, by the terminal device based on the call additional service requirement information, the communication server to send virtual scene content of the user to the at least one peer terminal device comprises:
generating, by the terminal device, the virtual scene content of the user based on the call additional service requirement information; and sending, by the terminal device, the virtual scene content of the user to the communication server, so that the communication server sends the virtual scene content of the user to the at least one peer terminal device; or
sending, by the terminal device, the call additional service requirement information to the communication server, so that the communication server generates the virtual scene content of the user and sends the virtual scene content of the user to the at least one peer terminal device.

6. The method according to claim 4, wherein the enabling, by the terminal device based on the call additional service requirement information, the at least one peer terminal device to generate virtual scene content of the user comprises:
sending, by the terminal device, the call additional service requirement information to the at least one peer terminal device.

7. A method for providing a call additional service, applied to a communication server, wherein the communication server is configured to provide a service for a call between a terminal device and at least one peer terminal device; and the method comprises:
receiving, by the communication server, call additional service requirement information from the terminal device, wherein the call additional service requirement information indicates that a user corresponding to the terminal device requires to present a digital human image of the user in a call application interface of the at least one peer terminal device; and
sending, by the communication server based on the call additional service requirement information, digital human content of the user generated by the communication server to the at least one peer terminal device, so that the at least one peer terminal device presents the digital human image of the user in the call application interface based on the digital human content of the user; or sending, by the communication server, the call additional service requirement information to the at least one peer terminal device, so that the at least one peer terminal device generates digital human content of the user and presents the digital human image of the user in the call application interface based on the digital human content of the user.

8. The method according to claim 7, wherein the call additional service requirement information further indicates that the user corresponding to the terminal device requires to present a virtual scene picture of the user in the call application interface of the at least one peer terminal device; and the method further comprises:
sending, by the communication server based on the call additional service requirement information, virtual scene content of the user generated by the communication server to the at least one peer terminal device, so that the at least one peer terminal device presents the virtual scene picture of the user in the call application interface based on the virtual scene content of the user; or sending, by the communication server, the call additional service requirement information to the at least one peer terminal device, so that the at least one peer terminal device generates virtual scene content of the user and presents the virtual scene picture of the user in the call application interface based on the virtual scene content of the user.

9. A method for providing a call additional service, applied to a terminal device, wherein the terminal device makes a call with at least one peer terminal device using a service provided by a communication server; and the method comprises:
sending, by the terminal device, first call additional service capability information to the communication server, wherein the first call additional service capability information indicates a digital human service capability possessed by the terminal device;
receiving, by the terminal device, indication information sent by the communication server, wherein the indication information indicates a digital human processing operation to be performed by the terminal device, and/or the indication information comprises second call additional service capability information and third call additional service capability information, the second call additional service capability information indicates a digital human service capability possessed by the communication server, and the third call additional service capability information indicates a digital human service capability possessed by the at least one peer terminal device; and
performing, by the terminal device, at least one digital human processing operation based on the indication information or skipping performing, by the terminal device, the digital human processing operation based on the indication information.

10. The method according to claim 9, wherein the digital human processing operation comprises one or more of the following operations: a capture operation, a rebuilding operation, and a rendering operation;
the capture operation comprises: obtaining a drive parameter of a user corresponding to the terminal device, wherein the drive parameter comprises at least one of the following information of the user corresponding to the terminal device: lip shape, expression, action, and depth;
the rebuilding operation comprises: generating a digital human image sequence based on the drive parameter of the user corresponding to the terminal device and a digital human model of the user corresponding to the terminal device, wherein the digital human image sequence comprises a plurality of frames of images obtained by driving the digital human model; and
the rendering operation comprises: generating, based on the digital human image sequence and a scene image sequence, call picture content of the user corresponding to the terminal device.

11. The method according to claim 10, wherein the indication information indicates the second call additional service capability information and/or the third call additional service capability information; and
the performing, by the terminal device, at least one digital human processing operation based on the indication information comprises:
determining, by the terminal device, at least one of the capture operation, the rebuilding operation, and the rendering operation based on at least one of the first call additional service capability information, the second call additional service capability information, and the third call additional service capability information; and
performing, by the terminal device, the at least one operation.

12. The method according to claim 10 or 11, wherein the first call additional service capability information comprises one or more of the following:
information indicating whether the terminal device stores the digital human model of the user corresponding to the terminal device;
information indicating whether the terminal device stores a virtual scene of the user corresponding to the terminal device;
information indicating whether the terminal device can perform the rebuilding operation;
information indicating a drive parameter that can be provided by the terminal device;
information indicating whether the terminal device can perform the rendering operation;
information indicating whether the terminal device needs the communication server to backhaul the call picture content of the user; and
information indicating whether the terminal device provides viewpoint information.

13. The method according to claim 10 or 11, wherein the second call additional service capability information comprises one or more of the following:
information indicating whether the communication server stores the digital human model of the user corresponding to the terminal device;
information indicating whether the communication server stores a virtual scene of the user corresponding to the terminal device;
information indicating whether the communication server can perform the rebuilding operation;
information indicating a drive parameter that can be received by the communication server;
information indicating a drive parameter that can be extracted by the communication server;
information indicating whether the communication server can perform the rendering operation; and
information indicating whether the communication server can backhaul the call picture content of the user to the terminal device.

14. The method according to claim 10 or 11, wherein the third call additional service capability information comprises one or more of the following:
information indicating whether the at least one peer terminal device can perform the rendering operation; and
information indicating whether the at least one peer terminal device provides viewpoint information.

15. The method according to any one of claims 10 to 14, wherein the terminal device performs the rebuilding operation; and the method further comprises:
establishing, by the terminal device, a first channel with the communication server, wherein the first channel is used to transmit the digital human model of the user corresponding to the terminal device.

16. The method according to any one of claims 10 to 14, wherein the terminal device performs the rebuilding operation and the communication server performs the rendering operation; and the method further comprises:
establishing, by the terminal device, a second channel with the communication server, wherein the second channel is used to transmit the digital human image sequence of the user corresponding to the terminal device.

17. The method according to any one of claims 10 to 14, wherein the terminal device performs the capture operation and the communication server performs the rebuilding operation; and the method further comprises:
establishing, by the terminal device, a third channel with the communication server, wherein the third channel is used to transmit the drive parameter of the user corresponding to the terminal device.

18. The method according to any one of claims 10 to 14, wherein the communication server performs the rendering operation; the first call additional service capability information comprises the information indicating that the terminal device stores a virtual scene of the user corresponding to the terminal device, and the call picture content of the user corresponding to the terminal device comprises virtual scene picture content of the user; and the method further comprises:
establishing, by the terminal device, a fourth channel with the communication server, wherein the fourth channel is used to transmit the virtual scene of the user corresponding to the terminal device.

19. The method according to any one of claims 10 to 14, wherein the first call additional service capability information comprises the information indicating that the terminal device needs the communication server to backhaul the call picture content of the user; and the method further comprises:
establishing, by the terminal device, a fifth channel with the communication server, wherein the fifth channel is used to transmit the call picture content of the user corresponding to the terminal device.

20. The method according to any one of claims 10 to 14, wherein the method further comprises:
establishing, by the terminal device, a sixth channel with the communication server, wherein the sixth channel is used to transmit viewpoint information of the user corresponding to the terminal device, and the first call additional service capability information comprises the information indicating whether the terminal device provides viewpoint information; and/or
establishing, by the terminal device, a seventh channel or an eighth channel with the communication server, wherein the seventh channel is used to transmit audio of the user corresponding to the terminal device, and the eighth channel is used to transmit a video of the user corresponding to the terminal device.

21. The method according to any one of claims 10 to 20, wherein the terminal device performs the capture operation; and the obtaining a drive parameter of a user corresponding to the terminal device comprises:
collecting, by the terminal device, the drive parameter of the user corresponding to the terminal device by using a sensor; and/or
determining, by the terminal device, the drive parameter of the user corresponding to the terminal device based on the video and/or audio of the user corresponding to the terminal device.

22. A method for providing a call additional service, applied to a communication server, wherein the communication server is configured to provide a service for a call between a terminal device and at least one peer terminal device; and the method comprises:
receiving, by the communication server, first call additional service capability information from the terminal device, wherein the first call additional service capability information indicates a digital human service capability possessed by the terminal device; and
sending, by the communication server, indication information to the terminal device, wherein the indication information indicates a digital human processing operation to be performed by the terminal device, and/or the indication information comprises second call additional service capability information and third call additional service capability information, the second call additional service capability information indicates a digital human service capability possessed by the communication server, and the third call additional service capability information indicates a digital human service capability possessed by the at least one peer terminal device.

23. The method according to claim 22, wherein the digital human processing operation comprises one or more of the following operations: a capture operation, a rebuilding operation, and a rendering operation;
the capture operation comprises: obtaining a drive parameter of a user corresponding to the terminal device, wherein the drive parameter comprises at least one of the following information of the user corresponding to the terminal device: lip shape, expression, action, and depth;
the rebuilding operation comprises: generating a digital human image sequence based on the drive parameter of the user corresponding to the terminal device and a digital human model of the user corresponding to the terminal device, wherein the digital human image sequence comprises a plurality of frames of images obtained by driving the digital human model; and
the rendering operation comprises: generating, based on the digital human image sequence and a scene image sequence, call picture content of the user corresponding to the terminal device.

24. The method according to claim 23, wherein the method further comprises:
performing, by the communication server, at least one of the capture operation, the rebuilding operation, and the rendering operation based on at least one of the first call additional service capability information, the second call additional service capability information, and the third call additional service capability information.

25. The method according to claim 23 or 24, wherein the method further comprises:
receiving, by the communication server, the third call additional service capability information from the at least one peer terminal device.

26. The method according to any one of claims 23 to 25, wherein the first call additional service capability information comprises one or more of the following:
information indicating whether the terminal device stores the digital human model of the user corresponding to the terminal device;
information indicating whether the terminal device stores a virtual scene of the user corresponding to the terminal device;
information indicating whether the terminal device can perform the rebuilding operation;
information indicating a drive parameter that can be provided by the terminal device;
information indicating whether the terminal device can perform the rendering operation;
information indicating whether the terminal device needs the communication server to backhaul the call picture content of the user; and
information indicating whether the terminal device provides viewpoint information.

27. The method according to any one of claims 23 to 25, wherein the second call additional service capability information comprises one or more of the following:
information indicating whether the communication server stores the digital human model of the user corresponding to the terminal device;
information indicating whether the communication server stores a virtual scene of the user corresponding to the terminal device;
information indicating whether the communication server can perform the rebuilding operation;
information indicating a drive parameter that can be received by the communication server;
information indicating a drive parameter that can be extracted by the communication server;
information indicating whether the communication server can perform the rendering operation; and
information indicating whether the communication server can backhaul the call picture content of the user to the terminal device.

28. The method according to any one of claims 23 to 25, wherein the third call additional service capability information comprises one or more of the following:
information indicating whether the at least one peer terminal device can perform the rendering operation; and
information indicating whether the at least one peer terminal device provides viewpoint information.

29. The method according to any one of claims 23 to 28, wherein the terminal device performs the rebuilding operation; and the method further comprises:
establishing, by the communication server, a first channel with the terminal device, wherein the first channel is used to transmit the digital human model of the user corresponding to the terminal device.

30. The method according to any one of claims 23 to 28, wherein the terminal device performs the rebuilding operation and the communication server performs the rendering operation; and the method further comprises:
establishing, by the communication server, a second channel with the terminal device, wherein the second channel is used to transmit the digital human image sequence of the user corresponding to the terminal device.

31. The method according to any one of claims 23 to 28, wherein the terminal device performs the capture operation and the communication server performs the rebuilding operation; and the method further comprises:
establishing, by the communication server, a third channel with the terminal device, wherein the third channel is used to transmit the drive parameter of the user corresponding to the terminal device.

32. The method according to any one of claims 23 to 28, wherein the communication server performs the rendering operation; the first call additional service capability information comprises the information indicating that the terminal device stores a virtual scene of the user corresponding to the terminal device, and the call picture content of the user corresponding to the terminal device comprises virtual scene picture content of the user; and the method further comprises:
establishing, by the terminal device, a fourth channel with the communication server, wherein the fourth channel is used to transmit the virtual scene of the user corresponding to the terminal device.

33. The method according to any one of claims 23 to 28, wherein the first call additional service capability information comprises the information indicating that the terminal device needs the communication server to backhaul the call picture content of the user; and the method further comprises:
establishing, by the communication server, a fifth channel with the terminal device, wherein the fifth channel is used to transmit the call picture content of the user corresponding to the terminal device.

34. The method according to any one of claims 23 to 28, wherein the method further comprises:
establishing, by the communication server, a sixth channel with the terminal device, wherein the sixth channel is used to transmit viewpoint information of the user corresponding to the terminal device, and the first call additional service capability information comprises the information indicating whether the terminal device provides viewpoint information; and/or
establishing, by the communication server, a seventh channel or an eighth channel with the terminal device, wherein the seventh channel is used to transmit audio of the user corresponding to the terminal device, and the eighth channel is used to transmit a video of the user corresponding to the terminal device.

35. The method according to any one of claims 23 to 34, wherein the communication server performs the capture operation; and the obtaining a drive parameter of a user corresponding to the terminal device comprises:
receiving, by the communication server, the drive parameter of the user corresponding to the terminal device from the terminal device; and/or
receiving, by the communication server, the video and/or audio of the user corresponding to the terminal device from the terminal device, and determining the drive parameter of the user corresponding to the terminal device based on the video and/or audio.

36. A method for providing a call additional service, applied to a communication server, wherein the communication server is configured to provide a service for a call between a terminal device and at least one peer terminal device; and the method comprises:
receiving, by the communication server, a first request from the terminal device, wherein the first request is used to request a digital human model;
determining, by the communication server, whether a user corresponding to the terminal device is a legal user of the digital human model, wherein the user corresponding to the terminal device is a user that operates the terminal device; and
sending, by the communication server after determining that the user corresponding to the terminal device is the legal user of the digital human model, the digital human model to the terminal device in response to the first request, wherein the digital human model is used by the user corresponding to the terminal device to make a call in a digital human image.

37. The method according to claim 36, wherein the determining, by the communication server, whether a user corresponding to the terminal device is a legal user of the digital human model comprises:
obtaining, by the communication server, a feature of the user corresponding to the terminal device and a check feature associated with the digital human model, wherein the check feature is a feature of the legal user of the digital human model; and determining, by the communication server based on the feature of the user corresponding to the terminal device and the check feature, whether the user corresponding to the terminal device is the legal user of the digital human model; or
receiving, by the communication server, a verification result that carries a first digital signature from the terminal device; and verifying, by the communication server, the first digital signature, and determining, based on the verification result after the first digital signature is successfully verified, whether the user corresponding to the terminal device is the legal user of the digital human model.

38. The method according to claim 37, wherein the feature of the user corresponding to the terminal device comprises one or more of the following: a face, a fingerprint, a voiceprint, or an iris of the user corresponding to the terminal device; and
the check feature associated with the digital human model comprises one or more of the following: a face, a fingerprint, a voiceprint, or an iris of the legal user of the digital human model.

39. The method according to claim 36, wherein the method further comprises:
obtaining, by the communication server, a feature of a character image in digital human content, wherein the digital human content comprises a plurality of frames of images of the digital human model;
determining, by the communication server based on the feature of the character image in the digital human content and a check feature associated with the digital human model, whether the character image in the digital human content matches the digital human model; and
sending, by the communication server, the digital human content to the at least one peer terminal device after determining that the character image in the digital human content matches the digital human model.

40. The method according to claim 39, wherein the feature of the character image in the digital human content comprises a face and/or a voiceprint of the character image, and the check feature associated with the digital human model comprises a face and/or a voiceprint of the legal user of the digital human model.

41. The method according to any one of claims 36 to 40, wherein the method further comprises:
receiving, by the communication server, the digital human model that carries a second digital signature, the check feature, and identity information of the legal user of the digital human model, wherein the second digital signature is a digital signature of a digital human audit device;
verifying, by the communication server, the second digital signature by using a public key of the digital human audit device; and
binding, by the communication server, the digital human model and the check feature to registration information of the legal user on the communication server based on the identity information of the legal user after verifying the second digital signature.

42. The method according to claim 41, wherein the digital human model further carries a third digital signature, and the third digital signature is a digital signature of a digital human model production device; and
the method further comprises:
verifying, by the communication server, the third digital signature by using a public key of the digital human model production device before storing the digital human model and the check feature; and
binding, by the communication server, the digital human model and the check feature to the registration information of the legal user on the communication server based on the identity information of the legal user after verifying the second digital signature and the third digital signature.

43. A method for providing a call additional service, applied to a digital human model production device, wherein the method comprises:
encrypting, by the digital human model production device by using a first public key of a digital human audit device, a digital human model, a check feature, and identity information of a user corresponding to a terminal device, and sending the encrypted digital human model, check feature, and identity information of the user corresponding to the terminal device to the digital human audit device;
receiving, by the digital human model production device, a second digital signature, the digital human model, the check feature, and the identity information from the digital human audit device; and
sending, by the digital human model production device, the second digital signature, the digital human model, the check feature, and the identity information to a communication server, wherein the digital human model is used by the user corresponding to the terminal device to make a call in a digital human image.

44. The method according to claim 43, wherein the method further comprises:
adding, by the digital human model production device, a third digital signature in the digital human model, the check feature, and the identity information by using a private key of the digital human model production device; and
sending, by the digital human model production device, the second digital signature, the third digital signature, the digital human model, the check feature, and the identity information to the communication server.

45. A method for providing a call additional service, applied to a digital human audit device, wherein the method comprises:
receiving, by the digital human audit device, an encrypted digital human model, check feature, and identity information of a user corresponding to a terminal device from a digital human model production device;
decrypting, by the digital human audit device by using a first private key of the digital human audit device, the encrypted digital human model, check feature, and identity information of the user corresponding to the terminal device; auditing legality of the digital human model of the user corresponding to the terminal device; and adding a second digital signature in the digital human model, the check feature, and the identity information by using a second private key of the digital human audit device after the audit succeeds; and
sending, by the digital human audit device, the second digital signature, the digital human model, the check feature, and the identity information to the digital human model production device, wherein the digital human model is used by the user corresponding to the terminal device to make a call in a digital human image.

46. A communication apparatus, comprising a processor and a memory, wherein the processor is coupled to the memory;
the memory is configured to store program instructions; and
the processor is configured to read the program instructions stored in the memory, to implement the method according to any one of claims 1 to 6, 7 and 8, 9 to 21, 22 to 35, 36 to 42, 43 and 44, or 45.

47. A call system, comprising a first terminal device, a second terminal device, and a communication server that provides a service for a call between the first terminal device and the second terminal device, wherein
the first terminal device is configured to perform the method according to any one of claims 1 to 6;
the communication server is configured to perform the method according to claim 7 or claim 8; and
the second terminal device is configured to present, in a call application interface based on digital human content of a user corresponding to the first terminal device, a digital human image of the user corresponding to the first terminal device.

48. A call system, comprising a first terminal device, a second terminal device, and a communication server that provides a service for a call between the first terminal device and the second terminal device, wherein
the first terminal device is configured to perform the method according to any one of claims 9 to 21;
the communication server is configured to perform the method according to any one of claims 22 to 35; and
the second terminal device is configured to present, in a call application interface based on digital human content of a user corresponding to the first terminal device, a digital human image of the user corresponding to the first terminal device.

49. A call system, comprising a communication server, a digital human model production device, and a digital human model production device, wherein
the communication server is configured to perform the method according to any one of claims 36 to 42;
the digital human model production device is configured to perform the method according to claim 43 or claim 44; and
the digital human model production device is configured to perform the method according to claim 45.

50. A computer-readable storage medium, wherein the storage medium stores a computer program or instructions, and when the computer program or the instructions is or are executed by a communication apparatus, the method according to any one of claims 1 to 6, 7 and 8, 9 to 21, 22 to 35, 36 to 42, 43 and 44, or 45 is implemented.

51. A computer program product, comprising instructions, wherein when the instructions run on a computer, the method according to any one of claims 1 to 6, 7 and 8, 9 to 21, 22 to 35, 36 to 42, 43 and 44, or 45 is performed.
